# NEUE EUROPÄISCHE PATENTSCHRIFT

(11) **EP 3 147 059 B2**
(45) Veröffentlichungstag und Bekanntmachung des Hinweises auf die Entscheidung über den Einspruch: **07.10.2026**
(45) Hinweis auf die Patenterteilung: 05.08.2020
(21) Anmeldenummer: 16183528.5
(22) Anmeldetag: 10.08.2016
(51) Int. Cl.: B23F 5/04, B23F 19/00, B23F 23/12, B24B 51/00

(54) **VERFAHREN ZUR HERSTELLUNG EINES WERKSTÜCKES MIT MODIFIZIERTER VERZAHNUNGSGEOMETRIE**
METHOD FOR THE PRODUCTION OF A WORKPIECE WITH MODIFIED TOOTHING GEOMETRY
PROCEDE DE FABRICATION D'UNE PIECE USINEE PRESENTANT UNE GEOMETRIE DE DENTURE MODIFIEE

(30) Priorität: 23.09.2015 DE 102015012308
(43) Veröffentlichungstag der Anmeldung: 29.03.2017
(73) Patentinhaber: Liebherr-Verzahntechnik GmbH, 87437 Kempten (DE)
(72) Erfinder: Würfel, Robert, 87499 Wildpoldsried (DE); Geiser, Dr. Hansjörg, 87487 Wiggensbach (DE)
(74) Vertreter: Lorenz Seidler Gossel Part. mbB

(56) Entgegenhaltungen:
- DE-A1- 10 131 060
- DE-A1- 102012 015 846
- DE-A1- 102013 015 232
- DE-U1- 202005 014 619

## Beschreibung

Die vorliegende Erfindung betrifft ein Verfahren zur Herstellung eines Werkstückes mit modifizierter Verzahnungsgeometrie durch ein Wälzverfahren, wobei das Werkstück in mindestens einem Bearbeitungshub mittels eines Werkzeuges mit modifizierter Verzahnungsgeometrie wälzbearbeitet wird, wobei das Werkzeug eine topologische Modifikation aufweist. Insbesondere kann es sich bei den Wälzverfahren dabei um ein Wälzschleifverfahren handeln. Weiterhin kann es sich bei dem Werkzeug insbesondere um eine Schleifschnecke handeln.

Topologisch modifizierte Werkzeuge wurden bspw. in der DE 102012015846A1, EP 1995010A1, WO 2010/060596A1, DE 19624842A1, DE 19706867, DE 102005030846A1 und DE 102006061759A1 dazu eingesetzt, um im Wege eines Diagonalwälzverfahrens eine entsprechende topologische Modifikation auf dem Werkstück zu erzeugen. Hierfür wurde das Diagonalverhältnis so gewählt, dass der Kontaktpfad mit dem Werkstück während eines Bearbeitungshubs einen definierten Bereich des Werkzeuges, in welchem die topologische Modifikation aufgebracht ist, überstreicht, so dass die topologische Modifikation auf das Werkstück aufgebracht wird.

Profilmodifikationen wurden gemäß dem Stand der Technik dagegen üblicherweise dadurch realisiert, dass das Werkzeug mit einem Abrichter abgerichtet wird, welcher die gewünschte Modifikation der Profilform vorhält und beim Abrichten auf das Werkzeug überträgt. Beim Wälzbearbeiten wird die Modifikation dann auf das Werkstück übertragen.

Dies hat jedoch den Nachteil, dass für jede gewünschte Profilmodifikation ein entsprechender Abrichter hergestellt werden muss. Der hiermit verbundene Kosten- und Zeitaufwand lohnt dabei nicht in jeder Situation.

Alternativ kann die gewünschte Profilform auf dem Werkzeug auch durch Zeilenabrichten hergestellt werden. Das Zeilenabrichten ist jedoch sehr zeitintensiv, und führt in vielen Fällen zudem zu einer unerwünschten Oberflächenrauigkeit.

Aufgabe der vorliegenden Erfindung ist es daher, ein verbessertes Verfahren zur Herstellung eines Werkstückes mit modifizierter Verzahnungsgeometrie zur Verfügung zu stellen.

Diese Aufgabe wird erfindungsgemäß durch die Verfahren gemäß den unabhängigen Ansprüchen gelöst.

Vorteilhafte Ausgestaltungen der vorliegenden Erfindung sind Gegenstand der Unteransprüche.

Die vorliegende Erfindung umfasst ein Verfahren zur Herstellung eines Werkstückes mit modifizierter Verzahnungsgeometrie durch ein Wälzverfahren, wobei das Werkstück in mindestens einem Bearbeitungshub mittels eines Werkzeuges mit modifizierter Verzahnungsgeometrie wälzbearbeitet wird, wobei das Werkzeug eine topologische Modifikation aufweist. Das erfindungsgemäße Verfahren ist dadurch gekennzeichnet, dass der Kontaktpfad mit dem Werkstück auf dem Werkzeug während des Bearbeitungshubs nicht verschoben wird.

Der Erfinder der vorliegenden Erfindung hat erkannt, dass topologisch modifizierte Werkzeuge auch dazu eingesetzt werden können, um eine Profilmodifikation des durch das Wälzverfahren bearbeiteten Werkstückes zu erzeugen. Hierdurch wird ein kostengünstig und schnell umsetzbares Verfahren an die Hand gegeben, durch welches auch ohne einen entsprechend modifizierten Abrichter und ohne den Einsatz eines Zeilenabrichtprozesses Profilmodifikationen auf einem Werkstück erzeugt werden können. Dies wird dadurch erreicht, dass anders als bei dem aus dem Stand der Technik bekannten Einsatz topologisch modifizierter Werkzeuge der Kontaktpfad nicht mehr über einen definierten Bereich des Werkzeuges verschoben wird, sondern über den Bearbeitungshub unverändert bleibt. Damit wird die gesamte Breite des Werkstücks mit dem gleichen Kontaktpfad des Werkzeuges bearbeitet, so dass sich auf dem Werkstück trotz des topologisch modifizierten Werkzeuges keine topologische Modifikation, sondern eine Profilmodifikation ergibt.

Die vorliegende Erfindung wird bevorzugt zur Herstellung von Zahnrädern mit Stirnradverzahnung eingesetzt. Weiterhin können die Werkstücke sowohl eine zylindrische, als auch eine konische Grundform aufweisen.

In einer ersten Ausführungsform der vorliegenden Erfindung wird das erfindungsgemäße Verfahren zur Bearbeitung eines zylindrischen Werkstückes eingesetzt. In diesem Fall erfolgt die Bearbeitung des Werkstücks bevorzugt durch ein Axialwälzverfahren, d.h. ohne ein Vershiften des Werkzeuges entlang seiner Rotationsachse während des Bearbeitungshubs. Durch das Axialwälzverfahren wird sicher gestellt, dass sich der Kontaktpfad auf dem Werkzeug während des Bearbeitungshubs nicht verschiebt.

In einer zweiten Ausführungsform der vorliegenden Erfindung wird das erfindungsgemäße Verfahren zur Bearbeitung eines konischen Werkstückes eingesetzt. In diesem Fall erfolgt die Bearbeitung des Werkstücks bevorzugt durch ein Diagonalwälzverfahren, wobei das Diagonalverhältnis so gewählt wird, dass sich der Kontaktpfad auf dem Werkzeug während des Bearbeitungshubs nicht verschiebt. Anders als bei der Bearbeitung eines zylindrischen Werkstücks würde ein Axialwälzverfahren bei der Bearbeitung eines konischen Werkstücks zu einer Verschiebung des Kontaktpfades auf dem Werkzeug führen. Die Bearbeitung konischer Werkstücke gemäß dem erfindungsgemäßen Verfahren erfordert daher den Einsatz eines Diagonalwälzverfahrens, um durch ein entsprechendes Vershiften des Werkzeugs entlang seiner Rotationsachse während des Bearbeitungshubs sicherzustellen, dass sich der Kontaktpfad nicht verschiebt.

In einer ersten Variante wird dabei ein Werkzeug mit einer zylindrischen Grundform eingesetzt. In diesem Fall erfolgt die Bearbeitung bevorzugt einflankig. Dies ist dadurch bedingt, dass im allgemeinen für die linke und rechte Flanke unterschiedliche Diagonalverhältnisse notwendig sind, damit sich der Kontaktpfad nicht verschiebt. Ein zweiflankiges Bearbeiten des Werkstücks ist daher im allgemeinen nicht mehr möglich.

In einer zweiten Variante wird dagegen ein Werkzeug mit einer konischen Grundform eingesetzt. Durch den Einsatz eines konischen Werkzeugs steht mit dem Konuswinkel ein weiterer Freiheitsgrad zur Verfügung, welcher so gewählt werden kann, dass ein zweiflankiges Bearbeiten gemäß dem erfindungsgemäßen Verfahren möglich wird. Beim Einsatz eines Werkzeugs mit konischer Grundform erfolgt die Bearbeitung des Werkstücks daher bevorzugt zweiflankig, wobei weiter bevorzugt der Konuswinkel des Werkzeuges und das Diagonalverhältnis so gewählt werden, dass sich beim zweiflankigen Bearbeiten der Kontaktpfad auf rechter und linker Flanke nicht verschiebt.

Im folgenden werden bevorzugte Ausgestaltungen der vorliegenden Erfindung beschrieben, welche sowohl zur Bearbeitung zylindrischer, als auch zur Bearbeitung konischer Werkstücks eingesetzt werden können.

Eine topologische Modifikation des Werkzeuges bedeutet, dass das Werkzeug eine Kombination aus einer Profilmodifikation und einer Flankenlinienmodifikation aufweist.

Gemäß einer ersten, optionalen Ausführungsform der vorliegenden Erfindung kann die topologische Modifikation der Oberflächengeometrie des Werkzeuges im Wälzbild zumindest lokal in einer ersten Richtung des Werkzeuges einen konstanten Wert aufweisen und in einer zweiten Richtung des Werkzeuges, welche senkrecht zur ersten Richtung verläuft, durch eine Funktion F_{Ft1} gegeben sein. Die topologische Modifikation ist dabei bevorzugt auch global zumindest in einem Bereich des Werkzeuges in dieser Weise gegeben. Solche topologischen Modifikationen können relativ einfach auf dem Werkzeug aufgebracht werden, und erlauben dennoch die Erzeugung im Wesentlichen frei vorgebbarer Profilmodifikationen des Werkstückes.

Gemäß Anspruch 3 der vorliegenden Erfindung ist die topologische Modifikation der Oberflächengeometrie des Werkzeuges im Wälzbild in einer ersten Richtung des Werkzeuges zumindest näherungsweise als eine lineare Funktion beschreibbar, deren Koeffizienten in Werkzeugbreitenrichtung durch Koeffizientenfunktionen F_{FtC,1} für den konstanten Anteil und F_{FtL,1} für den linearen Anteil gegeben sind. Solche Modifikationen sind ebenfalls noch einfach herstellbar, und können den nutzbaren Bereich des Werkzeuges erweitern.

Bevorzugt entspricht sowohl bei der ersten, als auch bei der zweiten Alternative die erste Richtung der Modifikation des Werkzeuges der Richtung der Eingriffslinie des Abrichters beim Abrichten. Dies erlaubt eine besonders einfache Herstellung der Modifikation durch eine Variation der Position zwischen Abrichter und Werkzeug während des Abrichtprozesses.

Wie bereits oben erwähnt, ermöglicht das erfindungsgemäße Verfahren die Herstellung von Profilmodifikationen. Gemäß Anspruch 1 wird daher im Rahmen der vorliegenden Erfindung eine gewünschte Profilmodifikation des Werkstückes vorgegeben und durch die Wälzbearbeitung auf dem Werkstück erzeugt.

Gemäß Anspruch 1 sind die gewünschte Profilmodifikation und / oder Eigenschaften der gewünschten Profilmodifikation innerhalb bestimmter Randbedingungen frei vorgebbar. Alternativ oder zusätzlich kann eine der folgenden Eigenschaften der Profilmodifikation vorgebbar sein: Balligkeit, Profilwinkelabweichung, Kopfrücknahme und / oder Fußrücknahme. Bevorzugt sind bezüglich mindestens einer der oben genannten Eigenschaften folgende Daten vorgebbar: Größe der Balligkeit, Größe der Profilwinkelabweichung, Betrag und Lage der Kopfrücknahme, Betrag und Lage der Fußrücknahme.

Bevorzugt sind mehrere der oben genannten Eigenschaften und / oder Daten vorgebbar, weiterhin bevorzugt alle der oben genannten Eigenschaften und / oder Daten.

Weiterhin bevorzugt kann mindestens eine Eingabemaske mit Eingabefeldern für mindestens eine der oben genannten Eigenschaften und / oder deren Daten vorgesehen sein. Bevorzugt weist die Eingabemaske dabei Eingabefelder für mehrere und weiter bevorzugt für alle der oben genannten Eigenschaften und / oder deren Daten auf.

Alternativ oder zusätzlich kann die gewünschte Profilmodifikation auch als stetige Modifikation und / oder an einer Mehrzahl von Wälzwinkeln frei vorgebbar sein. Ist die Modifikation an einer Mehrzahl von Wälzwinkeln frei vorgebbar, so wird bevorzugt im Rahmen des erfindungsgemäßen Verfahrens der Verlauf der Modifikation zwischen diesen Wälzwinkeln interpoliert.

Gemäß Anspruch 1 wird die topologische Modifikation des Werkzeuges dadurch erzeugt, dass die Position des Abrichters zum Werkzeug beim Abrichten in Abhängigkeit von dem Werkzeugdrehwinkel und / oder der Werkzeugbreitenposition variiert wird. Hierdurch ist es möglich, beim Abrichten eine topologische Modifikation zu erzeugen, d. h. eine Modifikation, deren Wert vom Werkzeugdrehwinkel und / oder der Werkzeugbreitenposition abhängt. Bevorzugt wird dabei eine topologische Modifikation erzeugt, wie sie bereits oben näher dargestellt wurde.

Erfindungsgemäß wird das Wälzverfahren, mit welchem das Werkstück bearbeitet wird, mit einem definierten Kontaktpfad auf dem Werkzeug durchgeführt, wobei die topologische Modifikation und der Kontaktpfad so gewählt werden, dass die topologische Modifikation auf dem Werkzeug entlang des Kontaktpfades eine solche Form aufweist, dass sie auf dem Werkstück eine gewünschte Profilmodifikation erzeugt.

Insbesondere kann die topologische Modifikation in Abhängigkeit von dem Kontaktpfad oder der Kontaktpfad in Abhängigkeit von der topologischen Modifikation so gewählt werden, dass die topologische Modifikation auf dem Werkzeug entlang des Kontaktpfades eine solche Form aufweist, dass sie auf dem Werkstück eine gewünschte Profilmodifikation erzeugt.

Die Bearbeitung mit einem definierten Kontaktpfad umfasst bevorzugt die Bearbeitung mit einer definierten initialen Shift-Position des Werkzeuges zu Beginn eines Bearbeitungshubs.

Bei Bearbeitung eines zylindrischen Werkstücks wird diese initiale Shift-Position bevorzugt über den gesamten Bearbeitungshub beibehalten.

Gemäß Anspruch 2 erfolgt eine Bearbeitung eines konischen Werkstücks, wobei das Werkzeug (bevorzugt ausgehend von der initialen Shift-Position) mit einem solchen Diagonalverhältnis über den Bearbeitungshub vershiftet wird, dass sich der Kontaktpfad nicht verschiebt

Der vorliegenden Erfindung liegt die Erkenntnis zugrunde, dass der Kontaktpfad, welchen der Kontaktpunkt beim Wälzbearbeiten auf dem Werkzeug zurücklegt, üblicherweise nicht die gleiche Richtung aufweist wie die Eingriffslinie des Abrichters beim Abrichten des Werkzeuges. Daher kann für einen definierten Kontaktpfad immer eine topologische Modifikation gemäß den oben näher definierten Form gefunden werden, welche entlang dieses Kontaktpfades die gewünschte Modifikation erzeugt. Im einfachsten Fall, in welchem die Modifikation auf dem Werkzeug entlang der Eingriffslinie mit dem Abrichter konstant ist, definiert die gewünschte Modifikation entlang des Kontaktpfades die Form der Funktion F_{Ft1} bzw. für den erweiterten Fall bevorzugt die Koeffizientenfunktion F_{FtC,1} für den konstanten Anteil der Modifikation. Hierdurch sind erfindungsgemäß im Wesentlichen beliebige Profilmodifikationen herstellbar.

Das Verfahren gemäß der vorliegenden Erfindung kann insbesondere folgende Schritte umfassen:
- Vorgabe einer gewünschten Profilmodifikation auf dem Werkstück,
- Bestimmung der zur Erzeugung der gewünschten Profilmodifikation auf dem Werkstück notwendigen Modifikation des Werkzeuges entlang eines definierten Kontaktpfades,
- Bestimmung einer topologischen Modifikation des Werkzeuges, welche entlang des Kontaktpfades der so bestimmten Modifikation entspricht, und / oder Bestimmung der zur Bereitstellung einer topologischen Modifikation, welche entlang des Kontaktpfades der so bestimmten Modifikation entspricht, geeigneten Variation der Position des Abrichters zum Werkzeug beim Abrichten des Werkzeuges.

Bevorzugt wird die topologische Modifikation dadurch erzeugt, dass die Position des Abrichters zum Werkzeug beim Abrichten in Abhängigkeit von dem Werkzeugdrehwinkel und / oder der Werkzeugbreitenposition variiert wird. Weiter bevorzugt wird die Variation so bestimmt oder erfolgt so, dass sich an dem bei einem bestimmten Werkzeugdrehwinkel und einer bestimmten Werkzeugbreitenposition jeweils gegebenen Schnittpunkt zwischen den Eingriffslinie des Abrichters mit dem Werkzeug und dem Kontaktpfad des Werkzeuges mit dem Werkstück die bestimmte Modifikation ergibt, welche dann im Rahmen des Wälzbearbeitungsverfahrens die gewünschte Modifikation auf dem Werkstück erzeugt.

Bevorzugt wird der definierte Kontaktpfad durch eine definierte initiale Shift-Position des Werkzeugs vorgegeben.

Weiterhin bevorzugt ist vorgesehen, dass zur Bestimmung der zur Erzeugung der gewünschten Modifikation auf dem Werkstück geeigneten Modifikation des Werkzeuges entlang eines Kontaktpfades zunächst eine Bestimmung der den Kontaktpfad bildenden Berührpunkte zwischen Werkstück und dem Werkzeug bei der Wälzbearbeitung erfolgt. Die Berührpunkte bzw. der hierdurch gebildete Berührpfad wird dabei bevorzugt analytisch bestimmt.

Weiterhin kann zur Bestimmung der zur Bereitstellung einer topologischen Modifikation geeigneten Variation der Position des Abrichters zum Werkzeug die Position der Eingriffslinie des Abrichters in das Werkzeug in Abhängigkeit von dem Werkzeugdrehwinkel und / oder der Werkzeugbreitenposition bestimmt werden. Die Bestimmung kann dabei beispielsweise durch eine Abrichtsimulation erfolgen.

Bevorzugt wird dabei die Richtung der Eingriffslinie als konstant angenommen, und insbesondere als unabhängig von der eingesetzten Modifikation. Dies gilt in guter Näherung insbesondere für evolventische Verzahnungen.

Alternativ kann der Einfluss einer Modifikation auf die Richtung der Eingriffslinie berücksichtigt werden. Insbesondere kann eine solche Berücksichtigung für nicht-evolventische Verzahnungen erfolgen, bei welchen der Einfluss einer Modifikation auf die Richtung der Eingriffslinie größer sein kann. Weiterhin ist bei nicht-evolventischen Verzahnungen zu berücksichtigen, dass die Eingriffslinie üblicherweise nicht mehr einer Gerade entspricht.

Eine erfindungsgemäß erzeugte Profilmodifikation des Werkstückes kann auch mit anderen Modifikationen überlagert werden.

Gemäß einem ersten Aspekt kann die Bearbeitungskinematik im Rahmen des Wälzverfahrens modifiziert werden, um die durch die topologische Modifikation des Werkzeuges erzeugte Modifikation auf dem Werkstück mit einer durch die Modifikation der Bearbeitungskinematik erzeugten Modifikation zu überlagern. Insbesondere kann die erfindungsgemäß erzeugte Profilmodifikation hierdurch mit einer natürlich verschränkten Flankenlinienmodifikation überlagert werden.

Gemäß einer ersten Variante von Anspruch 8 wird im Rahmen der vorliegenden Erfindung ein modifizierter Abrichter zum Abrichten des Werkzeuges eingesetzt. Dabei wird die durch die Modifikation des Abrichters erzeugte Modifikation des Werkzeuges mit einer topologischen Modifikation überlagert, welche dadurch erzeugt wird, dass die Position des Abrichters zum Werkzeug beim Abrichten in Abhängigkeit von dem Werkzeugdrehwinkel und / oder der Werkzeugbreitenposition variiert wird. Insbesondere kann die topologische Modifikation dabei in der gleichen Art und Weise bestimmt und erzeugt werden, wie dies bereits oben beschrieben wurde.

Bevorzugt wird die topologische Variation so gewählt, dass die Überlagerung der Modifikationen auf dem Werkzeug entlang eines ausgewählten Kontaktpfades mit dem Werkstück einer zur Erzeugung einer gewünschten Profilmodifikation auf dem Werkstück geeigneten Modifikation entlang des Kontaktpfades entspricht. Bei dieser Ausgestaltung des vorliegenden Verfahrens hat die Tatsache, dass ein modifizierter Abrichter zum Abrichten eingesetzt wird, daher keinen Einfluss auf die Form der Modifikation entlang des ausgewählten Kontaktpfades. Vielmehr wird auch hier die topologische Modifikation so gewählt, dass sie entlang dieses ausgewählten Kontaktpfades eine Form aufweist, welche im Rahmen der Wälzbearbeitung die gewünschte Profilmodifikation erzeugt.

Die Verwendung eines modifizierten Abrichters im Rahmen der vorliegenden Erfindung kann jedoch dann von Vorteil sein, wenn für eine bestimmte Abrichtaufgabe nur ein modifizierter Abrichter zur Verfügung steht. Dieser kann dann erfindungsgemäß eingesetzt werden, da die Modifikation des Abrichters in Bezug auf die Modifikation entlang des Kontaktpfades und damit die Profilmodifikation ausgeglichen wird.

Die Auswahl eines modifizierten Abrichters kann im Rahmen der vorliegenden Erfindung auch insoweit Relevanz erhalten, als neben dem ausgewählten Kontaktpfad, im Hinblick auf welchen die topologische Profilmodifikation erzeugt wurde, auch weitere Kontaktpfade für eine Wälzbearbeitung eingesetzt werden, an welchen die Modifikation damit nicht mehr optimal ist. Durch den Einsatz des modifizierten Abrichters kann die Menge bzw. der Bereich an Kontaktpfaden, welcher noch Modifikationen auf dem Werkstück innerhalb der zulässigen Toleranz erzeugt, gegebenenfalls erweitert werden.

Gemäß einer zweiten Variante von Anspruch 8 wird ein Abrichter zum Abrichten des Werkzeuges eingesetzt, welcher für ein Werkzeug mit einer anderen Makrogeometrie ausgelegt wurde, insbesondere welcher für ein Werkzeug mit einem anderen Durchmesser und / oder einer anderen Gangzahl ausgelegt wurde.

Solche Abrichter, welche für ein anderes Werkzeug ausgelegt wurden, erzeugen ohne eine Modifikation des Abrichtprozesses eine Abweichung von der gewünschten Modifikation auf dem Werkstück. Gemäß der zweiten Variante von Anspruch 8 wird daher erfindungsgemäß die durch den nicht passenden Abrichter erzeugte Modifikation der Oberflächengeometrie des Werkzeuges an einem ausgewählten Kontaktpfad mit dem Werkstück ausgeglichen, indem die Position des Abrichters zum Werkzeug beim Abrichten in Abhängigkeit von dem Werkzeugdrehwinkel und / oder der Werkzeugbreitenposition geeignet variiert wird. Wenigstens für einen Kontaktpfad kann damit die durch den nicht passenden Abrichter erzeugte unerwünschte Modifikation ausgeglichen werden, wobei das Wälzbearbeitungsverfahren dann mit dem ausgewählten Kontaktpfad, für welchen die Modifikation ausgeglichen wurde, durchgeführt wird.

Ein solches Verfahren kann insbesondere dann zum Einsatz kommen, wenn sich der Durchmesser des Werkzeuges nach mehreren Abrichtvorgängen so verringert hat, dass der Abrichter nicht mehr zum Werkzeug passt, bzw. die durch den verringerten Durchmesser des Werkzeuges erzeugten Modifikationen beim Abrichten außerhalb der zulässigen Toleranz liegen. Gemäß dem Stand der Technik mussten solche Werkzeuge mit verringertem Durchmesser entweder durch einen anderen Abrichter abgerichtet werden, oder konnten nicht weiter verwendet werden. Die vorliegende Erfindung erlaubt die Weiterverwendung solcher Werkzeuge, da die unzulässigen Modifikationen wenigstens für einen Kontaktpfad ausgeglichen werden können.

Das erfindungsgemäße Verfahren zur Herstellung eines Werkstückes mit gewünschter Verzahnungsgeometrie mittels eines geeignet abgerichteten Werkzeuges umfasst bevorzugt folgende Schritte:
- Vorgabe einer gewünschten Profilmodifikation des Werkstückes,
- Auswahl einer Kombination aus einem Abrichter und einem Werkzeug, welche ohne eine Modifikation des Abrichtprozesses die geringsten Abweichungen von der gewünschten Profilmodifikation erzeugt, aus einer Mehrzahl an Kombinationen,
- modifiziertes Abrichten des Werkzeuges mit dem Abrichter in Linienkontakt zur Erzeugung einer topologischen Modifikation des Werkzeuges, um die Abweichungen auszugleichen und
- Wälzbearbeiten des Werkstückes mit dem abgerichteten Werkzeug mit einem über den Bearbeitungshub unveränderten Kontaktpfad zur Erzeugung der gewünschten Profilmodifikation.

Wie bereits oben dargestellt kann es von Vorteil sein, eine Kombination aus Abrichter und Werkzeug zu wählen, welche ohne den Einsatz des erfindungsgemäßen Verfahrens bereits einen Profilverlauf auf dem Werkstück erzeugt, welcher möglichst geringe Abweichungen von der gewünschten Profilmodifikation aufweist. Hierdurch müssen durch den Einsatz des erfindungsgemäßen Verfahrens und die dabei eingesetzte topologische Modifikation des Werkzeuges nur noch geringere Abweichungen bzw. eine geringere Modifikation erzeugt werden. Dies kann insbesondere den Vorteil haben, dass die Menge oder der Bereich an Kontaktpfaden, welche noch innerhalb einer zulässigen Toleranz genutzt werden können, größer wird.

Bevorzugt handelt es sich bei den Abrichtern und / oder Werkzeugen um ein zumindest teilweise vorgegebenes oder bereits vorhandenes Sortiment. Bevorzugt wird aus diesem Sortiment ausgewählt, um eine möglichst passende Kombination aus Abrichter und Werkzeug zu finden.

Bevorzugt wird die Bestimmung und/oder Erzeugung der topologischen Modifikation des Werkzeuges und das Wälzbearbeiten so durchgeführt, wie dies bereits oben näher dargestellt wurde.

In einer möglichen Ausgestaltung der vorliegenden Erfindung umfasst diese ein Verfahren zur Herstellung eines oder mehrerer Werkstücke mit einer gewünschten Verzahnungsgeometrie mittels eines geeignet abgerichteten Werkzeuges, wobei nach der Durchführung eines oder mehrerer Bearbeitungsschritte das Werkzeug jeweils abgerichtet wird, bevor weitere Bearbeitungsschritte an demselben oder weiteren Werkstücken durchgeführt werden. Erfindungsgemäß ist dabei vorgesehen, dass bei einem späteren Abrichtvorgang eine andere topologische Modifikation des Werkszeuges gegenüber einem früheren Abrichtvorgang erzeugt wird. Insbesondere kann so im Rahmen der vorliegenden Erfindung der sich durch die mehreren Abrichtvorgänge verringernde Durchmesser des Werkzeuges bei der Erzeugung der topologischen Modifikation berücksichtigt werden. Insbesondere kann die topologische Modifikation dabei für den jeweiligen Abrichtvorgang so erzeugt werden, dass sich entlang eines vorgegebenen Kontaktpfades eine Modifikation einstellt, welche im Rahmen der Wälzbearbeitung des Werkstückes eine gewünschte Profilmodifikation erzeugt.

Bevorzugt kann dabei das topologische Abrichten und / oder die Wälzbearbeitung so durchgeführt werden, wie dies bereits oben näher beschrieben wurde.

Wie bereits oben näher dargestellt erlaubt es das vorliegende Verfahren, bei einer Wälzbearbeitung mit einer vorgegebenen initialen Shiftposition bzw. einem durch diese initiale Shiftposition definierten Kontaktpfad eine vorgegebene Profilmodifikation im Wesentlichen exakt zu erzeugen. Bei gegenüber einer solchen idealen initialen Shiftposition bzw. einem solchen idealen Kontaktpfad verschobenen initialen Shiftpositionen bzw. verschobenem Kontaktpfad ergeben sich dagegen Abweichungen von der gewünschten Profilmodifikation, da die topologische Modifikation nur für einen Kontaktpfad bzw. eine initiale Shiftposition exakt die gewünschte Form aufweisen kann. In vielen Fällen existieren jedoch verschobene Kontaktpfade bzw. initiale Shiftpositionen, mit welchen die gewünschte Profilmodifikation noch innerhalb der zulässigen Toleranz herstellbar ist. Hierdurch kann das Werkzeug bzw. die Werkzeugbreite besser ausgenutzt werden.

Gemäß Anspruch 11 wird während einer Bearbeitung eines oder mehrerer Werkstücke mindestens ein Hub mit einer ersten initialen Shiftposition des Werkzeuges und / oder einem ersten Kontaktpfad durchgeführt werden, und mindestens ein zweiter Hub mit einer zweiten initialen, verschobenen Shiftposition des Werkzeuges und / oder einem zweiten, verschobenen Kontaktpfad durchgeführt werden. Hierdurch kann die Werkzeugbreite besser ausgenutzt werden.

Gemäß Anspruch 11 ist die erste initiale Shiftposition und / oder der erste Kontaktpfad weniger gegenüber einer idealen initialen Shiftposition oder einem idealen Kontaktpfad verschoben als die zweite initiale Shiftposition und / oder der zweite Kontaktpfad. Insbesondere kann die erste initiale Shiftposition der idealen initialen Shiftposition und / oder der erste Kontaktpfad dem idealen Kontaktpfad entsprechen. Erfindungsgemäß kann daher zum einen mit der idealen initialen Shiftposition bzw. dem idealen Kontaktpfad eine Wälzbearbeitung durchgeführt werden. Um das Werkzeug gleichmäßiger auszunutzen, kann jedoch auch mit einer gegenüber einer solchen idealen initialen Shiftposition bzw. einem solchen idealen Kontaktpfad verschobenen zweiten initialen Shiftposition bzw. zweiten Kontaktpfad gearbeitet werden, insbesondere dann, wenn diese zweite initiale Shiftposition und/oder dieser zweite Kontaktpfad eine Modifikation erzeugt, welche innerhalb einer zulässigen Toleranz zur gewünschten Profilmodifikation liegt.

In einer möglichen Ausführungsform der vorliegenden Erfindung kann ein Grobbearbeitungsschritt, insbesondere ein Schruppschritt, mit der zweiten initialen Shiftposition durchgeführt werden. Bei einem solchen Grobbearbeitungsschritt sind die zulässigen Toleranzen im Hinblick auf die Profilform größer, sodass die Abweichung von der idealen initialen Shiftposition bzw. dem idealen Kontaktpfad und die hierdurch erzeugten Abweichungen von der gewünschten Modifikation leichter toleriert werden können. Weiterhin bevorzugt wird ein Feinbearbeitungsschritt mit der ersten initialen Shiftposition und / oder der ersten Kontaktlinie durchgeführt. Beim Feinbearbeitungsschritt sind die zulässigen Toleranzen geringer, sodass hier näher an der idealen Kontaktlinie bzw. der idealen initialen Shiftposition gearbeitet werden sollte, bzw. mit der idealen initialen Shiftposition und / oder dem idealen Kontaktpfad.

Wie bereits oben dargestellt kann durch die Wahl eines Abrichters, welcher ohne einen Einsatz des vorliegenden Verfahrens eine Modifikation auf dem Werkzeug erzeugt, welche im Wälzverfahren auf dem Werkstück eine Modifikation erzeugt, die der gewünschten Modifikation möglichst nahe kommt, der nutzbare Bereich an initialen Shiftpositionen und / oder Kontaktlinien vergrößert werden. Die vorliegende Erfindung bietet jedoch auch unabhängig hiervon Möglichkeiten, durch eine entsprechende Gestaltung der topologischen Modifikation den nutzbaren Bereich zu vergrößern.

Gemäß der vorliegenden Erfindung kann die Modifikation des Werkzeuges im Wälzbild zumindest lokal in einer ersten Richtung des Werkzeuges durch eine lineare Funktion zumindest näherungsweise beschreibbar sein, wobei die Koeffizienten dieser linearen Funktion in einer zweiten Richtung des Werkzeuges, welche senkrecht zur ersten Richtung verläuft, durch Koeffizientenfunktionen F_{FtC,1} für den konstanten Anteil sowie F_{FtL,1} für den linearen Anteil gebildet werden. Eine solche Modifikation mit einem linearen Anteil weist gegenüber einer Modifikation, welche in der ersten Richtung konstant ist, weitere Freiheitsgrade auf, welche bevorzugt zur Erweiterung des nutzbaren Bereiches genutzt werden können.

Bevorzugt wird erfindungsgemäß die Koeffizientenfunktion F_{FtC,1} für den konstanten Anteil so bestimmt, dass eine gewünschte Profilmodifikation bei der Wälzbearbeitung an einer vorgegebenen initialen Shiftposition und / oder mit einem vorgegebenen Kontaktpfad erzeugt wird. Bevorzugt wird dann die Koeffizientenfunktionen F_{FtL,1} für den linearen Anteil so bestimmt, dass die bei einer Wälzbearbeitung mit mindestens einer verschobenen initialen Shiftposition und / oder Kontaktpfad und / oder mindestens einem Band oder einem Bereich von initialen Shiftpositionen oder Kontaktpfaden auf dem Werkstück entstehenden Abweichungen von der gewünschten Profilmodifikation minimal sind. Die Bestimmung der Koeffizientenfunktionen kann beispielsweise durch eine Ausgleichsrechnung erfolgen.

In einer möglichen Ausgestaltung der vorliegenden Erfindung können dabei die Abweichungen abhängig vom Wälzweg unterschiedlich gewichtet werden, um unterschiedliche Toleranzen entlang des Profils zu berücksichtigen.

Weiterhin kann der Abstand der verschobenen Shiftpositionen und / oder Kontaktpfade bzw. die Breite des Bandes iterativ so bestimmt werden, dass die auf dem Werkstück entstehende Abweichung bei allen Kontaktpfaden noch innerhalb einer vorgegebenen Toleranz liegt.

Die vorliegende Erfindung bietet noch weitere Möglichkeiten, um die Werkzeugbreite möglichst gut ausnutzen zu können:
Gemäß der vorliegenden Erfindung kann das Werkzeug mindestens einen Bereich mit einer ersten topologischen Modifikation und einem zweiten Bereich mit einer zweiten topologischen Modifikation aufweisen, wobei die erste topologische Modifikation entlang eines Kontaktpfades mit dem Werkstück bei einer ersten initialen Shiftposition identisch zu der zweiten topologischen Modifikation entlang eines Kontaktpfades mit dem Werkstück bei einer zweiten initialen Shiftposition ist. Hierdurch kann die gewünschte Profilmodifikation an der ersten und der zweiten initialen Shiftposition jeweils exakt erzeugt werden.

Dabei kann bevorzugt während einer Bearbeitung eines oder mehrerer Werkstücke mindestens ein Hub mit der ersten initialen Shiftposition des Werkzeuges durchgeführt werden, und mindestens ein zweiter Hub mit der zweiten initialen Shiftposition des Werkzeuges. Hierdurch werden sowohl der erste Bereich, als auch der zweite Bereich des Werkzeuges im Rahmen der vorliegenden Erfindung eingesetzt, um ein Werkstück zu bearbeiten.

Bevorzugt umfasst der erste Bereich bei der ersten initialen Shiftposition den kompletten Kontaktpfad mit dem Werkstück, und der zweite Bereich bei der zweiten initialen Shiftposition ebenfalls einen kompletten Kontaktpfad mit dem Werkstück. Die beiden Bereiche können damit jeweils eingesetzt werden, um ein komplettes Profil des Werkstückes zu erzeugen und die gewünschte Profilmodifikation zur Verfügung zu stellen.

In einer bevorzugten Ausführungsform der vorliegenden Erfindung ist die erste topologische Modifikation identisch zu der zweiten topologischen Modifikation. Insbesondere sind so auf dem Werkzeug mehrere identische topologische Modifikationen nebeneinander angeordnet. Hierdurch kann die Werkzeugbreite besser ausgenutzt werden.

Gemäß der vorliegenden Erfindung kann eine gewünschte Profilmodifikation des Werkstückes vorgegeben werden und eine für die Erzeugung dieser gewünschten Modifikation geeignete Modifikation des Werkzeuges und / oder eine geeignete Variation der Position des Abrichters zum Werkzeug beim Abrichten in Abhängigkeit von dem Werkzeugdrehwinkel und / oder der Werkzeugbreitenposition bestimmt werden. Bevorzugt wird die Modifikation des Werkzeuges entlang einer Kontaktlinie zwischen Werkzeug und Werkstück aus der gewünschten Profilmodifikation des Werkstückes mittels einer Umkehrung einer Zuordnungsfunktion bestimmt, welche die Abbildung der Oberfläche des Werkzeuges auf die Oberfläche des Werkstückes beim Wälzschleifen mit einer bestimmten initialen Shiftposition des Werkzeuges beschreibt. Die Bestimmung erfolgt bevorzugt unter Verwendung einer Funktion, welche die Abbildung der Oberfläche des Werkzeuges auf die Oberfläche des Werkstückes beim Wälzschleifen analytisch beschreibt. Insbesondere ordnet diese Funktion bevorzugt jedem Punkt entlang des Kontaktpfades auf dem Werkzeug einen Punkt entlang des Kontaktpfades auf dem Werkstück und damit einen Punkt entlang des Profils auf dem Werkstück zu.

Gemäß der vorliegenden Erfindung wird das Werkzeug bevorzugt mittels einer Profil- und / oder Formrolle modifiziert abgerichtet. Eine solche Profil- und / oder Formrolle weist bevorzugt eine Rotationsachse auf, und ein um diese Rotationsachse rotationssymmetrisches Profil.

Bevorzugt erfolgt das Abrichten gemäß der vorliegenden Erfindung in Linienkontakt mit dem Werkzeug. Die erfindungsgemäße topologische Modifikation ist dabei so gestaltet, dass ein Zeilenabrichten zu ihrer Herstellung nicht notwendig ist. Vielmehr kann die Modifikation auch bei einem Abrichten in Linienkontakt erzeugt werden, indem wie oben beschrieben die Position zwischen Abrichter und Werkzeug in Abhängigkeit von der Werkzeugbreitenposition und / oder Werkzeugdrehwinkels variiert wird.

Gemäß einer ersten Variante der vorliegenden Erfindung kann die Profil- und / oder Formrolle beim Abrichten vom Fußbereich bis zum Kopfbereich mit dem Zahn des Werkzeuges in Kontakt stehen, sodass die Modifikation über die gesamte Zahnhöhe in einem Hub erzeugt wird. In einer zweiten, alternativen Ausführungsform kann die Profil- und / oder Formrolle beim Abrichten nur in Teilbereichen zwischen Fuß und Kopf mit dem Zahn des Werkzeuges in Kontakt stehen, sodass die gezielte Modifikation über die gesamte Zahnhöhe in mehreren Hüben und jeweils unterschiedlicher relativer Positionierung des Abrichters erfolgt. Ein solches Abrichten des Werkzeuges in mehreren Hüben hat im Prinzip den Vorteil, dass eine noch größere Klasse an topologischen Modifikation erzeugt werden kann. Allerdings ist dies für die Durchführung der vorliegenden Erfindung nicht notwendig, da eine für das erfindungsgemäße Verfahren geeignete topologische Modifikation auch in einem einzigen Hub erzeugt werden kann. Das Abrichten in mehreren Hüben kann jedoch auch technologische Vorteile haben, beispielsweise wenn kein Abrichter zur Verfügung steht, welcher eine ausreichende Profillänge aufweisen würde.

Das Erzeugen der erfindungsgemäßen topologischen Modifikation des Werkzeuges kann erfolgen, indem eine oder mehrere der folgenden Korrekturen der Achsbewegungen zur herkömmlichen Abrichtkinematik vorgenommen werden:
a) Variation des Achsabstands des Abrichters zum Werkzeug in Abhängigkeit des Werkzeugdrehwinkels oder der Werkzeugbreitenposition, d. h. eine Variation der Zustellung in Abhängigkeit von Werkzeugdrehwinkel und / oder Werkzeug breitenposition.
b) Variation des Axialvorschubs des Werkzeugs bzw. des Abrichters in Abhängigkeit des Werkzeugdrehwinkels und / oder der Werkzeugbreitenposition, d. h. eine Variation der Shiftbewegung des Abrichters bzw. des Werkzeuges in Abhängigkeit von Werkzeugdrehwinkel und / oder Werkzeugbreitenposition.
c) Variation des Achskreuzwinkels des Werkzeuges und des Abrichters in Abhängigkeit des Werkzeugdrehwinkels und / oder der Werkzeugbreitenposition, d. h. eine variable Schwenkbewegung des Abrichters relativ zum Werkzeug in Abhängigkeit von Werkzeugdrehwinkel und / oder Werkzeugbreitenposition.
d) Variation der Werkzeugdrehzahl in Abhängigkeit des Werkzeugdrehwinkels und / oder der Werkzeugbreitenposition. Der Werkzeugdrehwinkel ist dabei üblicherweise fest an die Werkzeugbreitenposition gekoppelt, um das durch den Abrichter erzeugte Profil auf dem Werkzeug entlang der Zahnflanke zu verschieben. Durch eine Variation des Verhältnisses zwischen dem Werkzeugdrehwinkel und der Werkzeugbreitenposition können daher Modifikationen erzeugt werden.

Alternativ oder zusätzlich kann das modifizierte Abrichten des Werkzeuges erfolgen, indem der Abrichter abhängig von der Winkelposition des Werkzeuges und / oder der Werkzeugbreitenposition mehr oder weniger zugestellt wird bzw. indem das Werkzeug abhängig von seiner Winkelposition und / oder der Werkzeugbreitenposition mehr oder weniger auf den Abrichter hin zugestellt wird oder umgekehrt.

Weiterhin können bei der relativen Positionierung zwischen Abrichter und Werkzeug mindestens drei und bevorzugt vier oder fünf Freiheitsgrade zur Erzeugung der gewünschten Modifikation genutzt werden. Bevorzugt werden die Freiheitsgrade dabei unabhängig voneinander zur Erzeugung der gewünschten Modifikation eingestellt. Insbesondere können bevorzugt mindestens drei, vier oder alle der folgenden fünf Freiheitsgrade eingesetzt werden: Drehwinkel des Werkzeuges, axiale Position des Werkzeuges, y-Position des Abrichters, Achsabstand und / oder Achskreuzwinkel. Bevorzugt wird dabei die axiale Position des Werkzeuges, d. h. die Werkzeugbreitenposition, dazu genutzt, die Berührlinie des Abrichters zu verschieben. Von den verbleibenden vier Freiheitsgraden können nun zwei, drei oder vier Freiheitsgrade unabhängig voneinander eingestellt werden, um die gezielte Modifikation entlang der Berührlinie zu erzeugen.

Die vorliegende Erfindung zeigt weiterhin ein nicht beanspruchtes Werkzeug zur Durchführung eines erfindungsgemäßen Verfahrens, wie es oben näher dargestellt wurde. Das erfindungsgemäße Werkzeug weist dabei mindestens einen ersten Bereich mit einer ersten topologischen Modifikation auf. Die topologische Modifikation ist so ausgestaltet, dass sie entlang eines Kontaktpfades mit dem Werkstück beim Wälzbearbeiten mit einem über den Bearbeitungshub unveränderten Kontaktpfad die gewünschte Modifikation auf dem Werkstück erzeugt. Die topologische Modifikation weist bevorzugt eine Ausgestaltung auf, wie sie oben näher dargestellt wurde.

Ein Werkzeug kann in einer möglichen Ausführungsform nur einen Bereich mit einer einzigen topologischen Modifikation aufweisen. Um die Werkzeugbreite besser auszunutzen, kann das erfindungsgemäße Werkzeug jedoch weiterhin einen zweiten Bereich mit einer zweiten topologischen Modifikation aufweisen, wobei die erste topologische Modifikation entlang eines Kontaktpfades mit dem Werkstück mit einer ersten initialen Shiftposition identisch zu der zweiten topologischen Modifikation entlang eines Kontaktpfades mit dem Werkstück bei einer zweiten initialen Shiftposition ist. So kann das Werkzeug mit der ersten und der zweiten initialen Shiftposition jeweils zur Erzeugung eines identischen Profils eingesetzt werden. Weiterhin kann das Werkzeug neben dem modifizierten Bereich auch einen unmodifzierten Bereich aufweisen. Bevorzugt wird der unmodifzierte Bereich für eine Grobbearbeitung der Werkstücke eingesetzt, der modifizierte Bereich für eine Feinbearbeitung. Dies bietet den Vorteil, dass bei dieser Ausführungsform die Anzahl an bearbeiteten Werkstücken zwischen den Abrichtzyklen größer ist, da die Hauptzerspanleistung vom unmodifizierten Schruppbereich geleistet wird und nur noch die letzten qualitätsbestimmenden Schnitte im modifizierten Schlichtbereich erfolgen und dieser damit nicht so schnell verschleißt.

Bevorzugt umfasst erfindungsgemäß der erste Bereich bei der ersten initialen Shiftposition und / oder der zweite Bereich bei der zweiten initialen Shiftposition des Werkstückes jeweils den kompletten Kontaktpfad mit dem Werkstück.

Die erste topologische Modifikation kann identisch zu der zweiten topologischen Modifikation sein. In diesem Fall weist das Werkzeug mindestens zwei identische topologische Modifikationen nebeneinander auf.

Die vorliegende Erfindung umfasst weiterhin eine Verzahnmaschine gemäß Anspruch 14 zur Durchführung eines Verfahrens, wie es oben näher beschrieben wurde. Die Verzahnmaschine weist dabei bevorzugt eine Steuerung zur Durchführung eines erfindungsgemäßen Verfahrens auf.

Die erfindungsgemäße Verzahnmaschine umfasst eine Eingabefunktion, über welche eine gewünschte Modifikation eines Werkstückes vorgebbar ist, wobei die Verzahnmaschine eine Bestimmungsfunktion aufweist, welche eine für die Erzeugung dieser gewünschten Modifikation geeignete Modifikation des Werkzeuges und / oder eine geeignete Variation der Position des Abrichters zum Werkzeug beim Abrichten in Abhängigkeit von dem Werkzeugdrehwinkel und / oder der Werkzeugbreitenposition bestimmt. Weiterhin kann die Verzahnmaschine eine Abrichtfunktion aufweisen, welche während des Abrichtens auf dem Werkzeug eine für die Erzeugung der gewünschten Modifikation des Werkstückes geeignete Modifikation des Werkzeuges erzeugt.

Insbesondere kann die Verzahnmaschine dabei eine Werkstückaufnahme und eine Werkzeugaufnahme aufweisen, welche jeweils um eine Rotationsachse drehbar sind und über weitere Bewegungsachsen der Verzahnmaschine relativ zueinander bewegbar sind, um eine erfindungsgemäße Wälzbearbeitung durchzuführen. Weiterhin bevorzugt weist die Verzahnmaschine eine Abrichteraufnahme auf, welche ebenfalls um eine Rotationsachse bewegbar ist, um mit dem Abrichter ein Werkzeug abzurichten. Das Werkzeug kann in der Werkzeugaufnahme, der Werkstückaufnahme oder einer separaten weiteren Aufnahme aufgenommen sein, während es abgerichtet wird. Die Verzahnmaschine weist bevorzugt Bewegungsachsen auf, um die Relativposition zwischen Abrichter und Werkzeug beim Abrichten erfindungsgemäß zu variieren.

Die vorliegende Erfindung umfasst weiterhin ein Computerprogramm gemäß Anspruch 15 mit einer Eingabefunktion zur Eingabe von Daten zu einer gewünschten Modifikation des Werkstückes und mit einer Funktion zur Bestimmung einer für die Erzeugung dieser gewünschten Modifikation geeigneten topologischen Modifikation des Werkzeuges und / oder einer geeigneten Variation der Position des Abrichters zum Werkzeug beim Abrichten in Abhängigkeit von dem Werkzeugdrehwinkel und / oder der Werkzeugbreitenposition, sodass die gewünschte Modifikation des Werkstückes durch eine Wälzbearbeitung mit dem topologisch modifizierten Werkzeug mit einem über den Bearbeitungshub unveränderten Kontaktpfad herstellbar ist. Für den Fall konischer Werkstücke kann das Computerprogramm weiterhin eine Funktion aufweisen, um das Diagonalverhältnis bei einer einflankigen Wälzbearbeitung für linke und/oder rechte Flanke so zu bestimmen, dass der Kontaktpfad auf dem Werkzeug während der Bearbeitung nicht verschoben wird, sowie optional eine Funktion, um die Geometrie des Werkzeugs, insbesondere den Konuswinkel und/oder den Profilwinkel so zu bestimmen, dass sich für linke und rechte Flanke dasselbe Diagonalverhältnis ergibt und bevorzugt auch dieses Diagonalverhältnis bestimmt. Das erfindungsgemäße Computerprogramm kann beispielsweise auf einem Datenträger oder in einem Speicher gespeichert sein. Das Computerprogramm kann bevorzugt auf einer Verzahnmaschine installierbar sein und / oder eine Ausgabefunktion für Daten zur Verwendung auf einer Verzahnmaschine aufweisen. Die Funktionen des Computerprogramms implementieren bevorzugt ein Verfahren, wie es oben näher dargestellt wurde.

Die Eingabefunktion einer erfindungsgemäßen Verzahnmaschine bzw. eines erfindungsgemäßen Computerprogrammes erlaubt gemäß einer Variante von Anspruch 14 und 15 die Vorgabe einer gewünschten Profilmodifikation, wobei die gewünschte Profilmodifikation und / oder deren Eigenschaften innerhalb bestimmter Randbedingungen frei vorgebbar ist bzw. sind. Alternativ oder zusätzlich kann mindestens eine der folgenden Eigenschaften der Profilmodifikation vorgebbar sein: Balligkeit, Profilwinkelabweichung, Kopfrücknahme und / oder Fußrücknahme.

Bevorzugt sind zu mindestens einer der Eigenschaften folgende Daten vorgebbar: Größe der Balligkeit, Größe der Profilwinkelabweichung, Betrag und Lage der Kopfrücknahme, Betrag und Lage der Fußrücknahme.

Besonders bevorzugt sind mehrere der oben genannten Eigenschaften bzw. Daten vorgebbar, weiterhin bevorzugt alle der oben genannten Eigenschaften und / oder Daten.

Besonders bevorzugt weist die Verzahnmaschine bzw. das Computerprogramm eine Eingabemaske mit Eingabefeldern für mindestens eine der oben genannten Eigenschaften und / oder deren Daten auf. Bevorzugt weist die Eingabemaske dabei Eingabefelder für mehrere und weiter bevorzugt für alle der oben genannten Eigenschaften und / oder Daten auf.

Alternativ oder zusätzlich kann die gewünschte Profilmodifikation als stetige Modifikation und / oder an einer Mehrzahl von Wälzwinkeln frei vorgebbar sein.

Bevorzugt sind die Eingabefunktion, die Bestimmungsfunktion und / oder die Abrichtfunktion der erfindungsgemäßen Verzahnmaschine und / oder des erfindungsgemäßen Computerprogrammes so ausgestaltet, dass sie ein erfindungsgemäßes Verfahren, wie es oben beschrieben ist, implementieren. Insbesondere führen die Verzahnmaschine und / oder das Computerprogramm bevorzugt die Bestimmungen so durch, wie dies oben im Hinblick auf das erfindungsgemäße Verfahren näher beschrieben wurde.

Die vorliegende Erfindung kann im Prinzip mit beliebigen Wälzverfahren zur Bearbeitung eines Werkstückes eingesetzt werden. Besonders bevorzugt wird sie jedoch bei einem Wälzschleifverfahren eingesetzt, insbesondere zur Hartfeinbearbeitung eines Werkstückes.

Bei den Werkstücken kann es sich um beliebige verzahnte Werkstücke handeln. Besonders bevorzugt kommt die vorliegende Erfindung jedoch zur Herstellung von Zahnrädern zum Einsatz. Die Zahnräder weisen bevorzugt eine Stirnradverzahnung auf. Die Zahnräder können dabei eine Innenverzahnung und / oder eine Außenverzahnung aufweisen. Bei der Verzahnung kann es sich um eine Gerade- oder eine Schrägverzahnung handeln. Die Werkstücke bzw. Zahnräder können eine zylindrische oder konische Grundform aufweisen.

Als Werkzeug wird besonders bevorzugt eine Schleifschnecke eingesetzt. Die Schleifschnecke ist bevorzugt abrichtbar, und weist beispielsweise einen Schleifkörper aus einem Korundmaterial auf.

Die vorliegende Erfindung kann sowohl zur Herstellung von symmetrischen Verzahnungen, als auch zur Herstellung von asymmetrischen Verzahnungen eingesetzt werden.

Weiterhin kann die vorliegende Erfindung zur Herstellung von zylindrischen sowie zur Herstellung von konischen Verzahnungen eingesetzt werden.

Als Werkzeug kann sowohl eine zylindrische Schleifschnecke, als auch eine Schleifschnecke mit einem konischen Grundkörper eingesetzt werden.

Bevorzugt kommt die vorliegende Erfindung zur Erzeugung einer evolventischen Verzahnung zum Einsatz. Die vorliegende Erfindung kann jedoch auch zum Erzeugen von nicht evolventischen Verzahnungen eingesetzt werden.

Das Abrichten gemäß der vorliegenden Erfindung erfolgt bevorzugt zweiflankig. Weiterhin erfolgt auch das Bearbeiten des Werkstückes bevorzugt zweiflankig. Bei der Herstellung einer konischen Verzahnung mit einem zylindrischen Werkzeug wird bevorzugt einflankig gearbeitet.

Die vorliegende Erfindung wird nun anhand von Zeichnungen und Ausführungsbeispielen näher beschrieben. Die Figuren zeigen beispielhaft nur w-z-Diagramme zylindrischer Verzahnungen. Die w-z-Diagramme konischer Verzahnungen sind im Allgemeinen nicht rechteckig, meist trapezförmig, da sich der Auswertebereich des Wälzwegs über die Verzahnbreite ändert.

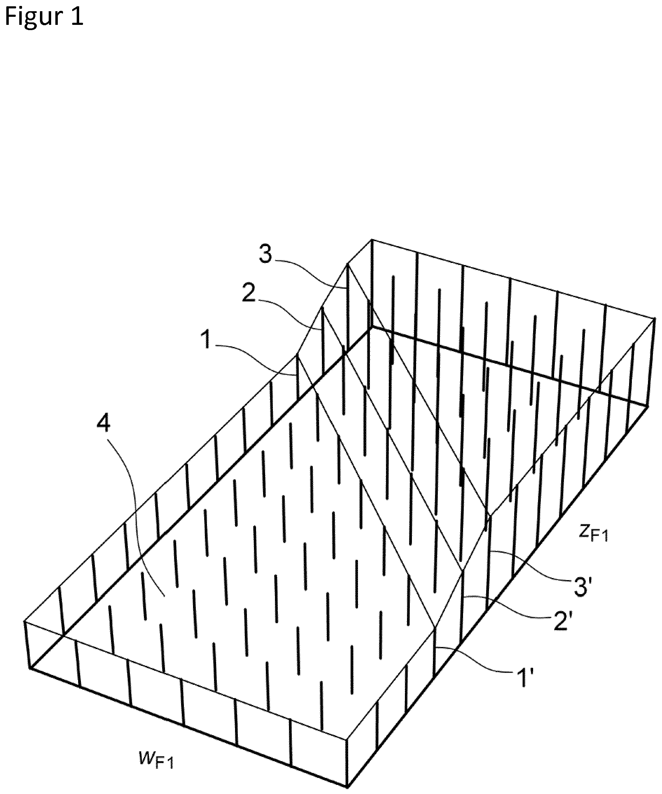

- Figur 1:: Figur 1 zeigt schematisch einen Abschnitt der Flanke eines Schneckengangs mit Vektoren in Normalenrichtung für eine nicht über die ganze Breite abgerichtete Schnecke. Die Anzahl der Vektoren wurde im Vergleich zu einer Simulationsrechnung hier deutlich reduziert. Die hier schematisch gezeigte Ebene 4 entspricht der im Allgemeinen gekrümmten Flanke der nicht modifizierten Schnecke, auf die die Vektoren gestellt werden. Die Vektoren 1 und 1' wurden bereits von der Berührline überstrichen und sind somit vollständig gekürzt. Die Vektoren 2 und 2' wurden bereits mindestens einmal gekürzt, jedoch noch nicht von der Berührlinie überstrichen. Die Vektoren 3 und 3' wurden noch nicht gekürzt und haben somit noch die Länge dem gewählten Aufmaß entsprechend.

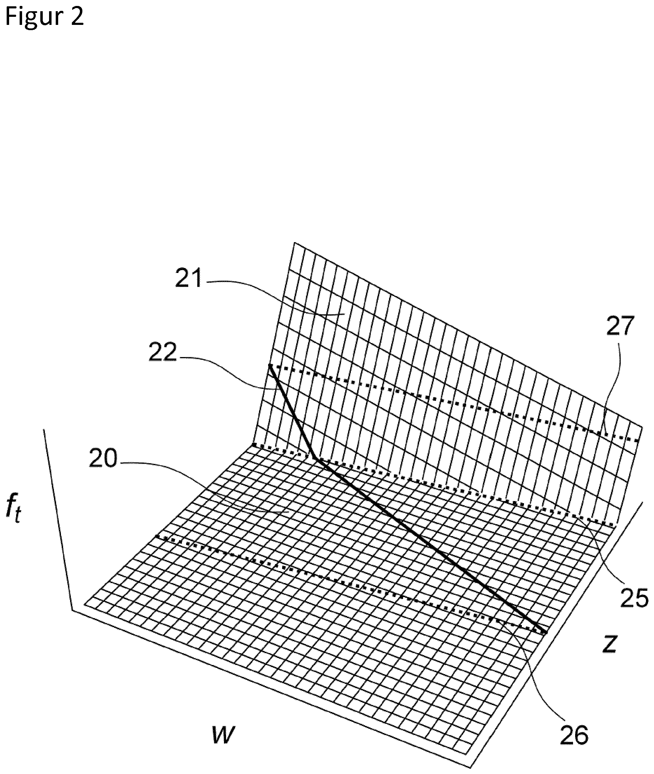

- Figur 2:: Figur 2 zeigt beispielhaft die topologische Oberflächenmodifikation auf einer evolventischen Schnecke, die nötig ist, um mit dem hier beschriebenen Verfahren eine lineare Kopfrücknahme auf dem Werkstück zu erzeugen. 22 markiert die Kontaktpfad, 25-27 verschiedene Berührlinen zwischen Abrichter und Schnecke.

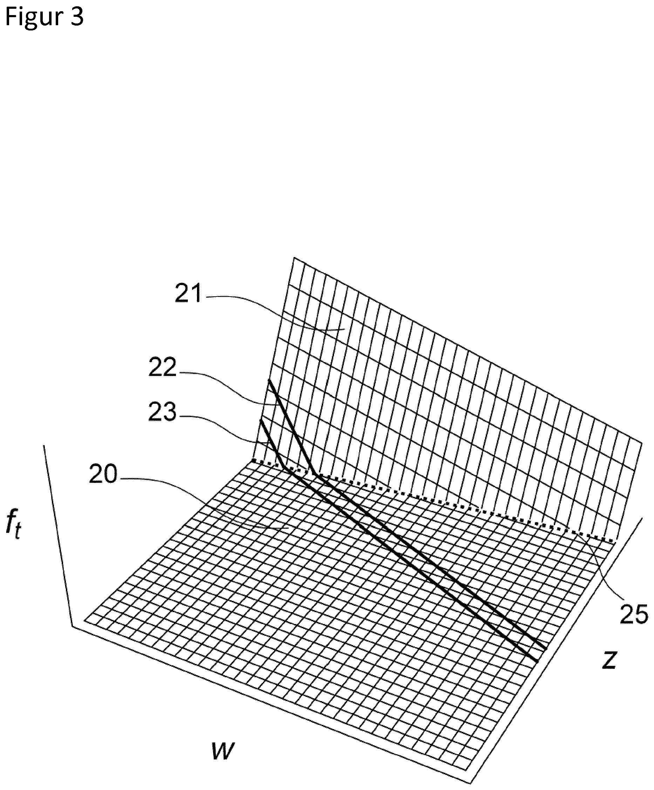

- Figur 3:: Figur 3 zeigt die selbe topologische Oberflächenmodifikation wie Figur 2, jedoch mit einer zusätzlichen Kontaktpfad 23, welche gegenüber der 22 leicht versetzt ist, was einer anderen Shiftposition beim Schleifen entspricht.

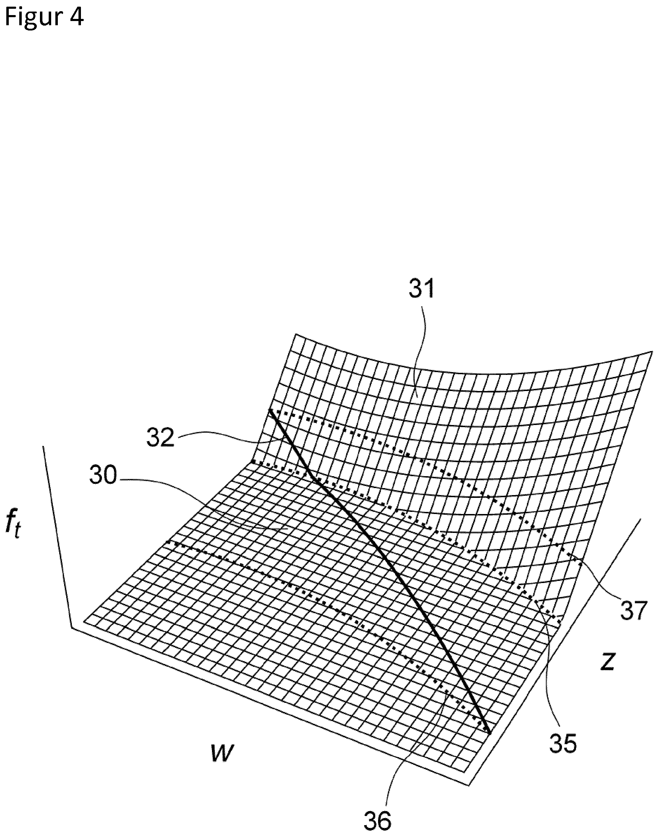

- Figur 4:: Figur 4 zeigt beispielhaft die topologische Oberflächenmodifikation auf einer nicht-evolventischen Schnecke, die nötig ist, um mit dem hier beschriebenen Verfahren eine lineare Kopfrücknahme auf dem Werkstück zu erzeugen. 32 markiert die Kontaktpfad, 35-37 verschiedene Berührlinen zwischen Abrichter und Schnecke.

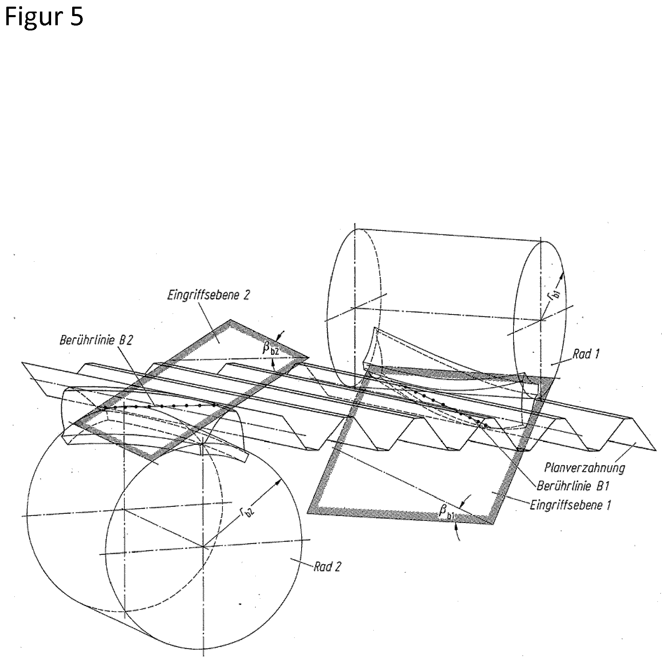

- Figur 5:: Figur 5 zeigt eine Darstellung zweier Verzahnungen in einem Schraubwälzgetriebe inklusive der gemeinsamen Zahnstange und den Eingriffsebenen beider Verzahnungen. Zur besseren Darstellung entspricht die relative Lage der beiden Verzahnungen nicht der im Schraubwälzgetriebe. Diese Figur zeigt auch die relative Lage einer zylindrischen Verzahnung zur generierenden Zahnstange. (Aus Niemann, G; Winter, H: Maschinenelemente Band 3 2. Auflage, Springer Verlag, Berlin, 1983)

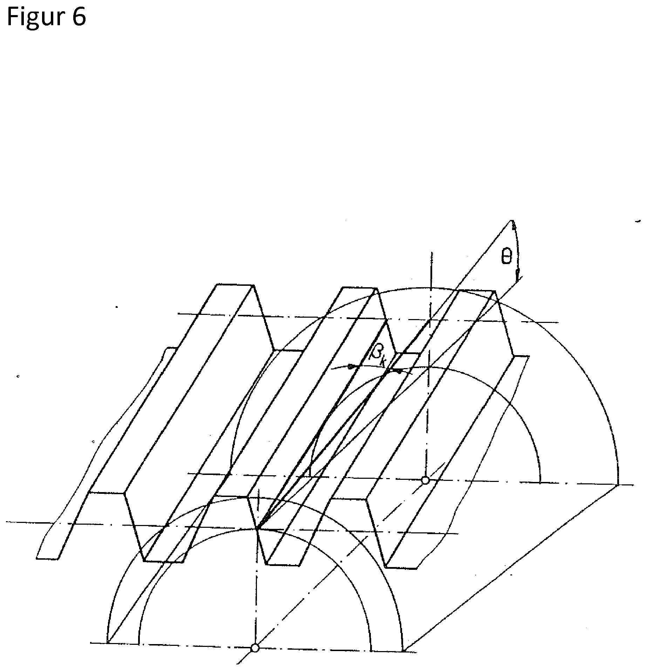

- Figur 6:: Figur 6 zeigt eine Darstellung einer konischen Verzahnung mit einer sie generierenden Zahnstange. Die Zahnstange ist um den Schrägungswinkel *βₖ* = *β_{w}* geschwenkt und um den Konuswinkel *θ* = *ϑ* gekippt. (Aus Zierau, S: Die geometrische Auslegung konischer Zahnräder und Paarungen mit parallelen Achsen, Bericht Nr. 32, Institut für Konstruktionslehre, Technische Universität Braunschweig)

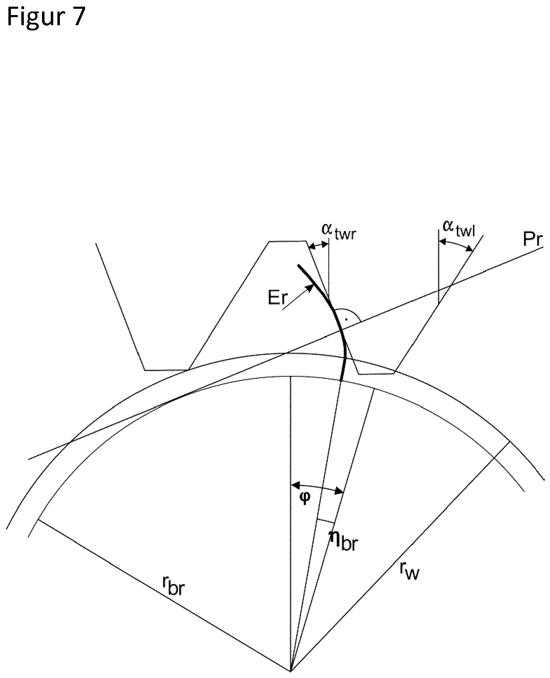

- Figur 7:: Figur 7 zeigt den Eingriff einer rechten Flanke mit einer generierenden asymmetrischen Zahnstange im Stirnschnitt. Der Profilwinkel im Stirnschnitt *α_{twr}* definiert die Neigung der Eingriffsebenen *Pᵣ*. Die Verzahnung ist um den Drehwinkel *φ* gedreht.

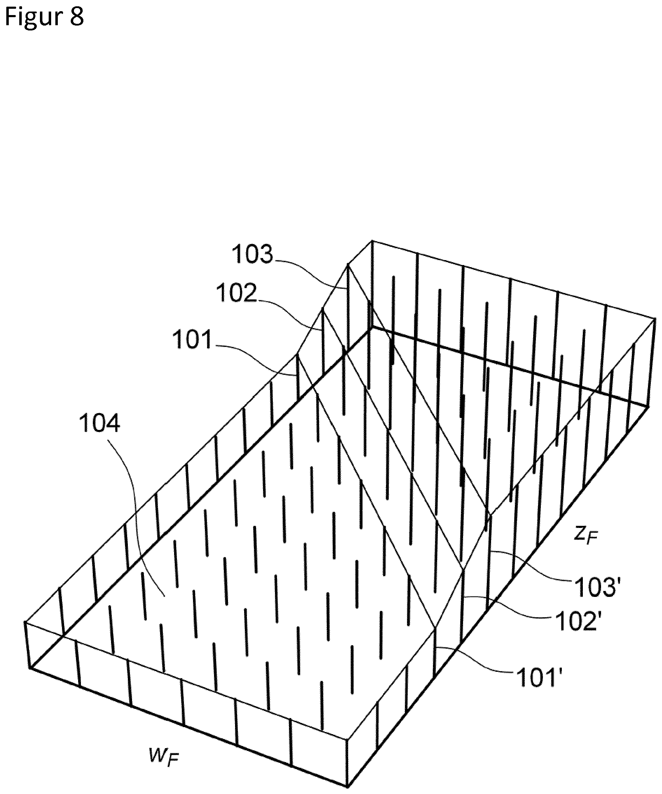

- Figur 8:: Figur 8 zeigt schematisch einen Abschnitt der Flanke eines Werkstückzahns mit Vektoren in Normalenrichtung für ein nicht über die ganze Breite geschliffenes Werkstück. Die Anzahl der Vektoren wurde im Vergleich zu einer Simulationsrechnung hier deutlich reduziert. Die hier schematisch gezeigte Ebene 104 entspricht der im Allgemeinen gekrümmten Flanke des nicht modifizierten Werkstücks, auf die die Vektoren gestellt werden. Die Vektoren 101 und 101' wurden bereits vom Kontaktpfad überstrichen und sind somit vollständig gekürzt. Die Vektoren 102 und 102' wurden bereits mindestens einmal gekürzt, jedoch noch nicht vom Kontaktpfad überstrichen. Die Vektoren 103 und 103' wurden noch nicht gekürzt und haben somit noch die Länge dem gewählten Aufmaß entsprechend.

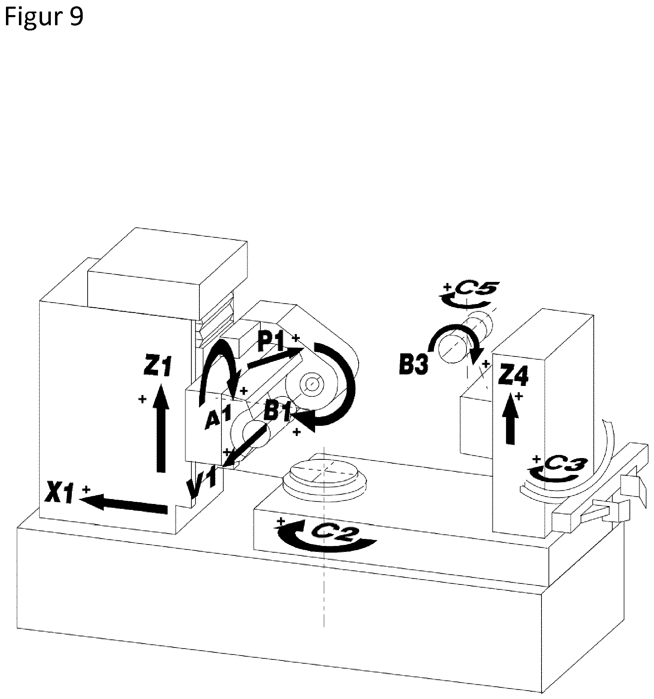

- Figur 9:: Figur 9 zeigt schematisch eine Verzahnmaschine mit den hier als Beispiele aufgeführten Bewegungsapparaten.

### Detaillierte Darstellung der Erfindung

Die Erfindung beschreibt ein Verfahren zum Abrichten von Schnecken und Wälzschleifen einer Strinradverzahnung mit einer entsprechend abgerichteten Schnecke. Das Verfahren erlaubt es, ohne den zeitaufwändigen Einsatz von Zeilenabrichten die Profilform der wälzgeschliffenen Verzahnung für einen gegebenen Abrichter in gewissen Grenzen frei vorzugeben. Insbesondere lassen sich freie Profimodifikationen wie beispielsweise Balligkeiten oder Fuß-/Kopfrücknahmen mit einem Abrichter realisieren, der diese Modifikationen nicht vorhält oder andere Modifikationen vorhält. Die Verzahnungen können alle wälzbaren Profile haben, das heißt Profile die mit einer Schnecke geschliffen werden können. Insbesondere können die Verzahnungen evolventische Profile haben. Die Verzahnungen können sowohl symmetrisch als auch asymmetrisch sein. Für evolventische Profile bedeutet dies, dass die Profilwinkel und/oder die Profilmodifikation der linken und rechten Flanken auch unterschiedlich sein können. Des Weiteren können sowohl die Schnecke also auch das bearbeitete Werkstück zylindrisch oder konisch sein. Konische Schnecken bzw. Werkstücke zeichnen sich durch unterschiedliche Steigungshöhen auf linker und rechter Flanke aus. Im zylindrischen Falle sind die Steigungshöhen auf beiden Seiten identisch. Evolventische konische Verzahnungen werden häufig auch als Beveloids bezeichnet.

Der Schleifprozess erfolgt mit einer über die Werkzeuglänge topologisch modifizierten Schnecke, welche während des Schleifprozesses in ihrer axialen Richtung in Abhängigkeit der Axialvorschubposition des Werkstücks gerade so verschoben wird, dass der Kontaktpfad auf der Schnecke während der Bearbeitung nicht verschoben wird. Werden zylindrische Werkstücke geschliffen, so ist diese Bedingung gleichbedeutend damit, dass die Schnecke nicht in ihrer axialen Richtung verschoben wird (Axialwälzschleifen). Werden konische Werkstücke geschliffen, so erfolgt das Verfahren im Allgemeinen im Diagonalwälzverfahren. Für das Verfahren ist es von entscheidender Bedeutung, wo dabei der Kontaktpfad auf der Schnecke verläuft. Werden zylindrische Werkstücke geschliffen, so ist daher entscheidend, an welcher Shiftposition (axialen Position der Schnecke) geschliffen wird. Werden konische Werkstücke geschliffen, so ist entscheident, mit welchem Diagonalverhältnis und mit welchen Shiftbereich geschliffen wird, d.h. an welcher Shiftposition ein Hub beim Schleifen begonnen wird.

Größen, die für linke und rechte Flanken unterschiedlich sind bzw. sein können, werden mit dem Index *F* versehen. *F* kann *l* (links) oder *r* (rechts) sein. Gleichungen, in den der Index *F* vorkommt, gelten immer für linke und rechte Flanken.

Die hier im Folgenden zunächst ausführlicher diskutierten Evolventenverzahnungen werden, abhängig von den Grundkreisradien (*r_{br}*, *r_{bl}*) und den Grundschrägungswinkeln (*β_{br}, β_{gl}*) in folgende vier Typen unterteilt.
1. Zylindrisch symmetrisch: *r_{b}* := *r_{br}* = *r_{bl}* und *β_{b}* := *β_{br}* = *B_{bl}*
2. Zylindrisch asymmetrisch: *r_{br}* ≠ *r_{bl}* und $\frac{tan {β}_{br}}{{r}_{br}} = \frac{tan {β}_{bl}}{{r}_{bl}}$
3. Konisch symmetrisch: *β_{br}* ≠ *β_{bl}* und *r_{br} cos β_{br}* = *r_{bl} cos β_{bl}*
4. Konisch asymmetrisch: *β_{br}* ≠ *β_{bl}* und *r_{br} cos β_{br}* ≠ *r_{bl} cos β_{bl}* und $\frac{tan {β}_{br}}{{r}_{br}} \neq \frac{tan {β}_{bl}}{{r}_{bl}}$

Größen, welche sich auf das Werkzeug beziehen, werden mit Index 1 versehen und solche, die sich auf das Werkstück beziehen mit Index 2.

Die Profilmodifikationen auf der Verzahnung werden durch die Funktion *f_{Ft2}*(*w*_{*F*2}) beschrieben, wobei *w*_{*F*2} der Wälzweg und *z*_{*F*2} die Position in Breitenlinienrichtung ist.

Im Folgenden wird die Klasse der topologischen Oberflächenmodifikationen definiert, welche bei dem hier beschriebenen Verfahren im evolventischen Fall auf der Schnecke erzeugt bzw. eingesetzt werden. Allgemein werden topologische Oberflächenmodifikationen über eine Funktion *f*_{*Ft*1}(*w*_{*F*1},*z*_{*F*1}) beschrieben, wobei *w*_{*F*1} der Wälzweg und *z*_{*F*1} die Position in Breitenlinienrichtung ist. Eine topologische Oberflächenmodifikation auf der Schnecke gehört zur hier betrachten Klasse an Oberflächenmodifikationen, wenn eine Funktion *F*_{*F*t1} existiert, mit zumindest näherungsweise ${f}_{Ft 1} \left({w}_{F 1}, {z}_{F 1}\right) = {F}_{Ft 1} \left({w}_{F 1} sin {ρ}_{F 1}+{z}_{F 1} cos {ρ}_{F 1}\right) = {F}_{Ft 1} \left({X}_{F 1}\right) .$ (1) Anschaulich gesprochen bedeutet dies, dass die Oberflächenmodifikation für alle *w*_{*F*1} und *z*_{*F*1} auf der Zahnflanke mit ${w}_{F 1} sin {ρ}_{F 1} + {z}_{F 1} cos {ρ}_{F 1} = {X}_{F 1} ,$ (2) wobei *X*_{*F*1} eine beliebige reelle Zahl ist, denselben Wert hat. Jedes *X*_{*F*1} definiert so eindeutig eine Gerade auf der Flanke in den Koordinaten *w*_{*F*1} und *z*_{*F*1}.

Im Folgenden wird näher auf die der Erfindung zu Grunde liegende Idee eingegangen. Für das Wälzschleifen evolventischer Verzahnungen wird eine Schnecke verwendet, welche ebenfalls eine Evolventenverzahnung, in der Regel mit großem Schrägungswinkel ist. Während des Bearbeitungsprozesses gibt es theoretischen Punktkontakt zwischen der Schnecke und der Endgeometrie der zu fertigenden Verzahnung. Die Oberflächen der Zahnflanken, sowohl des Werkstücks als auch des Werkzeugs, werden typischerweise über den Wälzweg (*w_{F}*) und die Position in Breitenlinienrichtung (*z_{F}*) parametrisiert. $\begin{matrix}{E}_{F} \left(w, z\right) \\ = \left(\begin{matrix}{r}_{bF} ⋅ sin \left({s}_{F}⋅\left(\frac{w}{{r}_{bF}}+{η}_{bF}\right)-\frac{z ⋅ tan \left({β}_{bF}\right)}{{r}_{bF}}\right) - {s}_{F} ⋅ w ⋅ cos \left({s}_{F}⋅\left(\frac{w}{{r}_{bF}}+{η}_{bF}\right)-\frac{z ⋅ tan \left({β}_{bF}\right)}{{r}_{bF}}\right) \\ \begin{matrix}{r}_{bF} ⋅ cos \left({s}_{F}⋅\left(\frac{w}{{r}_{bF}}+{η}_{bF}\right)-\frac{z ⋅ tan \left({β}_{bF}\right)}{{r}_{bF}}\right) + {s}_{F} ⋅ w ⋅ sin \left({s}_{F}⋅\left(\frac{w}{{r}_{bF}}+{η}_{bF}\right)-\frac{z ⋅ tan \left({β}_{bF}\right)}{{r}_{bF}}\right) \\ z\end{matrix}\end{matrix}\right)\end{matrix}$ (3)
*η_{bF}*: siehe auch Anmeldung DE 10 2012 015 846 A1
*s_{F}* dient dazu, Gleichungen für linke und rechte Flanken in einer kompakten Form zu schreiben und ist definiert durch: ${s}_{F} : = \left\{\begin{matrix}+ 1 , für linke Flanken \\ - 1 , für rechte Flanken\end{matrix}\right.$

Diese Parametrisierung erlaubt es einfache Beziehungen für den Verlauf des Kontaktpunkts (Kontaktpfad) auf Werkzeug und Werkstück zu berechnen. Dieser Verlauf wird auf dem Werkstück durch seinen Axialvorschub kontinuierlich verschoben. Die Kenntnis über diese Verläufe ermöglicht es, einem Punkt auf dem Werkzeug eindeutig einen Punkt auf dem Werkstück zuzuordnen und umgekehrt. Mit dieser Zuordnung lässt sich die Oberflächenmodifikation auf dem Werkzeug so abstimmen, dass auf dem Werkstück die gewünschte Modifikation erzeugt wird.

Um die Zusammenhänge mathematisch zu formulieren werden folgende Definitionen gemacht:
Für Transformationen werden folgende Bezeichnungen verwendet:
- *Rₓ*(*φ*) Rotation um den Winkel *φ* um die x-Achse. Analog für *y* und *z*
- *Tₓ*(*v*) Translation um die Strecke *v* in x-Richtung. Analog für *y* und z
- *H*(*A*₁, ...,*A_{N}*) allgemeine Transformation beschreibbar durch eine homogene Matrix mit insgesamt *N* Koordinaten *A*₁ bis *A_{N}*.

Der Begriff "Koordinaten" wird hier für generalisierte, nicht notwendigerweise unabhängige Koordinaten verwendet.

Die Rotationsachse einer Verzahnung fällt in ihrem Ruhesystem immer mit der *z*-Achse zusammen. Die Verzahnungsmitte liegt bei *z* = 0.

Weiterhin wichtig für die Formulierung der Zusammenhänge ist es, die kinematischen Ketten, welche die Relativstellungen zwischen Werkstück und Werkzeug beschreiben, zu definieren. Diese hängt davon ab, ob Werkzeug bzw. Werkstück zylindrisch oder konisch ausgeführt sind. Betrachtet werden hier alle vier möglichen Kombinationen.

### Kinematische Kette für zylindrisches Werkzeug und Werkstück

Die relative Lage zwischen Werkzeug und Werkstück wird durch die folgende kinematische Kette *K_{R}* beschrieben: ${K}_{R} = {R}_{z} \left(-{φ}_{1}\right) ⋅ {T}_{z} \left(-{z}_{V 1}\right) ⋅ {T}_{y} \left(d\right) ⋅ {R}_{y} \left(γ\right) ⋅ {T}_{z} \left({z}_{V 2}\right) ⋅ {R}_{z} \left({φ}_{2}\right)$ (4)
- *φ*₁: Drehwinkel Werkzeug.
- *φ*₂: Drehwinkel Werkstück.
- *z*_{*V*1}: Axialvorschub des Werkzeugs (auch Shiftposition genannt).
- *z*_{*V*2}: Axialvorschub des Werkstücks.
- *d*: Achsabstand (Werkzeug/Werkstück)
- *γ*: Achskreuzwinkel (Werkzeug/Werkstück)

### Kinematische Kette für konisches Werkzeug und zylindrisches Werkstück

Die relative Lage zwischen Werkzeug und Werkstück wird durch die folgende kinematische Kette *K_{R}* beschrieben: ${K}_{R} = {R}_{z} \left(-{φ}_{1}\right) ⋅ {T}_{y} \left({r}_{w 1}\right) ⋅ {R}_{x} \left({ϑ}_{1}\right) ⋅ {T}_{z} \left(-{z}_{V 1}\right) ⋅ {T}_{y} \left(d\right) ⋅ {R}_{y} \left(γ\right) ⋅ {T}_{z} \left({z}_{V 2}\right) ⋅ {R}_{z} \left({φ}_{2}\right)$ (5)
- *φ*₁: Drehwinkel Werkzeug.
- *φ*₂: Drehwinkel Werkstück.
- *z*_{*V*1}: Vorschub des Werkzeug (auch Shiftposition genannt).
- *z*_{*V*2}: Axialvorschub des Werkstücks.
- *d*: Maß für Achsabstand (Werkzeug/Werkstück)
- *γ*. Achskreuzwinkel (Werkzeug/Werkstück)
- *ϑ*₁: Konuswinkel Werkzeug
- *r_{w1}*: Wälzkreisradius des Werkzeugs

### Kinematische Kette für zylindrisches Werkzeug und konisches Werkstück

Die relative Lage zwischen Werkzeug und Werkstück wird durch die folgende kinematische Kette *K_{R}* beschrieben: ${K}_{R} = {R}_{z} \left(-{φ}_{1}\right) ⋅ {T}_{z} \left(-{z}_{V 1}\right) ⋅ {T}_{y} \left(d\right) ⋅ {R}_{y} \left(γ\right) ⋅ {T}_{z} \left({z}_{V 2}\right) ⋅ {R}_{x} \left(-{ϑ}_{2}\right) ⋅ {T}_{y} \left(-{r}_{w 2}\right) ⋅ {R}_{z} \left({φ}_{2}\right)$ (6)
- *φ*₁: Drehwinkel Werkzeug.
- *φ*₂: Drehwinkel Werkstück.
- *z*_{*V*1}: Axialvorschub des Werkzeugs (auch Shiftposition genannt).
- *z*_{*V*2}: Vorschub des Werkstücks.
- *d*: Maß für Achsabstand (Werkzeug/Werkstück)
- *γ*: Achskreuzwinkel (Werkzeug/Werkstück)
- *ϑ*₂: Konuswinkel Werkstück
- *r*_{*w*2}: Wälzkreisradius des Werkstücks

### Kinematische Kette für konisches Werkzeug und konisches Werkstück

Die relative Lage zwischen Werkzeug und Werkstück wird durch die folgende kinematische Kette *K_{R}* beschrieben: $\begin{matrix}{K}_{R} = {R}_{z} \left(-{φ}_{1}\right) ⋅ {T}_{y} \left({r}_{w 1}\right) ⋅ {R}_{x} \left({ϑ}_{1}\right) ⋅ {T}_{z} \left(-{z}_{V 1}\right) ⋅ {T}_{y} \left(d\right) ⋅ {R}_{y} \left(γ\right) ⋅ {T}_{z} \left({z}_{V 2}\right) ⋅ {R}_{x} \left(-{ϑ}_{2}\right) ⋅ \\ {T}_{y} \left(-{r}_{w 2}\right) ⋅ {R}_{z} \left({φ}_{2}\right)\end{matrix}$ (7)
- *φ*₁: Drehwinkel Werkzeug.
- *φ*₂: Drehwinkel Werkstück.
- *z*_{*V*1}: Vorschub des Werkzeugs (auch Shiftposition genannt).
- *z*_{*V*2}: Vorschub des Werkstücks.
- *d*: Maß für Achsabstand (Werkzeug/Werkstück)
- *γ*: Achskreuzwinkel (Werkzeug/Werkstück)
- *ϑ*₁: Konuswinkel Werkzeug
- *ϑ*₂: Konuswinkel Werkstück
- *r*_{*w*1}: Wälzkreisradius des Werkzeugs
- *r*_{*w*2}: Wälzkreisradius des Werkstücks

Diese kinematischen Ketten dienen zunächst erst einmal nur der mathematischen Beschreibung der hier beschriebenen Erfindung. Sie müssen nicht mit den physikalischen Achsen der Maschine, auf der die Erfindung angewendet wird, übereinstimmen. Verfügt die Maschine über einen Bewegungsapparat, der Relativstellungen zwischen Werkzeug und Werkstück gemäß einer Transformation $H \left({A}_{1},…,{A}_{{N}_{s}}\right) mit {N}_{s} \geq 1$ (8) ermöglicht, so kann die Erfindung auf dieser Maschine angewendet werden, wenn zu jedem Satz an Koordinaten aus den gerade beschriebenen kinematischen Ketten, welcher in dieser Erfindung berechnet wird, Koordinaten *A*₁, ...,*A_{NS}* existieren, mit $H \left({A}_{1},…,{A}_{{N}_{s}}\right) = {K}_{R}$ (9) Die Berechnung der Koordinaten *A*₁, ...,*A_{NS}* kann mittels einer Koordinatentransformation durchgeführt werden.

Typische Bewegungsapparate, die alle geforderten Relativstellungen ermöglichen sind beispielsweise durch folgende kinematischen Ketten beschrieben: ${H}_{Bsp 1} = {R}_{z} \left({ϕ}_{B 1}\right) ⋅ {T}_{z} \left(-{v}_{V 1}\right) ⋅ {R}_{x} \left(90°-{ϕ}_{A 1}\right) ⋅ {T}_{z} \left(-{v}_{Z 1}\right) ⋅ {T}_{x} \left(-{v}_{X 1}\right) ⋅ {R}_{z} \left({ϕ}_{C 2}\right)$ (10) ${H}_{Bsp 2} = {R}_{z} \left({ϕ}_{B 1}\right) ⋅ {R}_{x} \left(90°-{ϕ}_{A 1}\right) ⋅ {T}_{z} \left(-{v}_{Y 1}\right) ⋅ {T}_{z} \left(-{v}_{Z 1}\right) ⋅ {T}_{x} \left(-{v}_{X 1}\right) ⋅ {R}_{z} \left({ϕ}_{C 2}\right)$ (11)

Figur 9 zeigt schematisch eine Verzahnmaschine mit einem durch *H*_{*Bsp*1} beschriebenen Bewegungsapparat.

Die Verzahnmaschine ist eine Kombination aus einer Bearbeitungsmaschine und einer Abrichtmaschine. Die Verzahnmaschine weist einen links dargestellten Bearbeitungskopf mit einer Werkzeugaufnahme, eine mittig dargestellte Werkstückaufnahme und eine rechts schematisch dargestellte Abrichteraufnahme auf. Zur Durchführung einer Verzahnbearbeitung kann ein in der Werkstückaufnahme eingespanntes Werkstück durch ein in der Werkzeugaufnahme eingespanntes Werkzeug bearbeitet werden. Zur Durchführung eines Abrichtverfahrens kann das in der Werkzeugaufnahme eingespannte Werkzeug durch einen in der Abrichteraufnahme eingespannten Abrichter bearbeitet werden. Dies hat den Vorteil, dass das Werkzeug zum Abrichten in der Werkzeugaufnahme verbleiben kann. Weiterhin können die Bewegungsachsen des Bearbeitungskopfes zur Einstellung der Relativposition von Werkzeug und Abrichter beim Abrichter eingesetzt werden.

Die Verzahnmaschine weist dabei die Bewegungsachsen A1, B1, V1, X1, Z1 zum Bewegen der Werkzeugaufnahme, C2 zum Bewegen der Werkstückaufnahme und B3, C5 zum Bewegen des Abrichters auf.

Im Einzelnen ermöglicht B1 eine Rotation des Werkzeugs um seine Drehachse, X1 eine translatorische Bewegung des Werkzeugs senkrecht zur Drehachse des Werkzeugs bzw. Werkstücks, Z1 eine translatorische Bewegung des Werkzeugs in vertikaler Richtung bzw. parallel zur Drehachse des Werkstücks, A1 eine Schwenkbewegung des Werkzeugs, V1 eine Tangentialbewegung bzw. Shiftbewegung des Werkzeugs in Richtung seiner Drehachse, C2 eine Drehbewegung des Werkstücks, B3 eine Rotationsbewegung des Abrichtwerkzeugs um seine Drehachse, sowie C5 eine Schwenkbewegung des Abrichtwerkzeugs zur Änderung des Eingriffswinkels α am Werkzeug.

Es können jedoch auch andere Verzahn- und/oder Abrichtmaschinen zur Durchführung der erfindungsgemäßen Verfahren eingesetzt werden. Während des Bearbeitungsprozesses wird die *z*_{*V*2}-Koordinate verfahren und so der Vorschub des Werkstücks realisiert. Bei zylindrischen Rädern ist dies der Axialvorschub, bei konischen Rädern ist dieser Vorschub nicht axial, sondern um den Konuswinkel *ϑ*₂ gegenüber der Achse der Verzahnung verkippt.

Im weiteren Verlauf wird jedoch auch für zylindrische Werkzeuge bzw. Werkstücke für *z*_{*V*1} bzw. *z*_{*V*2} der Begriff Vorschub verwendet.

Die vier möglichen Kombinationen aus zylindrischen bzw. konischen Werkzeugen und Werkstücken werden separat betrachtet. Ausgangspunkt ist jeweils die mathematische Beschreibung des Verlaufs des Kontaktpunkts auf Werkzeug und Werkstück beim Wälzschleifen als Relation zwischen dem Wälzweg (*w*) und der Position in Breitenlinienrichtung (*z*) in Abhängigkeit der Vorschubpositionen *z*_{*V*1} und *z*_{*V*2}.

Vorbereitend hierfür werden zunächst die hierfür benötigten Modifikationen auf den Schnecken sowie deren Erzeugung mittels Abrichten diskutiert.

Die Werkzeuge, zylindrische und konische Schnecken, symmetrisch oder asymmetrisch, welche hier betrachtet werden, haben eine Modifikation gemäß Gleichung (1). Diese Art der Modifikation ist bei abrichtbaren Schnecken sehr vorteilhaft, da sich diese leicht beim Abrichten mit einer Abrichtscheibe auf der Schnecke erzeugen lässt. Beim Abrichten mit einer Abrichtscheibe besteht ein Linienkontakt zwischen Abrichtscheibe und den Flanken der Schnecke. Beschreibt man diese Berührlinie als Relation zwischen *w*_{*F*1} und *z*_{*F*1} für beide Flanken, so erhält man in sehr guter Näherung eine Gerade, gegeben durch: ${w}_{F 1} {sinρ}_{F 1} + {z}_{F 1} {cosρ}_{F 1} = {X}_{F 1} .$ (12) *ρ*_{*F*1} definiert die Richtung dieser Geraden. Diese kann durch die Gangzahl, den Durchmesser der Schnecke, den Durchmesser der Abrichtscheibe, den Profilwinkel der Schnecke und die Relativstellung der Schnecke zum Abrichter geringfügig beeinflusst werden.

*X*_{*F*1} definiert die Lage der Geraden auf der Schnecke. Während die Schnecke entlang ihrer Länge abgerichtet wird, verändert sich *X*_{*F*1} entsprechend. Werden während des Abrichtvorgangs Korrekturen der Relativstellung zwischen Schnecke und Abrichtscheibe vorgenommen, so lassen sich Modifikationen auf der Schnecke aufbringen. Diese Korrekturen wirken sich immer entlang der aktuellen Berührlinie aus.

Die relative Lage zwischen Schnecke und Abrichter wird durch die folgende kinematische Kette *K_{BR}* beschrieben: ${K}_{BR} = {R}_{z} \left(-{φ}_{S}\right) ⋅ {T}_{z} \left(-{z}_{S}\right) ⋅ {R}_{x} \left(-{γ}_{B}\right) ⋅ {T}_{x} \left(-d\right) ⋅ {T}_{y} \left({y}_{A}\right) ⋅ {R}_{z} \left({φ}_{A}\right)$ (13)
- *φ_{S}*: Drehwinkel Schnecke
- *φ_{A}*: Drehwinkel Abrichter
- *y_{A}*: y-Position des Abrichters
- *z_{S}*: Axiale Position der Schnecke
- *d*: Achsabstand
- *γ_{B}*: Achskreuzwinkel

Diese kinematische Kette dient zunächst erst einmal nur der mathematischen Beschreibung der hier beschriebenen Erfindung. Sie muss nicht mit den physikalischen Achsen der Maschine, auf der die Erfindung angewendet wird, übereinstimmen. Verfügt die Maschine über einen Bewegungsapparat, der Relativstellungen zwischen Schnecke und Abrichter gemäß einer Transformation $H \left({B}_{1},…,{B}_{{N}_{A}}\right) mit {N}_{A} \geq 1$ (14) ermöglicht, so kann die Erfindung auf dieser Maschine angewendet werden, wenn zu jedem Satz an Koordinaten aus der gerade beschriebenen kinematischen Kette, welcher in dieser Erfindung berechnet wird, Koordinaten *B*₁,...,*B_{NA}* existieren, mit $H \left({B}_{1},…,{B}_{{N}_{A}}\right) = {K}_{BR}$ (15) Die Berechnung der Koordinaten *B₁,...,B_{NA}* kann mittels einer Koordinatentransformation durchgeführt werden.

Typische Bewegungsapparate, die alle geforderten Relativstellungen ermöglichen sind beispielsweise durch folgende kinematischen Ketten beschrieben: ${H}_{BBsp 1} = {R}_{z} \left(-{φ}_{B 1}\right) ⋅ {T}_{z} \left(-{v}_{V 1}\right) ⋅ {R}_{x} \left(-{φ}_{A 1}\right) ⋅ {T}_{x} \left(-{v}_{X 1}\right) ⋅ {T}_{y} \left({v}_{Z 1}\right) ⋅ {R}_{y} \left({φ}_{C 5}\right) ⋅ {R}_{z} \left({φ}_{B 3}\right)$ (16) ${H}_{BBsp 2} = {R}_{z} \left(-{φ}_{B 1}\right) ⋅ {T}_{z} \left(-{v}_{V 1}\right) ⋅ {R}_{x} \left(-{φ}_{A 1}\right) ⋅ {T}_{x} \left(-{v}_{X 1}\right) ⋅ {T}_{y} \left({v}_{Z 1}\right) ⋅ {R}_{z} \left({φ}_{B 3}\right)$ (17) Figur 9 zeigt schematisch eine Verzahnmaschine mit einem durch *H*_{*BBsp*1} bzw. *H*_{*BBSp*2} beschriebenen Bewegungsapparat.
- Achsabstand und/oder
- Axiale Position der Schnecke und/oder
- *y*-Position des Abrichters und/oder
- Drehwinkel der Schnecke und/oder
- Achskreuzwinkel zwischen der Schnecken- und der Abrichterachse
können so korrigiert werden, dass eine konstante Modifikation entlang der aktuellen Berührlinie erzeugt wird.

Wird eine Schnecke nicht modifiziert abgerichtet, so werden nur die axiale Position der Schnecke und über die Steigungshöhe der Schnecke gekoppelt der Drehwinkel der Schnecke während des Abrichtvorgangs verändert. Dadurch wandert die Berührlinie gemäß einer Schraubenline entlang der Schneckenlänge und überstreicht einen gewissen Bereich der Flanke und richtet diesen ab. *X*_{*F*1} ist somit eine Funktion der axialen Position der Schnecke: ${X}_{F 1} = {X}_{F 1} \left({z}_{S}\right)$ (18)

Dieser Zusammenhang gilt sowohl für das einflankige als auch für das zweiflankige Abrichten.

Wird zweiflankig abgerichtet, so können die Korrekturen der Relativstellung so gewählt werden, dass auf beiden Flanken der Schnecke unabhängig von einander in gewissen Grenzen beliebige konstante Modifikationen *f*_{*t*/1} und *f*_{*fr*1} entlang der aktuellen Berührlinien links und rechts aufgebracht werden. Diese, in gewissen Grenzen freie Wahl der Modifikationen auf linker und rechter Flanke rührt daher, dass die oben beschriebenen Korrekturen der Relativstellung sich nicht alle gleichsam auf linke und rechte Flanke auswirken. Beispielsweise führt eine Änderung des Achsabstands zu einer Modifikation auf linker und rechter Flanke mit gleichem Vorzeichen, im Fall einer symmetrischen zylindrischen Schnecke auch mit gleichem Betrag. Eine Änderung des Drehwinkels der Schnecke hingegen führt zu einer Modifikation auf linker und rechter Flanke mit unterschiedlichen Vorzeichen, im Fall einer symmetrischen zylindrischen Schnecke mit gleichem Betrag. Somit können beispielsweise Achsabstand und Drehwinkel der Schnecke so eingestellt werden, dass die gewünschten Modifikationen *f*_{*tl*1} und *f*_{*tr*1} entlang der aktuellen Berührline erreicht werden. Allgemein lässt sich dies wie folgt beschreiben: Verfügt die Maschine über einen, während des Abrichtvorgangs nutzbaren Bewegungsapparats mit den Koordinaten *B₁,...,B_{NA}*, welcher die Relativstellung zwischen Schnecke und Abrichtscheibe verändern kann, sodass solche Korrekturen der Relativstellung möglich sind, welche eine freie Wahl der Modifikationen auf linker und rechter Flanke ermöglichen, so sind Korrekturen Δ*B*₁, ...,*ΔB_{NA}* dieser Koordinaten im Vergleich zum Abrichten einer unmodifizierten Schnecke abhängig von *f*_{*tl*1} und *f*_{*tr*1}: $Δ {B}_{i} = Δ {B}_{i} \left({f}_{tl 1}, {f}_{tr 1}\right) mit 1 \leq i \leq {N}_{A} .$ (19) Wird eine Schnecke unmodifiziert abgerichtet, so wird nur die axiale Position der Schnecke *z_{S}*, wie oben beschreiben verändert. Diese Position wird durch die Koordinaten *B₁*, ...,*B_{NA}* eingestellt, welche, für den Fall, somit eine Funktion von *z_{S}* sind: ${B}_{i} = {B}_{i} \left({z}_{S}\right) mit 1 \leq i \leq {N}_{A} .$ (20) Aus den letzten beiden Beziehungen folgt für die Koordinaten *B₁*, ...,*B_{NA}* beim Abrichten einer Schnecke mit den hier beschriebenen Modifikationen: ${B}_{i} = {B}_{i} \left({z}_{S}\right) + Δ {B}_{i} \left({f}_{tl 1}, {f}_{tr 1}\right) mit 1 \leq i \leq {N}_{A} .$ (21) Die Korrekturen der Koordinaten *B₁*, ...,*ΔB_{NA}* verursachen im Allgemeinen neben der Modifikation auf der Schnecke auch eine leichte Verschiebung der Lage der aktuellen Berührline gegenüber dem Abrichten einer unmodifizierten Schnecke. Gleichung (18) muss für das Abrichten modifizierter Schnecken somit um eine Abhängigkeit von *ΔB*₁, ...,*ΔB_{NA}* erweitert werden: ${X}_{F 1} = {X}_{F 1} \left({z}_{S},Δ{B}_{1},…,Δ{B}_{{N}_{A}}\right)$ (22 Für das hier beschriebene Verfahren, werden Schnecken benötig, die eine Modifikation wie in Gleichung (1) beschrieben haben, wobei die Richtung *ρ_{F}* durch die Richtung der Berührline beim Abrichten *ρ*_{*F*1} vorgegeben ist. Die Funktion F_{Ft1} ist jedoch in gewissen Grenzen eine frei vorgebbare stetige Funktion. Die oben definierten Modifikationen *f*_{*fl*1} und *f*_{*tr*1} beschreiben eine konstante Modifikation entlang der durch *ρ*_{*F*1} definierten Richtung bei einer bestimmten Lage der Berührline *X*_{*F*1} und entsprechen somit genau den Funktionen *F_{fl1}(X*_{*l*1}) und *F*_{*tr*1}(*X*_{*r*1}) für linke und rechte Flanke.

Sind die Modifikationen *F*_{*tl*1}(*X*_{*l*1}) und *F*_{*tr*1}(*X*_{*r*1}) bekannt, so lassen sich diese, zusammen mit Gleichung (19) in Gleichung (22) einsetzten: ${X}_{F 1} = {X}_{F 1} \left({z}_{S},Δ{B}_{1}\left({F}_{tl 1}\left({X}_{l 1}\right),{F}_{tr 1}\left({X}_{r 1}\right)\right),…,Δ{B}_{{N}_{A}}\left({F}_{tl 1}\left({X}_{l 1}\right),{F}_{tr 1}\left({X}_{r 1}\right)\right)\right)$ (23) Mit diesem Gleichungssystem können zu gegebener axialer Position der Schnecke z die Lagen der Berührline *X*_{*F*1}, im allgemeinen numerisch, berechnet werden. Mit Gleichung (19) lassen sich damit dann die benötigten Korrekturen der Koordinaten *ΔB*₁, ..., Δ*B_{NA}* bestimmen. Diese Berechnung wird für alle *z_{S}* durchgeführt, die nötig sind, um mit den Berührlinen auf linker und rechter Flanke den abzurichtenden Teil der Schnecke zu überstreichen.

Das hier für das zweiflankige Abrichten vorgestellte Verfahren lässt sich direkt auf das einflankige Abrichten übertragen. In dem Fall entkoppeln die Gleichungen für linke und rechte Flanke vollständig und die Berechnung kann für jede Flanke separat durchgeführt werden.

Um die nötigen Achskorrekturen Δ*K_{BR}* gemäß Gleichung (13) bzw. die Achskorrekturen *ΔB*₁, ..., Δ*B_{NA}* gemäß der physikalischen Achsen der Maschine bestimmen zu können, ist es notwendig, bestimmen zu können, welches Profil, insbesondere welche Profilmodifikation bei einem gegebenen Abrichter und gegebenen Achskorrekturen Δ*K_{BR}* auf den Flanken der Schnecke erzeugt wird. Hier wird zunächst der Fall betrachtet, bei dem Achskorrekturen während des Abrichtprozesses fest eingestellt werden und nur *z_{S}* und *φ_{S}* gemäß der Steigungshöhe der Schnecke gekoppelt gefahren werden. Die Modifikation, definiert als Abweichung in Normalenrichtung zur Zahnflanke, abhängig von den Achskorrekturen, wir hier mit *F*_{*nF*1}(*w*_{*F*1})*; ΔK_{BR}*) bezeichnet. Die Berechnung von *fn*_{*F*1}(*w*_{*F*1}; Δ*K_{BR}*) kann beispielsweise mit Hilfe einer Abrichtsimulation durchgeführt werden. Eingaben in solche Abrichtsimulationen sind neben der Abrichtergeometrie und der Abrichtkinematik in der Regel auch die Geometrie der Schnecke vor dem Abrichten. Die Schnecke vor dem Abrichten wird bei der folgenden Betrachtung so gewählt, dass sie gegenüber der Schnecke nach dem Abrichten überall auf dem Gang ein positives Aufmaß besitzt. Bei solchen Abrichtsimulationen wird typischerweise der Abrichtprozess in endlich viele Zeitschritte unterteilt und dann für jeden Zeitpunkt ermittelt, wo durch den Abrichter Material an der Schnecke abgetragen wird.

Ein möglicher Algorithmus, der in der Lage ist, alle später nötigen Informationen zu liefern, wird hier detailliert vorgestellt. Hierzu wird zunächst eine, in der Regel nicht modifizierte Schnecke betrachtet. Auf einzelnen Punkten mit den Koordinaten (*w*_{*F*1}, *z*_{*F*1}) auf den Gängen dieser Schnecke werden Vektoren in Normalenrichtung mit einer zuvor festgelegten Länge platziert. Die Länge der Vektoren entspricht dem Aufmaß der Schnecke vor dem Abrichten, bezogen auf die nicht modifizierte Schnecke. Das Aufmaß wird typischerweise so groß gewählt, dass jeder Vektor während der nachfolgend beschriebenen Simulation mindestens einmal gekürzt wird. Die Anzahl der Punkte auf den Gängen bestimmt die Genauigkeit des Ergebnisses. Bevorzugt werden diese Punkte äquidistant gewählt. Die relative Lage der Schnecke zum Abrichter wird zu jedem Zeitpunkt vorgegeben, beispielsweise durch die Koordinaten der nicht korrigierten Kinematik (*φ_{S}*,*γ_{B},d,y_{A}* und deren Korrekturen Δ*K_{BR}*. Zu jedem der diskreten Zeitpunkte wird der Schnitt aller Vektoren mit dem Abrichter berechnet. Schneidet ein Vektor den Abrichter nicht, bleibt dieser unverändert. Schneidet er jedoch den Abrichter, so wird der Schnittpunkt berechnet und der Vektor soweit gekürzt, dass er gerade an dem Schnittpunkt endet. Weiterhin wird der Abstand des Schnittpunkts von der Abrichterachse, das heißt, der Radius auf dem Abrichter *r_{A}* des Schnittpunkts berechnet und als zusätzliche Information zum gerade gekürzten Vektor abgespeichert. Da die Korrekturen der Koordinaten hier während des Abrichtens nicht verändert werden, haben, nachdem die Simulation über die ganze Breite der Schnecke durchgeführt wurde, alle Vektoren auf einem gegebenen Radius der Schnecke *r*_{*F*1} bzw. einem gegebenen Wälzweg *w*_{*F*1} annährend dieselbe Länge. Diese Länge entspricht der von den Korrekturen Δ*K_{BR}* abhängigen Modifikation *f*_{*nF*1} der Schnecke.

Die geringfügen Unterschiede in den Längen rühren daher, dass der hier beschriebene Algorithmus aufgrund der Diskretisierung der Zeit Vorschubmarkierungen verursacht. Diese Vorschubmarkierungen und somit auch die Unterschiede in den Längen der Vektoren auf einem gegebenen Radius der Schnecke können durch eine feinere Diskretisierung der Zeit, gleichbedeutend mit einer Verkürzung der Zeitschritte reduziert werden. Wird die Simulation nicht über die gesamte Breite der Schnecke durchgeführt, sondern bei einer gegebenen axialen Shiftposition *z_{S}* der Schnecke abgebrochen, so haben, für einen gegebenen Radius auf der Schnecke nur die Vektoren annährend dieselbe Länge, die von der Berührline des Abrichters mit der Schnecke bereits überstrichen wurden. Die übrigen Vektoren haben entweder noch die ursprünglich gewählte Länge oder wurden bereits mindestens einmal gekürzt, haben jedoch noch nicht die endgültige Länge, da sie zu einem späteren Zeitpunkt erneut gekürzt werden. Diese Tatsache kann genutzt werden, um die Berührline für den gegebenen Abrichter und die gegebene relative Lage der Schnecke zum Abrichter, beschrieben durch Δ*K_{BR}*, sehr genau zu bestimmen. Dazu werden alle Vektoren auf einen gegebenen Radius auf der Schnecke *r*_{*F*1} bzw. Wälzweg *w*_{*F*1} betrachtet und bestimmt, an welcher Breitenlinienposition der Übergang von Vektoren mit annährend gleicher Länge zu solchen mit davon abweichender Länger ist. Die Berührline kann so durch eine Funktion *b*_{*BRF*1} *bzw. b*_{*BwF*1}, abhängig von den Korrekturen Δ*K_{BR}* und *z_{S}* beschrieben werden. ${z}_{F 1} = {b}_{BRF 1} \left({r}_{F 1};{z}_{S},Δ{K}_{BR}\right) bzw . {z}_{F 1} = {b}_{BwF 1} \left({w}_{F 1};{z}_{S},Δ{K}_{BR}\right)$ (24) Für evolventische Schnecken kann die Berührlinie mit sehr guter Näherung durch eine Gerade in den Koordinaten (*w*_{*F*1}, *z_{F1}*) beschreiben werden ${w}_{F 1} {sinρ}_{F 1} \left(Δ{K}_{BR}\right) + {z}_{F 1} {cosρ}_{F 1} \left(Δ{K}_{BR}\right) = {X}_{F 1} \left({z}_{S},Δ{K}_{BR}\right)$ (25) wobei *ρ*_{*F*1}(Δ*K_{BR}*) die Richtung und *X*_{*F*1}(*z_{S},*Δ*K_{BR}*) die Lage der Geraden beschreibt. Die Abhängigkeit der Richtung *ρ*_{*F*1}(Δ*K_{BR}*) von den Korrekturen Δ*K_{BR}* ist nur gering, sodass in immer noch guter Näherung die Richtung als nur durch die Schnecken und Abrichtergeometrie gegeben angenommen werden kann.

Sind so die Vektoren bestimmt, entlang derer die Berührline verläuft, können die zu diesen zuvor gespeicherten Radien auf dem Abrichter *r_{FA}* ausgelesen werden und so zu jedem Radius auf der Schnecke *r*_{*F*1} ermittelt werden, von welchem Radius auf dem Abrichter *r_{FA}* dieser abgerichtet wurde. Diese Zuordnung ist abhängig von den Korrekturen Δ*K_{BR}*. ${r}_{FA} = {r}_{FA} \left({r}_{F 1};Δ{K}_{BR}\right)$ (26) Die Genauigkeit, mit der die Berührlinie und die Zuordnung der Radien auf diese Weise bestimmt werden können, hängt sowohl vom gewählten Abstand der Punkte als auch von der Länge der diskreten Zeitschritte ab. Beide können theoretisch beliebig klein gewählt werden, in der Praxis sind sie jedoch durch den verfügbaren Arbeitsspeicher und die maximal akzeptable Rechenzeit begrenzt. Mit den heute erhältlichen PCs mit mehreren Gigabyte Arbeitsspeicher und sehr schnellen Mehrkernprozessoren ist diese Berechnung in der Praxis mit hinreichender Genauigkeit möglich.

Eine Modifikation *f*_{*nF*1} an einem Punkt auf der Schnecke, definiert in Normalenrichtung auf der Schneckengangoberfläche führt zu einer Modifikation *f*_{*nF*2} = *-f*_{*nF*1} auf dem Werkstück, definiert in Normalenrichtung auf der Zahnflankenoberfläche, an dem entsprechenden Punkt auf dem Werkstück. Modifikationen auf Zahnrädern werden typischerweise im Stirnschnitt (*f_{Ft}*) definiert, nicht in Normalenrichtung (*f_{Fn}*). Zwischen diesen beiden Definitionen der Modifikationen kann jedoch leicht umgerechnet werden: ${f}_{Fn} = {f}_{Ft} ⋅ {cosβ}_{bF}$ (27)

Um, wie in Gleichung (19) beschrieben, aus *f*_{*nl*1} und *f*_{*nr*1} einen Satz an Achskorrekturen Δ *B₁, ...*,Δ*B_{NA}* zu bestimmen, kann dann *f_{F1}*(*w*_{*F*1};Δ*K_{BR}*)= *f*_{*nF*1} simultan für linke und rechte Flanke gelöst werden.

### Zylindrisches Werkzeug und zylindrisches Werkstück

Im Folgenden wird für den Fall eines zylindrischen Werkzeugs und eines zylindrischen Werkstücks aufgezeigt, wie mit Hilfe einer Schnecke, welche eine Modifikation gemäß Gleichung (1) hat, im Axialwälzschleifen eine reine Profilmodifikation erzeugt werden kann. Dazu wird zunächst der Verlauf des Kontaktpunkts zwischen Werkstück und Schnecke, abhängig von den Axialvorschüben *z*_{*V*1} und *z*_{*V*2} beschrieben. Dieser Verlauf hängt von den Grundkreisradien und Grundschrägungswinkeln des Werkstücks und der Schnecke sowie vom Achsabstand *d* und dem Achskreuzwinkel *γ* ab. Die Relative Lage von Werkstück zu Schnecke wird bei dieser Betrachtung durch Gleichung (4) beschrieben. Mathematisch beschrieben werden kann dieser Verlauf als Relation (R6) zwischen Position in Breitenlinienrichtung (*z_{F}*) und Wälzweg (*w_{F}*) für Schnecke (Index 1) und Werkstück (Index 2) wie folgt: ${z}_{F 1} = {C}_{Fw 1} ⋅ {w}_{F 1} - {z}_{V 1} + {C}_{Fc 1}$ (28) ${z}_{F 2} = {C}_{Fw 2} ⋅ {w}_{F 2} - {z}_{V 2} + {C}_{Fc 2}$ (29) Die hier eingeführten Koeffizienten *C*_{*Fw*1}, *C*_{*Fc*1}, *C*_{*Fw*2} und *C*_{*Fc*2} haben folgende Abhängigkeiten: ${C}_{Fw 1} = {C}_{Fw 1} \left({β}_{bF 1}\right)$ (30) ${C}_{Fc 1} = {C}_{Fc 1} \left({β}_{bF 1}, {β}_{bF 2}, {r}_{bF 1}, d, γ\right)$ (31) ${C}_{Fw 2} = {C}_{Fw 2} \left({β}_{bF 2}\right)$ (32) ${C}_{Fc 2} = {C}_{Fc 2} \left({β}_{bF 1}, {β}_{bF 2}, {r}_{bF 2}, d, γ\right)$ (33) Diese Relation zeigt auf, dass es einen linearen Zusammenhang zwischen *z_{F}, w_{F}* und z*_{V}* sowohl für Schnecke aus auch für Werkstück gibt.

Betrachtet man im Herstellprozesses alle Punkte auf dem Werkstück mit einen festen Wälzweg *w*_{*F*2}, so berühren all diese Punkte auf der Schnecke nur Punkte mit einem daraus resultierenden Wälzweg *w*_{*F*1}. Die Relation (R7) zwischen den Wälzwegen sich berührender Punkte auf Schnecke und Werkstück ist gegeben durch: ${\hat{C}}_{Fw 1} ⋅ {w}_{F 1} + {\hat{C}}_{Fw 2} ⋅ {w}_{F 2} + {\hat{C}}_{Fc} = 0$ (34) Die hier eingeführten Koeffizienten *Ĉ*_{*Fw*1}, *Ĉ*_{*Fw*2} und *Ĉ_{Fc}* haben folgende Abhängigkeiten: ${\hat{C}}_{Fw 1} = {\hat{C}}_{Fw 1} \left({β}_{bF 1}\right)$ (35) ${\hat{C}}_{Fw 2} = {\hat{C}}_{Fw 2} \left({β}_{bF 2}\right)$ (36) ${\hat{C}}_{Fc} = {\hat{C}}_{Fc} \left({β}_{bF 1}, {r}_{bF 1}, {β}_{bF 2}, {r}_{bF 2}, d, γ\right)$ (37)

Die gerade vorgestellten Relationen folgen direkt aus einer analytischen Berechnung der Berührpunkte zweier Evolventenverzahnungen, welche gemäß der kinematischen Kette aus Gleichung (4) zueinander orientiert sind.

Die Grundidee der Erfindung liegt nun darin, die obigen Beziehungen zu nutzen, um jedem Punkt auf dem Werkstück einen Punkt auf der Schnecke zuzuordnen. Dabei wird ausgenutzt, dass die Schnecke eine in gewissen Grenzen beliebige Modifikation gemäß Gleichung (1) aufweisen kann und auf dem Werkstück eine Profilmodifikation erzeugt werden soll.

Betrachtet wird dazu ein Wälzweg *w*_{*F*2} auf dem Werkstück für eine gegebene Shiftposition *z*_{*V*1} der Schnecke. Mit Gleichung (34) lässt dich daraus der Wälzweg *w*_{*F*1} auf der Schnecke bestimmen, mit Gleichung (28) die Breitenlinienposition *z*_{*F*1}. Damit wird jeder Wälzweg auf dem Werkstück unabhängig von *z*_{*V*2} auf einen Punkt auf dem Kontaktpfad auf der Schnecke abbilden. Aus *w*_{*F*1} und *z*_{*F*1} lässt sich mit Gleichung (2) *X*_{*F*1} bestimmen und somit *w*_{*F*2} auf *X*_{*F*1} abbilden. Für die nötige Modifikation *F*_{*Ft*1} auf der Schnecke ergibt sich: ${F}_{Ft 1} \left({X}_{F 1}\right) = - \frac{{cosβ}_{{bF}_{2}}}{{cosβ}_{{bF}_{1}}} ⋅ {f}_{Ft 2} \left({w}_{F 2}\right)$ (38) Für gegebenes *z*_{*V*1} folgt aus Gleichung (28) ${z}_{F 1} - {C}_{Fw 1} ⋅ {w}_{F 1} = const$ (39) was gleichbedeutend damit ist, dass der Kontaktpfad auf der Schnecke während eines Hubs nicht verschoben wird.

Mit Hilfe der Figur 2 soll nun das Prinzip anschaulich am Beispiel einer linearen Kopfrücknahme ohne Übergangsbereich dargestellt werden. Die Figur zeigt die topologische Oberflächenmodifikation einer Schnecke, aufgetragen über w und z. 22 markiert den Kontaktpfad entlang dem die Schnecke theoretischen Punktkontakt mit dem Werkstück hat. Der Bereich 20 auf der Schnecke ist nicht modifiziert, der Bereich 21 ist modifiziert, wobei *F*_{*Ft*1} eine lineare Fuktion in *X*_{*F*1} ist. Die Kontaktline 26 zwischen Abrichter und Schnecke ist durch das *X*_{*F*1} gegeben, welches dem Wälzweg *w*_{*F*2} am Fußformkreis des Werkstücks entspricht. Diese Kontaktline schneidet den Kontaktpfad 22 an dem Punkt auf der Schnecke, der den Fußformkreis der Verzahnung bearbeitet. Analog schneidet die Berührline 27 den Kontaktpfad 22 an dem Punkt auf der Schnecke, der den Kopfformkreis des Werkstücks bearbeitet und Berührline schneidet den Kontaktpfad 22 an dem Punkt auf der Schnecke, der den Knick am Beginn der Kopfrücknahme bearbeitet. Dadurch wird deutlich, dass die verschiedenen Durchmesser auf dem Werkstück durch Punkte auf der Schnecke gefertigt werden, welche zu unterschiedlichen Zeitpunkten abgerichtet wurden und somit unterschiedlich modifiziert sein können.

### Konisches Werkzeug und zylindrisches Werkstück

Bisher ist Wälzschleifen nur mit zylindrischen Schnecken bekannt. Es ist jedoch auch möglich, konische Schnecken als Werkzeug einzusetzen. Die Kinematik dieses Prozesses kann durch ein Schraubwälzgetriebe mit einem konischen und einem zylindrischen Rad beschrieben werden. Diese Kinematik wird durch die in Gleichung (5) angegebene kinematische Kette beschrieben. Wie beim Schraubwälzgetriebe, bestehend aus zwei zylindrischen Rädern, gibt es auch hier zwischen beiden Rädern einen theoretischen Punktkontakt. Dies erlaubt es, denselben Ansatz wie für zylindrische Werkzeuge zu verwenden. d.h. es wird eine Schnecke mit einer Modifikation gemäß Gleichung (1) im Diagonalwälzverfahren verwendet, um auf dem Werkstück eine Modifikation ebenfalls gemäß Gleichung (1) zu erzeugen. Der Verlauf des Kontaktpunkts zwischen Werkstück und Schnecke kann wie folgt mathematisch beschrieben werden. ${z}_{F 1} = {C}_{Fw 1} ⋅ {w}_{F 1} + {C}_{{Fz}_{V 1} 1} ⋅ {z}_{V 1} + {C}_{Fc 1}$ (40) ${z}_{F 2} = {C}_{Fw 2} ⋅ {w}_{F 2} + {C}_{{Fz}_{V 1} 2} ⋅ {z}_{V 1} - {z}_{V 2} + {C}_{Fc 2}$ (41) **Die hier eingeführten** Koeffizienten *C*_{*Fw*1}, *C*_{*Fc*1}, *C*_{*Fw*2}, *C*_{*FzV*1} 1, *C*_{*FzV*12} und *C*_{*Fc*2} haben folgende Abhängigkeiten: ${C}_{Fw 1} = {C}_{Fw 1} \left({β}_{bF 1}\right)$ (42) ${C}_{Fc 1} = {C}_{Fc 1} \left({β}_{bF 1}, {β}_{bF 2}, {r}_{bF 1}, d, γ, {ϑ}_{1}\right)$ (43) ${C}_{Fw 2} = {C}_{Fw 2} \left({β}_{bF 2}\right)$ (44) ${C}_{Fc 2} = {C}_{Fc 2} \left({β}_{bF 1}, {β}_{bF 2}, {r}_{bF 2}, d, γ, {ϑ}_{1}\right)$ (45) ${C}_{{Fz}_{V 1} 1} = {C}_{{Fz}_{V 1} 1} \left({β}_{bF 1}, {β}_{bF 2}, {r}_{bF 1}, d, γ, {ϑ}_{1}\right)$ (46) ${C}_{{Fz}_{V 1} 2} = {C}_{{Fz}_{V 1} 2} \left({β}_{bF 1}, {β}_{bF 2}, {r}_{bF 2}, d, γ, {ϑ}_{1}\right)$ (47)

Gleichung (34) wird ersetzt durch: ${\hat{C}}_{Fw 1} ⋅ {w}_{F 1} + {\hat{C}}_{Fw 2} ⋅ {w}_{F 2} + {\hat{C}}_{{Fz}_{V 1}} ⋅ {z}_{V 1} + {\hat{C}}_{Fc} = 0$ (48) Die hier eingeführten Koeffizienten *Ĉ*_{*Fw*1}, *C*_{*Fw*2}, *Ĉ*_{*FzV*1} und *Ĉ_{Fc}* haben folgende Abhängigkeiten: ${\hat{C}}_{Fw 1} = {\hat{C}}_{Fw 1} \left({β}_{bF 1}\right)$ (49) ${\hat{C}}_{Fw 2} = {\hat{C}}_{Fw 2} \left({β}_{bF 2}\right)$ (50) ${\hat{C}}_{{Fz}_{V 1}} = {\hat{C}}_{{Fz}_{V 1}} \left({β}_{bF 1}, {r}_{bF 1}, {β}_{bF 2}, {r}_{bF 2}, γ, {ϑ}_{1}\right)$ (51) ${\hat{C}}_{Fc} = {\hat{C}}_{Fc} \left({β}_{bF 1}, {r}_{bF 1}, {β}_{bF 2}, {r}_{bF 2}, d, γ, {ϑ}_{1}\right)$ (52) Mit der Kenntnis dieser Beziehungen kann analog zum Fall zylindrischer Werkzeuge und Werkstücke eine Abbildung von Punkten auf der Schnecke zu Punkten auf dem Werkstück berechnet werden. Nimmt man hier wieder eine Modifikation auf der Schnecke gemäß Gleichung (1) an, so kann *F*_{*Ft*1} analog zum rein zylindrischen Fall so bestimmt werden, dass auf dem Werkstück eine reine Profilmodifikation *f*_{*Ft*2} erzeugt wird. Dazu kann analog zu jedem *w*_{*F*2} mit den obigen Beziehungen das entsprechende *X*_{*F*1} berechnet werden.

### Zylindrisches Werkzeug und konisches Werkstück

Das hier beschriebene Verfahren lässt sich auf das Wälzschleifen konischer Werkstücke übertragen, wobei hier im Allgemeinen im Diagonalwälzverfahren geschliffen werden muss. Zunächst wird hier der Fall einer zylindrischen Schnecke betrachtet, welche eine Modifikation gemäß Gleichung (1) aufweist. Schnecke und Werkstück bilden wieder ein Schraubwälzgetriebe, dessen Kinematik durch Gleichung (6) gegeben ist. Auch hier liegt wieder theoretischer Punktkontakt zwischen Schnecke und Werkstück vor. Der Verlauf des Kontaktpunkts zwischen Werkstück und Schnecke kann wie folgt mathematisch beschrieben werden. ${z}_{F 1} = {C}_{Fw 1} ⋅ {w}_{F 1} - {z}_{V 1} + {C}_{{Fz}_{V 2} 1} ⋅ {z}_{V 2} + {C}_{Fc 1}$ (53) ${z}_{F 2} = {C}_{Fw 2} ⋅ {w}_{F 2} + {C}_{{Fz}_{V 2} 2} ⋅ {z}_{V 2} + {C}_{Fc 2}$ (54) **Die hier eingeführten** Koeffizienten *C*_{*Fw*1}, *C*_{*Fc*1}, *C*_{*Fw*2}, *C*_{*Fz*V22}, *C*_{*FzV*21} und *C*_{*Fc*2} haben folgende Abhängigkeiten: ${C}_{Fw 1} = {C}_{Fw 1} \left({β}_{bF 1}\right)$ (55) ${C}_{Fc 1} = {C}_{Fc 1} \left({β}_{bF 1}, {β}_{bF 2}, {r}_{bF 1}, d, γ, {ϑ}_{2}\right)$ (56) ${C}_{Fw 2} = {C}_{Fw 2} \left({β}_{bF 2}\right)$ (57) ${C}_{Fc 2} = {C}_{Fc 2} \left({β}_{bF 1}, {β}_{bF 2}, {r}_{bF 2}, d, γ, {ϑ}_{2}\right)$ (58) ${C}_{{Fz}_{V 2} 2} = {C}_{{Fz}_{V 2} 2} \left({β}_{bF 1}, {β}_{bF 2}, {r}_{bF 2}, d, γ, {ϑ}_{2}\right)$ (59) ${C}_{{Fz}_{V 2} 1} = {C}_{{Fz}_{V 2} 1} \left({β}_{bF 1}, {β}_{bF 2}, {r}_{bF 1}, d, γ, {ϑ}_{2}\right)$ (60)

Gleichung (34) wird ersetzt durch: ${\hat{C}}_{Fw 1} ⋅ {w}_{F 1} + {\hat{C}}_{Fw 2} ⋅ {w}_{F 2} + {\hat{C}}_{{Fz}_{V 2}} ⋅ {z}_{V 2} + {\hat{C}}_{Fc} = 0$ (61) Die hier eingeführten Koeffizienten *Ĉ*_{*Fw*1}, *C*_{*Fw*2}, *Ĉ*_{*FzV*2} und *Ĉ_{Fc}* haben folgende Abhängigkeiten: ${\hat{C}}_{Fw 1} = {\hat{C}}_{Fw 1} \left({β}_{bF 1}\right)$ (62) ${\hat{C}}_{Fw 2} = {\hat{C}}_{Fw 2} \left({β}_{bF 2}\right)$ (63) ${\hat{C}}_{{Fz}_{V 2}} = {\hat{C}}_{{Fz}_{V 2}} \left({β}_{bF 1}, {r}_{bF 1}, {β}_{bF 2}, {r}_{bF 2}, γ, {ϑ}_{2}\right)$ (64) ${\hat{C}}_{Fc} = {\hat{C}}_{Fc} \left({β}_{bF 1}, {r}_{bF 1}, {β}_{bF 2}, {r}_{bF 2}, d, γ, {ϑ}_{2}\right)$ (65)

Im Fall konischer Werkstücke zeigt Gleichung (53), dass die Relation zwischen *z*_{*F*1,} *w*_{*F*1} und *z*_{*V*1} zusätzlich eine Abhängigkeit von *z*_{*V*2} hat. Dies führt dazu, dass Gleichung (39) für festes *z*_{*V*1} im Allgemeinen nicht mehr gilt und *z*_{*F*1} *- C*_{*Fw*1} · *w*_{*F*1} von *z*_{*V*2} abhängt, wodurch der Kontaktpfad während eines Hubs auf der Schnecke verschoben wird. Um erfindungsgemäß den Kontaktpfad auf der Schnecke fest zu halten, kann das Diagonalwälzschleifen angewandt werden, bei dem während eines Hubs *z*_{*V*1} linear von *z*_{*V*2} abhängt. Wird mit einem konstanten Diagonalverhältnis geschliffen, so ist *z*_{*V*1} eine Funktion von *z*_{*V*2} und es gilt folgender Zusammenhang: ${z}_{V 1} \left({z}_{V 2}\right) = {K}_{{Z}_{V 1}} ⋅ {z}_{V 2} + {z}_{V 01}$ (66)

*K*_{*zV*1} ist hierbei das Diagonalverhältnis und *z*_{*V*01} ein fixer Offset, der es ermöglicht, die hier beschriebenen Modifikationen auf unterschiedlichen Stellen auf der Schnecke zu platzieren bzw. den Bereich auf der Schnecke auszuwählen, der genutzt werden soll. Ist *K*_{*zV*1} ≠ 0 wird vom Diagonalwälzverfahren gesprochen. Aus Gleichung (53) folgt direkt, *K*_{*ZV*1} = *C*_{*FzV*21}, um einen nicht verschobenen Kontaktpfad zu erreichen. Im Allgemeinen ergibt sich jedoch durch diese Bedingung ein unterschiedliches Diagonalverhältnis für linke und rechte Flanke. Somit ist ein Wälzschleifen mit dem erfindungsgemäßen Verfahren zunächst nur einflankig möglich.
Ersetzt man in Gleichung (53) *z*_{*V*1} gemäß Gleichung (66), so ergibt sich eine Relation zwischen *z*_{*F*1} und *w*_{*F*1} unabhängig von *z*_{*V*2}, sodass der oben aufgezeigte Rechenansatz wieder eine Relation zwischen *w*_{*F*2} und *X*_{*F*1} liefert. Im Fall konischer Werkstücke ist diese Relation jedoch im Allgemeinen nicht mehr unabhängig von *z*_{*F*2}, was aus der Abhängigkeit der Relation in Gleichung (61) von *z*_{*V*2} folgt, welche durch Gleichung (54) eliminiert werden kann. Auf Grund der Konizität ist es jedoch üblich, dass sich die gewünschte Lage einer Profilmodifikation auf dem Werkstück über die Verzahnbreite verschiebt. So ist beispielsweise der gewünschte Beginn einer Kopfrücknahme an der Ferse an einem größeren Wälzweg als an der Zehe. Aus den obigen Gleichungen ergibt sich direkt, dass die Beziehung zwischen *w*_{*F*2}, *z*_{*F*2} und *X*_{*F*1} linear ist, somit würde sich beispielsweise der Beginn einer Kopfrücknahme, welche mit dem hier beschriebenen Verfahren erzeugt wird, linear im Wälzweg über die Breite des Werkstückes verändern und somit beschreibt der Beginn der Kopfrücknahme in einem w-z-Diagramm des Werkstücks eine Gerade. Die Richtung dieser Geraden kann durch die Makrogeometrie der Schnecke, insbesondere des Profilwinkels beeinflusst werden. Eine solche Profilwinkeländerung der Schnecke ist möglich, solange weiterhin Schnecke und Werkstück miteinander kämen. Eine weitere Möglichkeit, die Richtung dieser Geraden gezielt zu beeinflussen, wäre der Einsatz eines Diagonalwälzverfahrens, bei dem der Kontaktpfad auf der Schnecke während eines Hubs verschoben wird und so unterschiedliche Bereiche der Schnecke, welche vorzugsweise unterschiedliche modifiziert sind, genutzt werden. Ein solches Verfahren wird in der DE10 2015 000 907 beschrieben. Eine solche Modifikation auf dem Werkstück würde dann wie eine dreiecksförmige Endrücknahme behandelt werden.

Ein zweiflankiges Schleifen eines konischen Werkstücks wird durch den Einsatz eines konischen Werkzeugs ermöglicht.

### Konisches Werkzeug und konisches Werkstück

Die Berechnung für ein konisches Werkzeug und ein konisches Werkstück erfolgt analog zu den bisher behandelten Kombinationen. Schnecke und Werkstück bilden wieder ein Schraubwälzgetriebe, dessen Kinematik durch Gleichung (7) gegeben ist. Auch hier liegt wieder theoretischer Punktkontakt zwischen Schnecke und Werkstück vor. Der Verlauf des Kontaktpunkts zwischen Werkstück und Schnecke kann wie folgt mathematisch beschrieben werden. ${z}_{F 1} = {C}_{Fw 1} ⋅ {w}_{F 1} + {C}_{{Fz}_{V 1} 1} ⋅ {z}_{V 1} + {C}_{{Fz}_{V 2} 1} ⋅ {z}_{V 2} + {C}_{Fc 1}$ (67) ${z}_{F 2} = {C}_{Fw 2} ⋅ {w}_{F 2} + {C}_{{Fz}_{V 1} 2} ⋅ {z}_{V 1} + {C}_{{Fz}_{V 2} 2} ⋅ {z}_{V 2} + {C}_{Fc 2}$ (68) **Die hier eingeführten** Koeffizienten *C*_{*Fw*1}, *C*_{*Fc*1}, *C*_{*Fw*2}, *C*_{*FzV*22}*, C*_{*FzV2*1}*, C*_{*FzV*12}*, C*_{*FzV1*1} und *C*_{*Fc*2} haben folgende Abhängigkeiten: ${C}_{Fw 1} = {C}_{Fw 1} \left({β}_{bF 1}\right)$ (69) ${C}_{Fc 1} = {C}_{Fc 1} \left({β}_{bF 1}, {β}_{bF 2}, {r}_{bF 1}, d, γ, {ϑ}_{1}, {ϑ}_{2}\right)$ (70) ${C}_{Fw 2} = {C}_{Fw 2} \left({β}_{bF 2}\right)$ (71) ${C}_{Fc 2} = {C}_{Fc 2} \left({β}_{bF 1}, {β}_{bF 2}, {r}_{bF 2}, d, γ, {ϑ}_{1}, {ϑ}_{2}\right)$ (72) ${C}_{{Fz}_{V 2} 2} = {C}_{{Fz}_{V 2} 2} \left({β}_{bF 1}, {β}_{bF 2}, {r}_{bF 2}, d, γ, {ϑ}_{1}, {ϑ}_{2}\right)$ (73) ${C}_{{Fz}_{V 2} 1} = {C}_{{Fz}_{V 2} 1} \left({β}_{bF 1}, {β}_{bF 2}, {r}_{bF 1}, d, γ, {ϑ}_{1}, {ϑ}_{2}\right)$ (74) ${C}_{{Fz}_{V 1} 2} = {C}_{{Fz}_{V 1} 2} \left({β}_{bF 1}, {β}_{bF 2}, {r}_{bF 2}, d, γ, {ϑ}_{1}, {ϑ}_{2}\right)$ (75) ${C}_{{Fz}_{V 1} 1} = {C}_{{Fz}_{V 1} 1} \left({β}_{bF 1}, {β}_{bF 2}, {r}_{bF 1}, d, γ, {ϑ}_{1}, {ϑ}_{2}\right)$ (76)

Gleichung (34) wird ersetzt durch: ${\hat{C}}_{Fw 1} ⋅ {w}_{F 1} + {\hat{C}}_{Fw 2} ⋅ {w}_{F 2} + {\hat{C}}_{{Fz}_{V 1}} ⋅ {z}_{V 1} + {\hat{C}}_{{Fz}_{V 2}} ⋅ {z}_{V 2} + {\hat{C}}_{Fc} = 0$ (77) **Die hier eingeführten** Koeffizienten *Ĉ*_{*Fw*1}, *C*_{*Fw*2}, *Ĉ*_{*FzV*1}*,Ĉ*_{*FzV*2} und *Ĉ_{Fc}* haben folgende Abhängigkeiten: ${\hat{C}}_{Fw 1} = {\hat{C}}_{Fw 1} \left({β}_{bF 1}\right)$ (78) ${\hat{C}}_{Fw 2} = {\hat{C}}_{Fw 2} \left({β}_{bF 2}\right)$ (79) ${\hat{C}}_{{Fz}_{V 1}} = {\hat{C}}_{{Fz}_{V 1}} \left({β}_{bF 1}, {r}_{bF 1}, {β}_{bF 2}, {r}_{bF 2}, γ, {ϑ}_{1}, {ϑ}_{2}\right)$ (80) ${\hat{C}}_{{Fz}_{V 2}} = {\hat{C}}_{{Fz}_{V 2}} \left({β}_{bF 1}, {r}_{bF 1}, {β}_{bF 2}, {r}_{bF 2}, γ, {ϑ}_{1}, {ϑ}_{2}\right)$ (81) ${\hat{C}}_{Fc} = {\hat{C}}_{Fc} \left({β}_{bF 1}, {r}_{bF 1}, {β}_{bF 2}, {r}_{bF 2}, d, γ, {ϑ}_{1}, {ϑ}_{2}\right)$ (82) Auch für konische Werkzeuge zeigt Gleichung (67) eine zusätzliche Anhängigkeit von *z*_{*V*2}, sodass ein nicht verschobener Kontaktpfad erneut nur durch ein Diagonalwälzschleifen erzielt werden kann. Für das Diagonalverhältnis folgt aus Gleichung (67) *K*_{*ZV*1} = *C*_{*FzV*21}/ *C*_{*FzV*11}. Damit kann der der Rechenansatz für zylindrische Werkzeuge und konische Werkstücke wieder angewandt werden, welcherauch hier wieder zu einer Relation zwischen *w*_{*F*2} und *X_{F1}*, welche wieder im Allgemeinen nicht mehr unabhängig von *z*_{*F*2} ist. Auch hier liegen die Punkte, welche demselben *X*_{*F*1} zugeordnet sind, auf einer Geraden, wodurch die im Allgemeinen gewünschte Verschiebung der Lage der Profilmodifikation über die Verzahnbreite im w-z-Diagramm bei konischen Verzahnungen erreicht wird. Die Richtung dieser Gerade kann hier durch Änderung des Profilwinkels der Schnecke und/oder Änderung des Konuswinkels *ϑ*₁ der Schnecke beeinflusst werden.

Im Allgemeinen ist auch hier das berechnete Diagonalverhältnis für linke und rechte Flanke unterschiedlich, sodass nur ein einflankiges Schleifen möglich ist. Es ist jedoch möglich, die Geometrie der Schnecke, insbesondere den Konuswinkels *ϑ*₁ und/oder den Profilwinkel der Schnecke so zu wählen, dass das Diagonalverhältnis für beide Seiten gleich ist, wodurch ein zweiflankiges Schleifen möglich wird. Insbesondere der Konuswinkel *ϑ*₁ beeinflusst das Diagonalverhältnis auf beiden Seiten unterschiedlich. Die Abhängigkeit des Diagonalverhältnisses von der Geometrie des Werkzeugs ergibt sich aus den entsprechenden Abhängigkeiten der Koeffizienten *C*_{*FzV*21} und *C*_{*FzV*11}.

Auch hier bietet der Übergang zum Diagonalwälzschleifen mit einem abweichenden Diagonalverhältnis eine weitere Möglichkeit, welche ebenfalls in der DE10 2015 000 907 beschreiben ist.

### Berechnungsansatz zur Berechnung der Kontaktpfade auf Werkzeug und Werkstück

Im Folgenden wird ein Berechnungsansatz aufgezeigt, mit dem sich die oben verwendeten Kontaktpfade, abhängig von den Vorschüben berechnen lassen. Diese Berechnung der Berührung zwischen Werkstück und Werkzeug wird mit Hilfe zweier theoretischer Zahnstangen (auch Planverzahnungen genannt), je einer für Werkstück und Werkzeug, jeweils mit trapezförmigen im Allgemeinen asymmetrischen Profilen, welche die Verzahnungen generieren können, durchgeführt. Da sowohl Werkzeug als auch Werkstück Evolventenverzahnungen sind, ist diese Betrachtung symmetrisch gegen Vertauschen von Werkzeug und Werkstück.

Figur 7 zeigt beispielhaft die Berührung einer rechten evolventischen Flanke mit einer generierenden Zahnstange mit Profilwinkel *α_{twr}* im Stirnschnitt. Die Verzahnung ist um den Drehwinkel *φ* gedreht. Die Berührung zwischen Flanke und Zahnstange findet in der Eingriffsebene *Pᵣ* statt, welche um *α_{twr}* geneigt ist. Der Berührpunkt zwischen Flanke und Zahnstange ergibt sich für alle Drehwinkel *φ* als Schnittpunkt zwischen Flanke und Eingriffsebene. Während die Verzahnung dreht, wird die Zahnstange waagerecht verschoben, so dass sie schlupffrei auf dem Wälzkreis mit Radius *r_{w}* abrollt. Dadurch bleiben Flanke und Zahnstange in Berührung. Um die Verzahnung in ihrer ganzen Breite zu beschreiben, muss die relative Lage der Zahnstange zur Verzahnung in 3D betrachtet werden. Für zylindrische Verzahnungen wird diese um den Schrägungswinkel *β_{w}* geschwenkt. Für den Fall einer konischen Verzahnung ist die Lage der Zahnstange zur Verzahnung in [Zierau] (Die geometrische Auslegung konischer Zahnräder und Paarungen mit parallelen Achsen, Bericht Nr. 32, Institut für Konstruktionslehre, Technische Universität Braunschweig) ausführlich beschrieben. Zusätzlich zum Schwenken um den Schrägungswinkel β, erfolgt ein Kippen um den Konuswinkel *ϑ* (siehe Figur 6). In beiden Fällen hat die Zahnstange im Normalschnitt die Profilwinkel *α_{nwF}*. Welche Kombinationen von Winkeln *α_{twF}, α_{nwF}* und *β_{w}* sowie Normalmodul *mₙ* und Stirnmodul *mₜ* möglich sind, um eine gegebene Verzahnung zu erzeugen, ergibt sich für zylindrische Verzahnungen aus dem Formelwerk der DIN3960 und für konische zusätzlich aus dem Formelwerk aus [Zierau]. Die hierzu nötigen Formeln lassen sich durch Einführung unterschiedlicher Profilwinkel auf linker und rechter Seite direkt auf asymmetrische Verzahnungen übertragen.

Sind Geometrie und relative Lage der Zahnstange zur Verzahnung bekannt, so können die Stirnschnitte für beliebige Breitenpositionen bestimmt werden und in ihnen der Berührpunkt zwischen Zahnstange und Flanke. All diese Berührpunkte in den einzelnen Stirnschnitten bilden für einen Drehwinkel *φ* eine Gerade (Berührgerade) in der Eingriffsebene. Beschreibt man diese Berührpunkte über w und z aus der Parametrisierung in Gleichung (3), so erhält man einen linearen Zusammenhang (R1) zwischen *w, z* und *φ*. Wird die Zahnstange im Raum festgehalten, so ist es für zylindrische Verzahnungen möglich, diese in axialer Richtung zu verschieben. Dieser Axialvorschub *z_{V}* wird typischerweise für das Werkstück eingestellt, um dieses über die ganze verzahnte Breite zu bearbeiten und für das Werkzeug eingestellt, um das Diagonalverhältnis einzustellen. Damit die Verzahnung weiterhin, in der Regel zweiflankig die Zahnstange berührt, muss die Verzahnung zusätzlich zur Verschiebung um ihre Achse gedreht werden. Der Betrag der Drehung ergibt sich aus der Steigungshöhe der Verzahnung und dem Betrag der Verschiebung, der Drehsinn aus der Steigungsrichtung. Bei konischen Verzahnungen erfolgt der Vorschub *z_{V}* nicht in axialer Richtung, sondern gegenüber dieser um den Konuswinkel *ϑ* gekippt. Die für die Berechnung der Drehwinkelkorrektur nötige Steigunsghöhe errechnet sich nach derselben Formel wie für zylindrische Verzahnungen aus *β_{w}* und *mₜ*. Zur Berechnung der Berührpunkte in den einzelnen Stirnschnitten sind die Stirnschnitte, abhängig vom Axialvorschub bzw. Vorschub mit den entsprechend korrigierten Drehwinkeln zu betrachten. Für die Beschreibung der Berührpunkte ergibt sich aus (R1) ein linearer Zusammenhang (R2) zwischen *w, z, z_{V}* und *φ*.

Werden zwei Verzahnungen in einem Schraubwälzgetriebe gepaart, so müssen deren beiden Zahnstangen zu jeder Zeit deckungsgleich sein, wie in Figur 5 gezeigt. Das impliziert, dass die Profilwinkel *α_{nwF}* für beide Verzahnungen gleich sein müssen. Des Weiteren ergibt sich daraus (R3): *γ + β*_{*w*1} + *β*_{*w*2} = 0. Diese Bedingung erlaubt es, aus einem gegebenen Achskreuzwinkel für zwei gegebene Verzahnungen, welche mit einander kämmen können, die Profilwinkel im Normal- bzw. Stirnschnitt der beiden Zahnstangen zu ermitteln. Eine Änderung der Grundkreisradien und der Grundschrägungswinkel der Schnecke ist somit gleichbedeutend mit einer Änderung des Profilwinkel und/oder des Konuswinkels und/oder des Achskreuzwinkels.

Damit die Zahnstangen zu jeder Zeit deckungsgleich sind, ergibt sich eine lineare Zwangsbedingung (R4) zwischen den beiden Drehwinkel und den beiden Vorschüben.

Sind die beiden Drehwinkel und die beiden Vorschübe bekannt, so lässt sich der Berührpunkt der beiden Verzahnungen direkt durch Berechnung des Schnittpunkts der beiden Berührgeraden bestimmen. Die Parameter *z*_{*F*1} und *w*_{*F*1} bzw. *z*_{*F*2} und *w*_{*F*2}, welche den Berührpunkt auf Verzahnung 1 bzw. Verzahnung 2 beschreiben, hängen linear von *φ*₁, *φ*₂, *z*_{*V*1} und *z*_{*V*2} ab (R5). Eliminiert man in diesen Relationen die Drehwinkel, so folgen die gesuchten Kontaktpfade (R6).

Aus (R4) und (R2) für beide Verzahnungen ergibt sich durch Eliminieren von *φ*₁ und *φ*₂ ein linearer Zusammenhang (R7) zwischen *w_{F1,} w*_{*F*2}, *z*_{*V*1} und *z*_{*V*2}, welche, abhängig vom Vorschub beschreibt, welcher Wälzweg auf Verzahnung 1 welchen Wälzweg auf Verzahnung 2 berührt.

Damit Werkzeug und Werkstück miteinander kämmen, muss gelten: ${m}_{bF 1} ⋅ cos {β}_{bF 1} = {m}_{bF 2} ⋅ cos {β}_{bF 2}$ (83)

Alternativ zum gerade beschriebenen Ansatz für Evolventenverzahnungen ist es auch möglich, die Kontaktpfade (R6) und den Zusammenhang zwischen den Wälzwinkeln (R7) mit Hilfe einer Simulationsrechnung durchzuführen. Mit solchen Simulationen ist es möglich, aus einem gegebenen Werkzeug, insbesondere einer Schnecke und einer gegebenen Kinematik, insbesondere einer gegebenen Relativstellung zwischen Werkzeug und Werkstück, die exakte Geometrie des Werkstücks zu berechnen. Solche Simulationen lassen sich dahingehend erweitern, dass mit ihnen auch ermittelt werden kann, welcher Punkt auf dem Werkzeug welchen Punkt auf dem Werkstück fertigt, abhängig vom Vorschub des Werkzeugs und des Werkstücks. Bei diesem Weg werden keine Evolventeneigenschaften genutzt, so dass dieser auch für nicht-evolventische Profile genutzt werden kann. Ein dazu geeigneter Algorithmus wird im Folgenden beschrieben.

Hierzu wird zunächst ein, in der Regel nicht modifiziertes Werkstück betrachtet. Auf einzelnen Punkten mit den Koordinaten (*w*_{*F*2}, *z*_{*F*2}) auf den Zähnen dieses Werkstücks werden Vektoren in Normalenrichtung mit einer zuvor festgelegten Länge platziert. Die Länge der Vektoren entspricht dem Aufmaß des Werkstücks vor dem Schleifen, bezogen auf das nicht modifizierte Werkstück. Das Aufmaß wird typischerweise so groß gewählt, dass jeder Vektor während der nachfolgend beschriebenen Simulation mindestens einmal gekürzt wird. Die Anzahl der Punkte auf den Zähnen bestimmt die Genauigkeit des Ergebnisses. Bevorzugt werden diese Punkte äquidistant gewählt. Die relative Lage des Werkstücks zur Schnecke wird zu jedem Zeitpunkt vorgegeben, beispielsweise durch die kinematischen Ketten *Kᵣ*. Zu jedem der diskreten Zeitpunkte wird der Schnitt aller Vektoren mit der Schnecke berechnet. Schneidet ein Vektor die Schnecke nicht, bleibt dieser unverändert. Schneidet er jedoch die Schnecke, so wird der Schnittpunkt berechnet und der Vektor soweit gekürzt, dass er gerade an dem Schnittpunkt endet. Weiterhin wird der Abstand des Schnittpunkts von der Schneckenachse, das heißt, der Radius auf der Schnecke *r*_{*F*1} des Schnittpunkts berechnet und als zusätzliche Information zum gerade gekürzten Vektor abgespeichert. Da die Korrekturen der Koordinaten hier während des Schleifens nicht verändert werden, haben, nachdem die Simulation über die ganze Breite der Schnecke durchgeführt wurde, alle Vektoren auf einem gegebenen Radius des Werkstücks *r_{F2}* bzw. einem gegebenen Wälzweg *w*_{*F*2} annährend dieselbe Länge.

Die geringfügen Unterschiede in den Längen rühren daher, dass der hier beschriebene Algorithmus aufgrund der Diskretisierung der Zeit Markierungen, ähnlich den Hüllschnitten beim Wälzfräsen verursacht. Diese Markierungen und somit auch die Unterschiede in den Längen der Vektoren auf einem gegebenen Radius des Werkstücks können durch eine feinere Diskretisierung der Zeit, gleichbedeutend mit einer Verkürzung der Zeitschritte reduziert werden. Wird die Simulation nicht über die gesamte Breite des Werkstücks durchgeführt, sondern bei einer gegebenen axialen Shiftposition *z*_{*V*2} des Werkstücks abgebrochen, so haben, für einen gegebenen Radius auf der Schnecke nur die Vektoren annährend dieselbe Länge, die von dem Kontaktpfad bereits überstrichen wurden. Die übrigen Vektoren haben entweder noch die ursprünglich gewählte Länge oder wurden bereits mindestens einmal gekürzt, haben jedoch noch nicht die endgültige Länge, da sie zu einem späteren Zeitpunkt erneut gekürzt werden (siehe Figur 8). Diese Tatsache kann genutzt werden, um den Kontaktpfad für die aktuellen Vorschübe des Werkstücks und der Schnecke sehr genau zu bestimmen. Dazu werden alle Vektoren auf einen gegebenen Radius auf dem Werkstück *r_{F2}* bzw. Wälzweg *w_{V}* betrachtet und bestimmt, an welcher Breitenlinienposition der Übergang von Vektoren mit annährend gleicher Länge zu solchen mit davon abweichender Länger ist. Da das Schraubwälzgetriebe symmetrisch gegen Vertauschen von Werkstück und Schnecke ist, kann auf dieselbe Weise der Kontaktpfad auf der Schnecke bestimmt werden. Sind im evolventischen Fall Werkstück und Schnecke beide zylindrisch, lassen sich aus den so berechneten Punkten auf dem Kontaktpfad die Koeffizienten aus Gleichung (28) bzw. (29), beispielsweise mittels einer Ausgleichsrechung bestimmen. Sind die Vektoren bestimmt, entlang derer der Kontaktpfad verläuft, können die zu diesen zuvor gespeicherten Radien auf der Schnecke *r*_{*F*1} ausgelesen werden und so zu jedem Radius auf dem Werkstück *r_{F2}* ermittelt werden, von welchem Radius auf der Schnecke *r*_{*F*1} dieser geschliffen wurde. Diese Radien können in Wälzwege umgerechnet werden. Aus diesen Wertepaaren lassen sich für zylindrische Werkstücke und zylindrische Schnecken die Koeffizienten aus Gleichung (34), beispielsweise mittels einer Ausgleichsrechung bestimmen.

Ist im evolventischen Fall die Schnecke konisch und das Werkstück zylindrisch, so muss der Kontaktpfad für mindestens zwei verschiedene Vorschübe *z*_{*V*1} bestimmt werden, um zusätzlich die Koeffizienten vor *z*_{*V*1} in den Gleichungen (40), (41) und (48) zu bestimmen. Analog müssen mindestens zwei verschiedene Vorschübe *z*_{*V*2} betrachtet werden, wenn Werkstück konisch und Schnecke zylindrisch sind. Sind Werkstück und Schnecke konisch, so müssen die Kontakpfade für mindestens zwei Vorschübe *z*_{*V*1} und mindestens zwei Vorschübe *z*_{*V*2} betrachtet werden, um alle Koeffizienten aus den Gleichungen (67), (68) und (77) zu bestimmen.

### Überlagerung mit anderen Modifikationen

Den mit dem hier beschriebenen Verfahren herstellbaren reinen Profilmodifikationen lassen sich ungestört Modifikationen additiv überlagern, die aus dem Stand der Technik bekannt sind. Zum einen sind das weitere reine Profilmodifikationen, welche im verwendeten Abrichter vorgehalten werden können. Somit ist es auch möglich, mit einem Abrichter, welcher eine Profilmodifikation vorhält, unter Anwendung des hier beschriebenen Verfahrens, eine andere, in gewissen Grenzen freie Profilmodifikation auf der Schnecke und somit auf dem Werkstück zu erzeugen. Dazu muss lediglich die Differenz aus der Soll-Profilmodifikation und der im Abrichter vorgehaltenen Profilmodifikation mit dem hier beschriebenen Verfahren erzeugt werden. Damit können beispielsweise zum einen Profilballigkeiten verändert bzw. erzeugt werden, es können aber auch beispielsweise Kopf- und/oder Fußrücknahmen frei erzeugt werden, unabhängig davon, ob der Abrichter diese bereits vorhält, bzw. welchen Betrag oder welche Länge diese haben.

Hält beispielsweise der Abrichter eine Profilballigkeit vor, so kann mit dem hier beschriebenen Verfahren eine weitere Profilballigkeit erzeugt werden, sodass die erzielte Profilballigkeit von der auf dem Abrichter abweicht.

Eine weitere, aus dem Stand der Technik [DE10208531] bekannte Methode, Modifikationen auf Verzahnungen zu erzeugen, besteht darin, die Kinematik während des Schleifprozesses zu korrigieren. Solche Modifikationen lassen sich beispielsweise durch Änderung des Achsabstandes und/oder Korrektur der Drehwinkel und/oder durch Korrektur der Vorschübe realisieren. Solche Korrekturen wirken sich immer entlang des Kontaktpfads aus und haben entlang diesem den gleichen Wert. Die mit dieser Methode erzeugbaren Modifikationen können somit auch durch Gleichung (1) beschreiben werden. Die durch *ρ_{KF}* gegebene Richtung kann bei diesem Verfahren jedoch nicht beeinflusst werden, da diese nur vom Grundschrägungswinkel des Werkstücks abhängig ist. Mathematisch lässt sich diese Modifikation *f_{KFt}* wie folgt beschreiben: ${f}_{KFt} \left({w}_{F}, {z}_{F}\right) = {F}_{KFt} \left({w}_{F} tan {ρ}_{KF}+{z}_{F}\right)$ (84)

Hierbei können die Funktionen *F_{KFt}* beliebige stetige Funktionen sein. Aus den Funktionen *F_{KFt}* für linke und rechte Flanke lassen sich die nötigen Korrekturen der Schleifkinematik berechnen. Mit diesem Verfahren lassen sich beispielsweise natürlich verschränkte Balligkeiten oder auch verzerrte Endrücknahmen herstellen.

Da bei der dieser Anmeldung zugrunde liegenden Erfindung keine Korrektur der Schleifkinematik nötig ist, abgesehen vom Diagonalwältschleifen bzw. von der definierten Shiftposition auf der geschliffen werden muss bei zylindrischen Werkstücken, kann eine Korrektur der Schleifkinematik und somit eine Modifikation gemäß Gleichung (84) störungsfrei additiv überlagert werden.

### Aufteilung und Ausnutzung des Werkzeugs

Um mit dem hier vorgestellten Verfahren ein Werkstück zu schleifen, ist ein Bereich auf der Schnecke mit einer bestimmten Breite nötig. Diese Breite entspricht je Flanke, wie allgemein beim Axialwälzschleifen, der Ausdehnung des Kontaktpfads 22 in Breitenrichtung der Schnecke. Wird das Verfahren auf konische Werkstücke angewandt, so wird zwar diagonal geschliffen, der Kontaktpfad wird jedoch nicht verschoben, sodass die Breite des tatsächlich genutzten Bereichs auf der Schnecke, dem beim Axialwälzschleifen entspricht. Um die Schnecke optimal auszunutzen, können mehrere solcher Bereiche auf der Schnecke aufgebracht werden. In jedem dieser Bereiche gibt es jedoch nur einen Kontaktpfad, mit dem die Profilmodifikation exakt erzeugt werden kann, wodurch nur ein geringer Teil der Oberfläche der Schnecke genutzt werden kann. Um die Schnecke effizienter nutzen zu können, ist es auch möglich, durch Vershiften der Schnecke, Kontaktpfade zu nutzen, welche gegenüber dem idealen Kontaktpfad leicht verschoben sind. Im Falle konischer Werkstücke und dem dazu nötigen Diagonalwälzschleifen entspricht das Vershiften einer Änderung des fixen Offsets *z*_{*V*01}. In Figur 3 markiert 23 einen solchen, gegenüber dem idealen Kontaktpfad 22 versetzten Kontaktpfad. Wird dieser beim Schleifen genutzt, so ergibt sich eine Verschiebung der Profilmodifikation in Richtung des Kopfes des Werkstücks, d.h. im dargestellten Beispiel verschiebt sich der Beginn der Rücknahme weiter nach außen. Ist dies im Rahmen der zulässigen Toleranz möglich, so kann auch ein solcher Kontaktpfad genutzt werden. Wird die Schnecke zum Schruppen und zum Schlichten genutzt, so ist es auch möglich, die versetzten Kontaktpfade nur zum Schruppen zu nutzen und zum Schlichten die idealen, oder man nutzt zum Schlichten, neben den idealen nur leicht verschobene Kontaktpfade und zum Schruppen um einen größeren Betrag verschobene Kontaktpfade. Dadurch wird es möglich, pro Bereich, einen breiteren Streifen zu nutzen und so eine größere aktive Oberfläche der Schnecke zu haben. Möglich ist es auch, einen Teil der Schnecke nicht modifiziert abzurichten um diesen Bereich zum Schruppen zu nutzen.

### Nicht-konstante Modifikation entlang der Berührline

Um die Abweichungen, welche gegenüber der Sollmodifikation entstehen, wenn der Kontaktpfad gegenüber dem idealen verschoben ist, zu reduzieren, kann es von Vorteil sein, wenn die Modifikation entlang der Berührlinien zwischen Abrichter und Schnecke nicht konstant ist. Durch Ausnutzung aller zur Verfügung stehenden Freiheitsgrade beim Abrichten der Schnecke, ist es möglich eine in w zumindest näherungsweise lineare oder quadratische Modifikation zu erzeugen. Die topologische Modifikation auf der Schnecke kann dann zumindest näherungsweise geschrieben werden als: ${f}_{Ft 1} \left({w}_{F 1}, {z}_{F 1}\right) = {F}_{Ft 1 C} \left({X}_{F 1}\right) + {F}_{Ft 1 L} \left({X}_{F 1}\right) ⋅ {w}_{F 1} + {F}_{Ft 1 Q} \left({X}_{F 1}\right) ⋅ {w}_{F 1}^{2} .$ (85) Welche Achskorrekturen zur Erzielung der gewünschten linearen oder quadratischen Modifikation entlang der durch *X*_{*F*1} gegebenen Berührlinie nötig sind, lässt sich beispielsweise durch Variation der Achskorrekturen und Bestimmung der so erhaltenen Modifikation mit der oben beschriebenen Simulation iterativ bestimmen.

Die Funktionen F_{Ft1 C}, *F*_{*Ft*1*L*} und *F*_{*Ft*1*Q*} können wie folgt bestimmt werden: *F*_{*Pt*1*C*} wird so bestimmt wie oben für den Fall konstanter Modifikation entlang der Berührline, sodass für einen Kontaktpfad die Modifikation auf dem Werkstück exakt erreicht wird. Die Funktionen *F*_{*Ft*1*L*} und *F*_{*Ft*1*Q*} werden dann, beispielsweise mittels Ausgleichsrechnung, so bestimmt, dass für diskrete verschobene Kontaktpfade oder ein Band von Kontaktpfaden, die auf dem Werkstück entstehende Abweichung von der Sollmodifikation minimal ist. Hierbei können optional die Abweichungen abhängig vom Wälzweg unterschiedlich gewichtet sein, um unterschiedliche Toleranzen entlang des Profils zu berücksichtigen. Der Abstand der verschobenen Kontaktpfade bzw. die Breite des Bandes können dabei iterativ so bestimmt werden, dass die auf dem Werkstück entstehende Abweichung bei allen Kontaktpfaden noch innerhalb der Toleranz liegt. Dabei können sowohl Kontaktpfade mit engerer Toleranz zur Schlichtbearbeitung als auch Bereiche mit größerer Toleranz zur Schruppbearbeitung bestimmt werden.

### Anwendung bei nicht-evolventischen Verzahnungen

Das Verfahren, so wie es bisher beschrieben wurde, lässt sich auch direkt auf nicht-evolventische Verzahnungen bzw. Profile erweitern, wobei auch hier die Verzahnungen auch wieder asymmetrisch und/oder konisch sein können. Dabei sind die oben für evolventische Verzahnungen angegebenen linearen Zusammenhänge im Allgemeinen nicht linear. Der Parameter *w_{F}* entspricht hier nicht mehr dem von evolventischen Verzahnungen bekannten Wälzweg, sondern allgemeiner betrachtet einem Parameter, welcher das Profil der Verzahnung parametrisiert. Mit der angegebenen Simulation als Alternative zur Bestimmung der Kontaktpfade und der Abbildung von Punkten auf der Schnecke zu Punkten auf dem Werkstück, lassen sich diese jedoch auch bei nicht-evolventischen Profilen bestimmen. Ebenso lassen sich die Berührline zwischen Abrichter und Schnecke sowie die sich auf der Schnecke ergebenden Modifikationen, abhängig von den Achskorrekturen beim Abrichten über die oben beschriebene Abrichtsimulation bestimmen. Im Allgemeinen ergibt sich dabei jedoch ein nicht linearer Zusammenhang zwischen *w*_{*F*1} und *z*_{*F*1} für den Verlauf der Berührline, welcher dann durch Gleichung (24) beschrieben wird. Wie bei evolventischen Profile kann auch hier ein Parameter *X*_{*F*1} eingeführt werden, der die Lage der Berührline implizit über eine Funktion *b_{X}* entlang der Schneckenbreite beschreibt: ${b}_{X} \left({w}_{F 1}, {z}_{F 1}\right) = {X}_{F 1}$ (86) Diese Gleichung stellt die Verallgemeinerung von Gleichung (25) dar. Die auf der Schnecke aufgebrachte topologische Modifikation in normalen Richtung kann über die Verallgemeinerung von Gleichung (1) beschreiben werden: ${f}_{Fn 1} \left({w}_{F 1}, {z}_{F 1}\right) = {F}_{Fn 1} \left({b}_{X}\left({w}_{F 1}, {z}_{F 1}\right)\right) = {F}_{Fn 1} \left({X}_{F 1}\right)$ (87) Es kann somit auch hier zu jedem Parameter *w*_{*F*2} auf dem Werkstück ein *X*_{*F*1} berechnet werden, sodass die Kontaktline zu *X*_{*F*1} den Kontaktpfad bei dem *w*_{*F*1} schneidet, welches dem Parameter *w*_{*F*2} zugeordnet ist. Mit dieser Zuordnung kann dann aus der Modifikation *f*_{*Fn*2} auf dem Werkstück die Modifikation *F*_{*Fn*1} auf der Schnecke berechnet werden. ${F}_{Fn 1} \left({X}_{F 1}\right) = - {f}_{Fn 2} \left({w}_{F 2}\right)$ (88) Im Gegensatz zum evolventischen Fall wurden hier die Modifikationen im Normalschnitt betrachtet. Da sowohl die Relationen als auch Kontaktpfad und Berührline nicht mehr durch lineare Zusammenhänge beschreibbar sind, müssen die Zuordnungen im Allgemeinen numerisch berechnet werden. Figur 4 zeigt die Berührline 35-37 für drei verschiedene *X*_{*F*1}. Im Gegensatz zum evolventischen Fall ist die Berührline gekrümmt. Auch der Kontaktpfad 32 ist im Allgemeinen gekrümmt.

### Abrichter für andere Makrogeometrie

Mathematisch exakt passt ein Abrichter immer nur zu einer Schneckengeometrie. Wird die Makrogemetrie der Schnecke verändert, insbesondere Gangzahl und/oder Durchmesser, so passt der Abrichter nicht mehr exakt und beim Abrichten entsteht ein unerwünschter Profilfehler. Während ein reiner Profilwinkelfehler durch ein Einschwenken des Abrichters gemäß dem Stand der Technik korrigiert werden kann, können andere Profilfehler nicht korrigiert werden. So entstehen bei evolventischen Verzahnungen beispielsweise unter anderem Profilballigkeiten, wenn der Abrichter nicht exakt zur abzurichtenden Schnecke passt. Bisher konnten solche Profilfehler nicht korrigiert werden und nicht passende Abrichter konnten nicht eingesetzt werden. Mit dem hier vorgestellten Verfahren ist es nun jedoch möglich, den durch den nicht passenden Abrichter entstehenden Profilfehler zu korrigieren. Dazu wird mit dem Verfahren eine Profilmodifikation erzeugt, welche sich aus der Differenz zwischen der Soll-Profilmodifikation und dem durch den nicht passenden Abrichter entstehenden Profilfehler ergibt. Dadurch kann häufiger auf bereits verfügbare Abrichter zurückgegriffen werden und es entfallen sowohl Investitionskosten für neu Abrichter als auch Wartezeiten bis zu Lieferung des Abrichters.

Das Problem der nicht passenden Abrichtergeometrie stellt sich nicht nur dann, wenn ein Abrichter verwendet werden soll, der nicht für die abzurichtende Schnecke ausgelegt wurde, sondern auch dann, wenn der Schneckendurchmesser von Abrichtzyklus zu Abrichtzyklus kleiner wird. In vielen Fällen sind die sich durch den veränderten Schneckendurchmesser ergebenden Profilfehler so klein, dass sie unterhalb der zulässigen Toleranz liegen. Dies trifft jedoch nicht mehr zu, wenn das Verhältnis Schneckendurchmesser zu Modul der zu schleifenden Verzahnung, zu klein wird und/oder die Gangzahl groß ist. Schnecken mit kleinen Durchmessern kommen beispielsweise dann zum Einsatz, wenn ein Wälzschleifen mit einer größeren Schnecke aufgrund einer Störkontur nicht mehr möglich ist. Ein weiterer Anwendungsfall ist das Schleifen großmoduliger Verzahnungen. Da die einsetzbaren Schneckendurchmesser nach oben begrenzt sind, verringert sich das Verhältnis von Schneckendurchmesser zum Modul bei steigendem Modul. Mit der Möglichkeit moderner Verzahnmaschinen hohe Tischdrehzahlen zu realisieren, ist es auch möglich, Schnecken mit größeren Ganzahlen einzusetzen.

Werden solche Schnecken eingesetzt, erzeugt ein Abrichter, der für die Schnecke im Neuzustand ausgelegt wurde, für kleinere Radien einen ungewünschten Profilfehler, im Falle evolventischer Schnecken eine unerwünschte Profilballigkeit, wenn nach einem Verfahren gemäß dem Stand der Technik abgerichtet wird. Liegt dieser Profilfehler bzw. diese Profilballigkeit unterhalb eines Schneckendurchmessers außerhalb der Toleranz, so kann die Schnecke mit dem gegebenen Abrichter nicht weiter abgerichtet werden, wodurch die maximal nutzbare Belagdicke eingeschränkt ist. Dieses Problem kann bisher nur durch Verwendung verschiedener Abrichter für verschiedene Durchmesserbereiche gelöst werden. Mit dem hier beschriebenen Verfahren ist es jedoch möglich, mit nur einem Abrichter die Profilform über einen großen Durchmesserbereich konstant zu halten. Dazu wird der Abrichter als ein nicht zur Schnecke passender Abrichter.

## Patentansprüche

1. Verfahren zur Herstellung eines Werkstückes mit modifizierter Verzahnungsgeometrie durch ein Wälzverfahren, wobei das Werkstück in mindestens einem Bearbeitungshub mittels eines Werkzeuges mit modifizierter Verzahnungsgeometrie wälzbearbeitet wird, wobei das Werkzeug eine topologische Modifikation aufweist,
**dadurch gekennzeichnet,**
**dass** eine gewünschte Profilmodifikation des Werkstückes vorgegeben und durch die Wälzbearbeitung auf dem Werkstück erzeugt wird, wobei der Kontaktpfad mit dem Werkstück auf dem Werkzeug während des Bearbeitungshubs nicht verschoben wird, wobei das Wälzverfahren mit einem definierten Kontaktpfad auf dem Werkzeug durchgeführt wird, wobei die topologische Modifikation und der Kontaktpfad so gewählt werden, dass die topologische Modifikation auf dem Werkzeug entlang des Kontaktpfades eine solche Form aufweist, dass sie auf dem Werkstück die gewünschte Profilmodifikation erzeugt, wobei die topologische Modifikation des Werkzeuges dadurch erzeugt wird, dass die Position des Abrichters zum Werkzeug beim Abrichten in Abhängigkeit von dem Werkzeugdrehwinkel und/oder der Werkzeugbreitenposition variiert wird, wobei die gewünschte Profilmodifikation innerhalb bestimmter Randbedingungen frei vorgebbar ist, und/oder wobei eine und bevorzugt mehrere und weiter bevorzugt alle der folgenden Eigenschaften der Profilmodifikation vorgebbar sind:
- Balligkeit,
- Profilwinkelabweichung,
- Kopfrücknahme,
- Fußrücknahme.

2. Verfahren zur Herstellung eines Werkstückes mit modifizierter Verzahnungsgeometrie durch ein Wälzverfahren, wobei das Werkstück in mindestens einem Bearbeitungshub mittels eines Werkzeuges mit modifizierter Verzahnungsgeometrie wälzbearbeitet wird, wobei das Werkzeug eine topologische Modifikation aufweist,
**dadurch gekennzeichnet,**
**dass** der Kontaktpfad mit dem Werkstück auf dem Werkzeug während des Bearbeitungshubs nicht verschoben wird, wobei das Wälzverfahren mit einem definierten Kontaktpfad auf dem Werkzeug durchgeführt wird, wobei die topologische Modifikation und der Kontaktpfad so gewählt werden, dass die topologische Modifikation auf dem Werkzeug entlang des Kontaktpfades eine solche Form aufweist, dass sie auf dem Werkstück eine gewünschte Profilmodifikation erzeugt, wobei ein konisches Werkstück bearbeitet wird und die Bearbeitung durch ein Diagonalwälzverfahren erfolgt, wobei das Diagonalverhältnis so gewählt wird, dass sich der Kontaktpfad auf dem Werkzeug während des Bearbeitungshubs nicht verschiebt,
wobei bevorzugt ein Werkzeug mit einer zylindrischen Grundform eingesetzt wird und die Bearbeitung einflankig erfolgt oder wobei bevorzugt ein Werkzeug mit einer konischen Grundform eingesetzt wird und die Bearbeitung zweiflankig erfolgt, wobei weiter bevorzugt der Konuswinkel des Werkzeuges und das Diagonalverhältnis so gewählt werden, dass sich beim zweiflankigen Bearbeiten der Kontaktpfad auf rechter und linker Flanke nicht verschiebt.

3. Verfahren zur Herstellung eines Werkstückes mit modifizierter Verzahnungsgeometrie durch ein Wälzverfahren, wobei das Werkstück in mindestens einem Bearbeitungshub mittels eines Werkzeuges mit modifizierter Verzahnungsgeometrie wälzbearbeitet wird, wobei das Werkzeug eine topologische Modifikation aufweist,
**dadurch gekennzeichnet,**
**dass** der Kontaktpfad mit dem Werkstück auf dem Werkzeug während des Bearbeitungshubs nicht verschoben wird, wobei das Wälzverfahren mit einem definierten Kontaktpfad auf dem Werkzeug durchgeführt wird, wobei die topologische Modifikation und der Kontaktpfad so gewählt werden, dass die topologische Modifikation auf dem Werkzeug entlang des Kontaktpfades eine solche Form aufweist, dass sie auf dem Werkstück die gewünschte Profilmodifikation erzeugt, wobei die topologische Modifikation der Oberflächengeometrie des Werkzeuges im Wälzbild in einer ersten Richtung des Werkzeuges zumindest näherungsweise als eine lineare Funktion beschreibbar ist, deren Koeffizienten in Werkzeugbreitenrichtung durch Koeffizienten-Funktionen F_{FtC,1} für den konstanten Anteil und F_{FtL,1} für den linearen Anteil gegeben sind,
wobei bevorzugt die erste Richtung der Richtung der Eingriffslinie des Abrichters beim Abrichten entspricht.

4. Verfahren nach Anspruch 2, wobei eine gewünschte Profilmodifikation des Werkstückes vorgegeben und durch die Wälzbearbeitung auf dem Werkstück erzeugt wird, wobei bevorzugt die gewünschte Profilmodifikation und/oder Eigenschaften der gewünschten Profilmodifikation innerhalb bestimmter Randbedingungen frei vorgebbar ist bzw. sind, und/oder wobei eine und bevorzugt mehrere und weiter bevorzugt alle der folgenden Eigenschaften der Profilmodifikation vorgebbar sind:
- Balligkeit,
- Profilwinkelabweichung,
- Kopfrücknahme,
- Fußrücknahme,
wobei bevorzugt folgende Daten vorgebbar sind:
- Größe der Balligkeit,
- Größe der Profilwinkelabweichung,
- Betrag und Lage der Kopfrücknahme,
- Betrag und Lage der Fußrücknahme,
wofür weiter bevorzugt mindestens eine Eingabemaske mit Eingabefeldern für mindestens eine der Eigenschaften und/oder deren Daten vorgesehen ist, und/oder wobei die gewünschte Profilmodifkation als stetige Modifikation und/oder an einer Mehrzahl von Wälzwinkeln frei vorgebbar ist.

5. Verfahren nach einem der Ansprüche 2 oder 4, wobei die topologische Modifikation des Werkzeuges dadurch erzeugt wird, dass die Position des Abrichters zum Werkzeug beim Abrichten in Abhängigkeit von dem Werkzeugdrehwinkel und/oder der Werkzeugbreitenposition variiert wird.

6. Verfahren nach einem der vorangegangenen Ansprüche, wobei die topologische Modifikation in Abhängigkeit von dem Kontaktpfad oder der Kontaktpfad in Abhängigkeit von der topologischen Modifikation so gewählt werden, dass die topologische Modifikation auf dem Werkzeug entlang des Kontaktpfades eine solche Form aufweist, dass sie auf dem Werkstück eine gewünschte Profilmodifikation erzeugt, und/oder wobei die Bearbeitung mit einem definierten Kontaktpfad die Bearbeitung mit einer definierten initialen Shift-Position des Werkzeuges umfasst, wobei bevorzugt bei Bearbeitung eines zylindrischen Werkstücks die initiale Shift-Position beibehalten wird und/oder bei Bearbeitung eines konischen Werkstücks das Werkzeug ausgehend von der initialen Shift-Position mit einem solchen Diagonalverhältnis vershiftet wird, dass sich der Kontaktpfad nicht verschiebt.

7. Verfahren nach einem der vorangegangenen Ansprüche, mit den Schritten:
- Vorgabe einer gewünschten Profilmodifikation auf dem Werkstück,
- Bestimmung der zur Erzeugung der gewünschten Profilmodifikation auf dem Werkstück notwendigen Modifikation des Werkzeuges entlang eines definierten Kontaktpfades,
- Bestimmung einer topologischen Modifikation des Werkzeuges, welche entlang des Kontaktpfades der so bestimmten Modifikation entspricht, und/oder Bestimmung der zur Bereitstellung einer topologischen Modifikation, welche entlang des Kontaktpfades der so bestimmten Modifikation entspricht, geeigneten Variation der Position des Abrichters zum Werkzeug beim Abrichten des Werkzeuges,
wobei die topologische Modifikation bevorzugt dadurch erzeugt wird, dass die Position des Abrichters zum Werkzeug beim Abrichten in Abhängigkeit von dem Werkzeugdrehwinkel und/oder der Werkzeugbreitenposition variiert wird, wobei die Variation bevorzugt so erfolgt oder bestimmt wird, dass sich an dem bei einem bestimmten Werkzeugdrehwinkel und/oder Werkzeugbreitenposition jeweils gegebenen Schnittpunkt zwischen der Eingriffslinie des Abrichters mit dem Werkzeug und dem Kontaktpfad des Werkzeuges mit dem Werkstück die bestimmte Modifikation ergibt,
wobei der definierte Kontaktpfad bevorzugt durch eine definierte initiale Shift-Position vorgegeben ist,
und/oder wobei zur Bestimmung der zur Erzeugung der gewünschten Modifikation auf dem Werkstück geeigneten Modifikation des Werkzeuges entlang eines Kontaktpfades zunächst eine Bestimmung der die jeweiligen Kontaktpfade bildenden Berührpunkte zwischen dem Werkstück und dem Werkzeug bei der Wälzbearbeitung erfolgt, und/oder
wobei zur Bestimmung der zur Bereitstellung einer topologischen Modifikation geeigneten Variation der Position des Abrichters zum Werkzeug die Eingriffslinie des Abrichters in das Werkzeug in Abhängigkeit von dem Werkzeugdrehwinkel und/oder der Werkzeugbreitenposition bestimmt wird, wobei bevorzugt die Richtung der Eingriffslinie als konstant angenommen wird, insbesondere für evolventische Verzahnungen, oder der Einfluss einer Modifikation auf die Richtung der Eingriffslinie berücksichtigt wird, insbesondere für nicht-evolventische Verzahnungen.

8. Verfahren zur Herstellung eines Werkstückes mit modifizierter Verzahnungsgeometrie durch ein Wälzverfahren, wobei das Werkstück in mindestens einem Bearbeitungshub mittels eines Werkzeuges mit modifizierter Verzahnungsgeometrie wälzbearbeitet wird, wobei das Werkzeug eine topologische Modifikation aufweist,
**dadurch gekennzeichnet,**
**dass** der Kontaktpfad mit dem Werkstück auf dem Werkzeug während des Bearbeitungshubs nicht verschoben wird, wobei das Wälzverfahren mit einem definierten Kontaktpfad auf dem Werkzeug durchgeführt wird, wobei die topologische Modifikation und der Kontaktpfad so gewählt werden, dass die topologische Modifikation auf dem Werkzeug entlang des Kontaktpfades eine solche Form aufweist, dass sie auf dem Werkstück eine gewünschte Profilmodifikation erzeugt, wobei ein modifizierter Abrichter zum Abrichten des Werkzeuges eingesetzt wird, und wobei die durch die Modifikation des Abrichters erzeugte Modifikation des Werkzeuges mit einer topologischen Modifikation überlagert wird, welche dadurch erzeugt wird, dass die Position des Abrichters zum Werkzeug beim Abrichten in Abhängigkeit von dem Werkzeugdrehwinkel und/oder der Werkzeugbreitenposition variiert wird, wobei die topologische Variation bevorzugt so gewählt wird, dass die Überlagerung der Modifikationen auf dem Werkzeug entlang eines ausgewählten Kontaktpfades mit dem Werkstück einer zur Erzeugung einer gewünschten Profilmodifikation auf dem Werkstück notwendigen Modifikation entlang des Kontaktpfades entspricht,
und/oder
wobei ein Abrichter zum Abrichten des Werkzeuges eingesetzt wird, welcher für ein Werkzeug mit einer anderen Makrogeometire, insbesondere für ein Werkzeug mit einem anderen Durchmesser und/oder einer anderen Gangzahl ausgelegt wurde, wobei die durch den nicht passenden Abrichter erzeugte Modifikation der Oberflächengeometrie des Werkzeuges an einem ausgewählten Kontaktpfad mit dem Werkstück ausgeglichen wird, indem die Position des Abrichters zum Werkzeug beim Abrichten in Abhängigkeit von dem Werkzeugdrehwinkel und/oder der Werkzeugbreitenposition geeignet variiert wird, wobei das Wälzbearbeitungsverfahren mit dem ausgewählten Kontaktpfad durchgeführt wird.

9. Verfahren nach einem der vorangegangenen Ansprüche zur Herstellung eines Werkstückes mit gewünschter Verzahnungsgeometrie mittels eines geeignet abgerichteten Werkzeuges,
mit den Schritten:
- Vorgabe einer gewünschten Profilmodifikation des Werkstückes,
- Auswahl einer Kombination aus einem Abrichter und einem Werkzeug aus einer Mehrzahl an Kombinationen, welche ohne eine Modifikation des Abrichtprozesses die geringsten Abweichungen von der gewünschten Profilmodifikation erzeugt,
- modifiziertes Abrichten des Werkzeuges mit dem Abrichter in Linienkontakt zur Erzeugung einer topologischen Modifikation des Werkzeuges, um die Abweichungen auszugleichen, und
- Bearbeiten des Werkstückes mit dem abgerichteten Werkzeug mit einem über den Bearbeitungshub unveränderten Kontaktpfad zur Erzeugung der gewünschten Profilmodifikation,
wobei es sich bevorzugt bei den Abrichtern und/oder Werkzeugen um ein zumindest teilweise vorgegebenes oder bereits vorhandenes Sortiment handelt.

10. Verfahren nach einem der vorangegangenen Ansprüche zur Herstellung eines oder mehrerer Werkstücke mit einer gewünschten Verzahnungsgeometrie mittels eines geeignet abgerichteten Werkzeuges, wobei nach der Durchführung eines oder mehrerer Bearbeitungsschritte das Werkzeug jeweils abgerichtet wird, bevor weitere Bearbeitungsschritte an dem selben oder weiteren Werkstücken durchgeführt werden,
**dadurch gekennzeichnet,**
**dass** bei einem Abrichtvorgang eine andere topologische Modifikation des Werkzeuges gegenüber einem anderen Abrichtvorgang erzeugt wird.

11. Verfahren zur Herstellung eines Werkstückes mit modifizierter Verzahnungsgeometrie durch ein Wälzverfahren, wobei das Werkstück in mindestens einem Bearbeitungshub mittels eines Werkzeuges mit modifizierter Verzahnungsgeometrie wälzbearbeitet wird, wobei das Werkzeug eine topologische Modifikation aufweist,
**dadurch gekennzeichnet,**
**dass** der Kontaktpfad mit dem Werkstück auf dem Werkzeug während des Bearbeitungshubs nicht verschoben wird, wobei das Wälzverfahren mit einem definierten Kontaktpfad auf dem Werkzeug durchgeführt wird, wobei die topologische Modifikation und der Kontaktpfad so gewählt werden, dass die topologische Modifikation auf dem Werkzeug entlang des Kontaktpfades eine solche Form aufweist, dass sie auf dem Werkstück eine gewünschte Profilmodifikation erzeugt,, wobei während einer Bearbeitung eines oder mehrerer Werkstücke mindestens ein Hub mit einer ersten initialen Shift-Position des Werkzeuges und/oder einem ersten Kontaktpfad durchgeführt wird, und mindestens ein zweiter Hub mit einer zweiten, verschobenen initialen Shift-Position des Werkzeuges und/oder einem zweiten, verschobenen Kontaktpfad durchgeführt wird,
wobei die erste initiale Shift-Position und/oder der erste Kontaktpfad weniger gegenüber einer idealen initialen Shift-Position und/oder einem idealen Kontaktpfad verschoben ist als die zweite initialen Shift-Position und/oder der zweite Kontaktpfad, wobei bevorzugt die erste initialen Shift-Position der idealen Shift-Position und/oder der erste Kontaktpfad dem idealen Kontaktpfad entspricht,
und/oder wobei bevorzugt ein Grobbearbeitungsschritt mit der zweiten initialen Shift-Position und/oder der zweiten Kontaktlinie und ein Feinbearbeitungsschritt mit der ersten initialen Shift-Position und/oder der ersten Kontaktlinie durchgeführt wird, und/oder wobei die Modifikation des Werkzeuges im Wälzbild zumindest lokal in einer ersten Richtung des Werkzeuges durch eine lineare Funktion zumindest näherungsweise beschreibbar ist, wobei die Koeffizienten dieser linearen Funktion in einer zweiten Richtung des Werkzeuges, welche senkrecht zur ersten Richtung verläuft, durch Koeffizienten-Funktionen F_{FtC,1} für den konstanten Anteil sowie F_{FtL,1} für den linearen Anteil gebildet werden, wobei die Koeffizienten-Funktion F_{FtC,1} für den konstanten Anteil so bestimmt wird, dass eine gewünschte Profilmodifikation bei der Wälzbearbeitung an einer vorgegebenen Shift-Position und/oder mit einem vorgegebenen Kontaktpfad exakt erzeugt wird, und wobei die Koeffizienten-Funktion F_{FtL,1} für den linearen Anteil so bestimmt wird oder werden, dass die bei einer Wälzbearbeitung mit mindestens einer verschobenen initialen Shift-Position und/oder Kontaktpfad und/oder mindestens einem Band oder einem Bereich von initialen Shift-Positionen und/oder Kontaktpfaden auf dem Werkstück entstehende Abweichung von der gewünschten Profilmodifikation minimal ist, wobei die Bestimmung bevorzugt durch eine Ausgleichsrechnung erfolgt und/oder wobei bevorzugt die Abweichungen abhängig vom Wälzweg unterschiedlich gewichtet werden, um unterschiedliche Toleranzen entlang des Profils zu berücksichtigen, und/oder wobei bevorzugt der Abstand der verschobenen initialen Shift-Positionen und/oder Kontaktpfade bzw. die Breite des Bandes iterativ so bestimmt werden, dass die auf dem Werkstück entstehende Abweichung bei allen Kontaktpfaden noch innerhalb einer vorgegebenen Toleranz liegt.

12. Verfahren nach einem der vorangegangenen Ansprüche, wobei das Werkzeug mindestens einen ersten Bereich mit einer ersten topologischen Modifikation und einen zweiten Bereich mit einer zweiten topologischen Modifikation aufweist, wobei die erste topologische Modifikation entlang eines Kontaktpfades mit dem Werkstück bei einer ersten initialen Shift-Position identisch zu der zweiten topologischen Modifikation entlang eines Kontaktpfades mit dem Werkstück bei einer zweiten initialen Shift-Position ist,
wobei bevorzugt während einer Bearbeitung eines oder mehrerer Werkstücke mindestens ein Hub mit der ersten initialen Shift-Position des Werkzeuges durchgeführt wird, und mindestens ein zweiter Hub mit der zweiten initialen Shift-Position des Werkzeuges durchgeführt wird,
und/oder wobei bevorzugt der erste Bereich bei der ersten initialen Shift-Position und der zweite Bereich bei der zweiten initialen Shift-Position jeweils den kompletten Kontaktpfad mit dem Werkstück umfasst,
und/oder wobei die erste topologische Modifikation identisch zu der zweiten topologischen Modifikation ist,
und/oder wobei eine gewünschte Profilmodifikation des Werkstückes vorgegeben wird und eine für die Erzeugung dieser gewünschten Modifikation geeignete Modifikation des Werkzeuges und/oder eine geeignete Variation der Position des Abrichters zum Werkzeug beim Abrichten in Abhängigkeit von dem Werkzeugdrehwinkel und/oder der Werkzeugbreitenposition bestimmt wird,
wobei bevorzugt die Modifikation des Werkzeuges entlang einer Kontaktlinie zwischen Werkzeug und Werkstück aus der gewünschten Profilmodifikation des Werkstückes mittels der Umkehrung einer Zuordnungsfunktion, welche die Abbildung der Oberfläche des Werkzeugs auf die Oberfläche des Werkstücks beim Wälzschleifen mit einem bestimmten Kontaktpfad und insbesondere einer bestimmten initialen Shift-Position des Werkzeuges beschreibt, bestimmt wird, wobei die Bestimmung bevorzugt unter Verwendung einer Funktion erfolgt, welche die Abbildung der Oberfläche des Werkzeugs auf die Oberfläche des Werkstücks beim Wälzschleifen analytisch beschreibt.

13. Verfahren nach einem der vorangegangenen Ansprüche, wobei das Werkzeug mittels einer Profil- und/oder Formrolle modifiziert abgerichtet wird,
wobei das Abrichten bevorzugt in Linienkontakt mit dem Werkzeug erfolgt, und/oder wobei bevorzugt die Profil- und/oder Formrolle beim Abrichten vom Fußbereich bis zum Kopfbereich mit dem Zahn des Werkzeuges in Kontakt steht, so dass die Modifikation über die gesamte Zahnhöhe in einem Hub erfolgt oder alternativ die Profil- und/oder Formrolle beim Abrichten nur in Teilbereichen zwischen Fuß und Kopf mit dem Zahn des Werkzeuges in Kontakt steht, so dass die gezielte Modifikation über die gesamte Zahnhöhe in mehreren Hüben und jeweils unterschiedlicher relativen Positionierung des Abrichters erfolgt,
und/oder wobei das Erzeugen der topologischen Modifikation des Werkzeuges erfolgt, indem eine oder mehrere der folgenden Korrekturen der Achsbewegungen zur herkömmlichen Abrichtkinematik vorgenommen werden:
a) Variation des Achsabstandes des Abrichters zum Werkzeug in Abhängigkeit des Werkzeugdrehwinkels und/oder der Werkzeugbreitenposition (Zustellung)
b) Variation des Axialvorschubs des Werkzeugs bzw. des Abrichters in Abhängigkeit des Werkzeugdrehwinkels und/oder der Werkzeugbreitenposition (Shiften)
c) Variation des Achskreuzwinkels des Werkzeuges und des Abrichters in Abhängigkeit des Werkzeugdrehwinkels und/oder der Werkzeugbreitenposition (Schwenken)
d) Variation der Werkzeugdrehzahl in Abhängigkeit des Werkzeugdrehwinkels und/oder der Werkzeugbreitenposition
und/oder wobei das modifizierte Abrichten des Werkzeuges erfolgt, indem der Abrichter abhängig von der Winkelposition des Werkzeugs und/oder der Werkzeugbreitenposition mehr oder weniger zugestellt wird bzw. indem das Werkzeug abhängig von seiner Winkelposition und/oder der Werkzeugbreitenposition mehr oder weniger auf den Abrichter hin, zugestellt wird oder umgekehrt,
und/oder wobei bei der relativen Positionierung zwischen Abrichter und Werkzeug mindestens drei und bevorzugt vier oder fünf Freiheitsgrade zur Erzeugung der gewünschten Modifikation genutzt werden, wobei die Freiheitsgrade bevorzugt unabhängig voneinander zur Erzeugung der gewünschten Modifikation einstellbar sind, und/oder wobei es sich bevorzugt um mindestens drei, vier oder alle der folgenden fünf Freiheitsgrade handelt: Drehwinkel des Werkzeuges, axiale Position des Werkzeuges, y-Position des Abrichters, Achsabstand und/oder Achskreuzwinkel, wobei bevorzugt die axiale Position des Werkzeuges, d.h. die Werkzeugbreitenposition dazu genutzt wird, die Berührlinie des Abrichters zu verschieben, und von den verbleibenden vier Freiheitsgraden zwei, drei oder vier Freiheitsgrade unabhängig voneinander eingestellt werden, um die gezielte Modifikation entlang der Berührlinie zu erzeugen.

14. Verzahnmaschine zur Durchführung des Verfahrens nach einem der vorangegangenen Ansprüche, wobei die Verzahnmaschine eine Eingabefunktion umfasst, über welche eine gewünschte Modifikation eines Werkstückes vorgebbar ist, wobei die Verzahnmaschine weiterhin eine Bestimmungsfunktion aufweist, welche eine für die Erzeugung dieser gewünschten Modifikation geeignete Modifikation des Werkzeuges und eine geeignete Variation der Position des Abrichters zum Werkzeug beim Abrichten in Abhängigkeit von dem Werkzeugdrehwinkel und/oder der Werkzeugbreitenposition bestimmt, und eine Abrichtfunktion, welche während des Abrichtens auf dem Werkzeug eine für die Erzeugung dieser gewünschten Modifikation des Werkstückes geeignete Modifikation des Werkzeuges erzeugt,
wobei die Bestimmungsfunktion so ausgestaltet ist, dass die Modifikation des Werkzeuges im Wälzbild zumindest lokal in einer ersten Richtung des Werkzeuges durch eine lineare Funktion zumindest näherungsweise beschreibbar ist, wobei die Koeffizienten dieser linearen Funktion in einer zweiten Richtung des Werkzeuges, welche senkrecht zur ersten Richtung verläuft, durch Koeffizienten-Funktionen F_{FtC,1} für den konstanten Anteil sowie F_{FtL,1} für den linearen Anteil gebildet werden, wobei die Bestimmungsfunktion die Koeffizienten-Funktion F_{FtC,1} für den konstanten Anteil so bestimmt wird, dass eine gewünschte Profilmodifikation bei der Wälzbearbeitung an einer vorgegebenen Shift-Position und/oder mit einem vorgegebenen Kontaktpfad exakt erzeugt wird, und wobei die Bestimmungsfunktion die Koeffizienten-Funktion F_{FtL,1} für den linearen Anteil so bestimmt, dass die bei einer Wälzbearbeitung mit mindestens einer verschobenen initialen Shift-Position und/oder Kontaktpfad und/oder mindestens einem Band oder einem Bereich von initialen Shift-Positionen und/oder Kontaktpfaden auf dem Werkstück entstehende Abweichung von der gewünschten Profilmodifikation minimal ist,
und/oder wobei die Eingabefunktion die Vorgabe einer gewünschten Profilmodifikation des Werkstückes erlaubt, wobei die gewünschte Profilmodifikation innerhalb bestimmter Randbedingungen frei vorgebbar ist, und/oder wobei mindestens eine der folgenden Eigenschaften der Profilmodifikation vorgebbar ist:
- Balligkeit,
- Profilwinkelabweichung,
- Kopfrücknahme,
- Fußrücknahme,
wobei bevorzugt folgende Daten vorgebbar sind:
- Größe der Balligkeit,
- Größe der Profilwinkelabweichung,
- Betrag und Lage der Kopfrücknahme,
- Betrag und Lage der Fußrücknahme,
wofür weiter bevorzugt mindestens eine Eingabemaske mit Eingabefeldern für mindestens eine der Eigenschaften und/oder deren Daten vorgesehen ist, und/oder wobei die gewünschte Profilmodifkation als stetige Modifikation und/oder an einer Mehrzahl von Wälzwinkeln frei vorgebbar ist.

15. Computerprogramm zur Installation auf einer Verzahnmaschine und/oder mit einer Ausgabefunktion für Daten zur Verwendung auf einer Verzahnmaschine, mit einer Eingabefunktion zur Eingabe von Daten zu einer gewünschten Modifikation des Werkstückes und mit einer Funktion zur Bestimmung einer für die Erzeugung dieser gewünschten Modifikation geeigneten topologischen Modifikation des Werkzeuges und einer geeigneten Variation der Position des Abrichters zum Werkzeug beim Abrichten in Abhängigkeit von dem Werkzeugdrehwinkel und/oder der Werkzeugbreitenposition, so dass die gewünschte Modifikation des Werkstückes durch eine Wälzbearbeitung mit dem topologisch modifizierten Werkzeug mit einem über den Bearbeitungshub unveränderten Kontaktpfad herstellbar ist,
wobei die Bestimmungsfunktion so ausgestaltet ist, dass die Modifikation des Werkzeuges im Wälzbild zumindest lokal in einer ersten Richtung des Werkzeuges durch eine lineare Funktion zumindest näherungsweise beschreibbar ist, wobei die Koeffizienten dieser linearen Funktion in einer zweiten Richtung des Werkzeuges, welche senkrecht zur ersten Richtung verläuft, durch Koeffizienten-Funktionen F_{FtC,1} für den konstanten Anteil sowie F_{FtL,1} für den linearen Anteil gebildet werden, wobei die Bestimmungsfunktion die Koeffizienten-Funktion F_{FtC,1} für den konstanten Anteil so bestimmt wird, dass eine gewünschte Profilmodifikation bei der Wälzbearbeitung an einer vorgegebenen Shift-Position und/oder mit einem vorgegebenen Kontaktpfad exakt erzeugt wird, und wobei die Bestimmungsfunktion die Koeffizienten-Funktion F_{FtL,1} für den linearen Anteil so bestimmt, dass die bei einer Wälzbearbeitung mit mindestens einer verschobenen initialen Shift-Position und/oder Kontaktpfad und/oder mindestens einem Band oder einem Bereich von initialen Shift-Positionen und/oder Kontaktpfaden auf dem Werkstück entstehende Abweichung von der gewünschten Profilmodifikation minimal ist,
und/oder wobei die Eingabefunktion die Vorgabe einer gewünschten Profilmodifikation des Werkstückes erlaubt, wobei die gewünschte Profilmodifikation innerhalb bestimmter Randbedingungen frei vorgebbar ist, und/oder wobei mindestens eine der folgenden Eigenschaften der Profilmodifikation vorgebbar ist:
- Balligkeit,
- Profilwinkelabweichung,
- Kopfrücknahme,
- Fußrücknahme,
wobei bevorzugt folgende Daten vorgebbar sind:
- Größe der Balligkeit,
- Größe der Profilwinkelabweichung,
- Betrag und Lage der Kopfrücknahme,
- Betrag und Lage der Fußrücknahme,
wofür weiter bevorzugt mindestens eine Eingabemaske mit Eingabefeldern für mindestens eine der Eigenschaften und/oder deren Daten vorgesehen ist,
und/oder wobei die gewünschte Profilmodifkation als stetige Modifikation und/oder an einer Mehrzahl von Wälzwinkeln frei vorgebbar ist.

## Claims

1. Method of producing a workpiece having a modified gearing geometry by a generating method, wherein the workpiece is generating machined in at least one machining stroke by means of a tool having a modified gearing geometry, wherein the tool has a topological modification,
**characterized in that**
a desired profile modification of the workpiece is specified and is produced by the generating machining on the workpiece, wherein the contact path with the workpiece is not shifted on the tool during the machining stroke, wherein the generating method is carried out with a defined contact path on the tool, wherein the topological modification and the contact path are selected such that the topological modification on the tool along the contact path has a shape such that it produces the desired profile modification on the workpiece, wherein the topological modification of the tool is produced **in that** the position of the dresser with respect to the tool during the dressing is varied in dependence on the angle of rotation of the tool and/or on the tool width position, wherein the desired profile modification is freely specifiable within certain boundaries, and/or wherein one of the following properties of the profile modification, preferably a plurality thereof, and further preferably all thereof, are specifiable:
- crowning,
- profile angle deviation,
- tip relief,
- root relief.

2. Method of producing a workpiece having a modified gearing geometry by a generating method, wherein the workpiece is generating machined in at least one machining stroke by means of a tool having a modified gearing geometry, wherein the tool has a topological modification,
**characterized in that**
the contact path with the workpiece is not shifted on the tool during the machining stroke, wherein the generating method is carried out with a defined contact path on the tool, wherein the topological modification and the contact path are selected such that the topological modification on the tool along the contact path has a shape such that it produces a desired profile modification on the workpiece, wherein a conical workpiece is machined and the machining takes place by a diagonal generating method, wherein the diagonal ratio is selected such that the contact path on the tool does not shift during the machining stroke,
wherein a tool having a cylindrical basic form is preferably used and the machining takes place on one flank, or wherein a tool having a conical basic shape is preferably used and the machining takes place on two flanks, wherein the conical angle of the tool and the diagonal ratio further preferably are selected such that the contact path does not shift on the right and left flanks during two-flank machining.

3. Method of producing a workpiece having a modified gearing geometry by a generating method, wherein the workpiece is generating machined in at least one machining stroke by means of a tool having a modified gearing geometry, wherein the tool has a topological modification,
**characterized in that**
the contact path with the workpiece is not shifted on the tool during the machining stroke, wherein the generating method is carried out with a defined contact path on the tool, wherein the topological modification and the contact path are selected such that the topological modification on the tool along the contact path has a shape such that it produces the desired profile modification on the workpiece, wherein the topological modification of the surface geometry of the tool in the generating pattern in a first direction of the tool can at least approximately be described as a linear function whose coefficients in the tool width direction are given by coefficient functions F_{FtC,1} for the constant portion and F_{FtL,1} for the linear portion,
wherein the first direction preferably corresponds to the direction of the line of action of the dresser during dressing.

4. Method in accordance with claim 2, wherein a desired profile modification of the workpiece is specified and is produced by the generating machining on the workpiece, wherein the desired profile modification and/or properties of the desired modification is/are preferably freely specifiable within certain boundaries, and/or wherein one of the following properties of the profile modification, preferably a plurality thereof, and further preferably all thereof, are specifiable:
- crowning,
- profile angle deviation,
- tip relief,
- root relief,
wherein the following data can preferably be specified:
- size of the crowning,
- size of the profile angle deviation,
- amount and position of the tip relief,
- amount and position of the root relief,
wherein, further preferably, at least one input mask having input boxes is provided for at least one of the properties and/or for their data, and/or wherein the desired profile modification is freely specifiable as a continuous modification and/or at a plurality of rolling angles.

5. Method in accordance with one of claims 2 or 4, wherein the topological modification of the tool is produced in that the position of the dresser with respect to the tool during the dressing is varied in dependence on the angle of rotation of the tool and/or on the tool width position.

6. Method in accordance with one of the preceding claims, wherein the topological modification is selected in dependence on the contact path or the contact path is selected in dependence on the topological modification such that the topological modification on the tool along the contact path has a shape such that it produces a desired profile modification on the workpiece, and/or wherein the machining with a defined contact path comprises the machining with a defined initial shift position of the tool, wherein on the machining of a cylindrical workpiece, the initial shift position is preferably maintained and/or on the machining of a conical workpiece the tool is shifted, starting from the initial shift position, by such a diagonal ratio that the contact path does not shift.

7. Method in accordance with one of the preceding claims, comprising the steps:
- specifying a desired profile modification on the workpiece,
- determining the modification of the tool along a defined contact path required for producing the desired profile modification on the workpiece,
- determining a topological modification of the tool which corresponds to the modification determined in this manner along the contact path, and/or determining the variation of the position of the dresser with respect to the tool during the dressing of the tool suitable for providing a topological modification which corresponds to the modification determined in this manner along the contact path,
wherein the topological modification is preferably produced in that the position of the dresser from the tool during dressing is varied in dependence on the angle of rotation of the tool and/or on the tool width position, wherein the variation preferably takes place such or is determined such that the specific modification results at the point of intersection between the line of action of the dresser with the tool and the contact path of the tool with the workpiece respectively given with a specific angle of rotation of the tool and/or tool width position,
wherein the defined contact path is preferably specified by a defined initial shift position,
and/or for the determination of the modification of the tool along a contact path suitable for producing the desired modification on the workpiece, a determination of the contact points between the workpiece and the tool forming the respective contact paths first takes place during the generating machining, and/or
wherein, for the determination of the variation of the position of the dresser with respect to the tool suitable for providing a topological modification, the line of action of the dresser into the tool is determined in dependence on the angle of rotation of the tool and/or on the tool width position, wherein the direction of the line of action is preferably assumed as constant, in particular for involute gearings, or wherein the influence of a modification on the direction of the line of action is taken into account, in particular for non-involute gearings.

8. Method of producing a workpiece having a modified gearing geometry by a generating method, wherein the workpiece is generating machined in at least one machining stroke by means of a tool having a modified gearing geometry, wherein the tool has a topological modification,
**characterized in that**
the contact path with the workpiece is not shifted on the tool during the machining stroke, wherein the generating method is carried out with a defined contact path on the tool, wherein the topological modification and the contact path are selected such that the topological modification on the tool along the contact path has a shape such that it produces a desired profile modification on the workpiece, wherein a modified dresser is used for dressing the tool, and wherein the modification of the tool produced by the modification of the dresser has a topological modification superposed on it which is produced **in that** the position of the dresser with respect to the tool during dressing is varied in dependence on the angle of rotation of the tool and/or on the tool width position, wherein the topological variation preferably is selected such that the superposition of the modifications on the tool along a selected contact path with the workpiece corresponds to a modification along the contact path required for producing a desired profile modification on the workpiece,
and/or
wherein a dresser is used for dressing the tool which was designed for a tool having a different macro-geometry, in particular for a tool having a different diameter and/or a different number of threads, wherein the modification of the surface geometry of the tool at a selected contact path with the workpiece produced by the non-matching dresser is compensated **in that** the position of the dresser with respect to the tool during dressing is suitably varied in dependence on the angle of rotation of the tool and/or on the tool width position, wherein the generating machining method is carried out using the selected contact path.

9. Method in accordance with one of the preceding claims, for manufacturing a workpiece having a desired gearing geometry by means of a suitably dressed tool,
comprising the steps:
- specifying a desired profile modification of the workpiece,
- selecting a combination of a dresser and a tool from a plurality of combinations which produces the smallest deviations from the desired profile modification without a modification of the dressing process,
- a modified dressing of the tool with the dresser in line contact for producing a topological modification of the tool to compensate the deviations, and
- machining the workpiece with the dressed tool with a contact path unchanged over the machining stroke to produce the desired profile modification,
wherein the dressers and/or tools are preferably an at least partly specified or already existing range.

10. Method in accordance with one of the preceding claims, for manufacturing one or more workpieces having a desired gear geometry by means of a suitably dressed tool, wherein, after the carrying out of one or more machining steps, the tool is respectively dressed before further machining steps are carried out at the same workpiece or at further workpieces,
**characterized in that**
in a later dressing process, a different topological modification of the tool is produced with respect to an earlier dressing process.

11. Method of producing a workpiece having a modified gearing geometry by a generating method, wherein the workpiece is generating machined in at least one machining stroke by means of a tool having a modified gearing geometry, wherein the tool has a topological modification,
**characterized in that**
the contact path with the workpiece is not shifted on the tool during the machining stroke, wherein the generating method is carried out with a defined contact path on the tool, wherein the topological modification and the contact path are selected such that the topological modification on the tool along the contact path has a shape such that it produces a desired profile modification on the workpiece, wherein, during a machining of one or more workpieces, at least one stroke is carried out with a first initial shift position of the tool and/or with a first contact path and at least one second stroke is carried out with a second initial shifted shift position of the tool and/or with a second, shifted contact path,
wherein the first initial shift position and/or the first contact path is/are shifted less with respect to an ideal initial shift position and/or to an ideal contact path than the second initial shift position and/or the second contact path, wherein the first initial shift position preferably corresponding to the ideal shift position and/or the first contact path corresponding to the ideal contact path,
and/or wherein a rough machining step is preferably carried out with the second initial shift position and/or with the second contact line and a fine machining step is carried out with the first initial shift position and/or with the first contact line, and/or wherein the modification of the tool can be described at least approximately in the generating pattern at least locally in a first direction of the tool by a linear function, wherein the coefficients of this linear function are formed in a second direction of the tool which extends perpendicular to the first direction by coefficient functions F_{FtC,1} for the constant portion and F_{FtL,1} for the linear portion,
wherein the coefficient function F_{FtC,1} for the constant portion is determined such that a desired profile modification is exactly produced in the generating machining at a specified shift position and/or with a specified contact path, and wherein the coefficient function F_{FtL,1} for the linear portion is/are determined such that the deviation from the desired profile modification is minimal which arises on the workpiece on a generating machining with at least one shifted initial shift position and/or contact path and/or at least one band or a range of initial shift positions and/or contact paths,
wherein the determination preferably takes place by a curve fitting, and/or wherein the deviations are preferably weighted differently in dependence on the generating path to take account of different tolerances along the profile, and/or wherein the spacing of the shifted initial shift positions and/or contact paths or the width of the band is/are preferably determined iteratively such that the deviation arising on the workpiece still lies within a predefined tolerance in all contact paths.

12. Method in accordance with one of the preceding claims, wherein the tool has at least one region having a first topological modification and a second region having a second topological modification, wherein the first topological modification along a contact path with the workpiece in a first initial shift position is identical to the second topological modification along a contact path with the workpiece in a second initial shift position,
wherein at least one stroke is carried out with the first initial shift position of the tool during a machining of one or more workpieces and at least one second stroke is carried out with the second initial shift position of the tool,
and/or wherein the first region in the first initial shift position and the second region in the second initial shift position each preferably comprise the respective complete contact path with the workpiece,
and/or wherein the first topological modification is identical with the second topological modification,
and/or wherein a desired profile modification of the tool is specified and a modification of the tool suitable for the production of this desired modification and/or a suitable variation of the position of the dresser with respect to the tool is determined during dressing in dependence on the angle of rotation of the tool and/or on the tool width position,
wherein the modification of the tool is preferably determined along a contact line between the tool and the workpiece from the desired profile modification of the workpiece by means of the inverse of an association function which describes the mapping of the surface of the tool to the surface of the workpiece during the generating grinding with a specific contact path and in particular a specific initial shift position of the tool, wherein the determination preferably takes place using a function which analytically describes the mapping of the surface of the tool to the surface of the workpiece during generating grinding.

13. Method in accordance with one of the preceding claims, wherein the tool is dressed in a modified manner by means of a profile roller dresser and/or a form roller dresser,
wherein the dressing preferably take place in line contact with the tool, and/or wherein further preferably the profile roller dresser and/or form roller dresser is/are in contact with the tooth of the tool during the dressing from the root region to the tip region so that the modification takes place over the total tooth depth in one stroke,
or alternatively
the profile roller dresser and/or form roller dresser is/are in contact with the tooth of the tool only in part regions between the root and the tip during dressing so that the specific modification takes place over the total tooth depth in a plurality of strokes and at a respective different relative positioning of the dresser, and/or wherein the production of the topological modification of the tool takes place in that one or more of the following corrections of the axial movements with respect to the conventional dressing kinematics are carried out:
a) varying the axial spacing of the dresser from the tool in dependence on the angle of rotation of the tool and/or on the tool width position (infeed),
b) varying the axial feed of the tool or of the dresser in dependence on the angle of rotation of the tool and/or on the tool width position (shift),
c) varying the axial cross angle of the tool and of the dresser in dependence on the angle of rotation of the tool and/or on the tool width position (pivot), and
d) varying the tool speed in dependence on the angle of rotation of the tool and/or on the tool width position,
and/or wherein the modified dressing of the tool takes place in that the dresser is fed more or less in dependence on the angular position of the tool and/or on the tool width position or in that the tool is fed more or less onto the dresser, or vice versa, in dependence on its angular position and/or on the tool width position, and/or wherein at least three degrees of freedom, and preferably four or five degrees of freedom are used during the relative positioning between the dresser and the tool for producing the desired modification, wherein the degrees of freedom are preferably settable independently of one another for producing the desired modification, and/or with it preferably being a case of at least three, four or all of the following five degrees of freedom: angle of rotation of the tool, axial position of the too, y position of the dresser, center distance and/or axial cross angle, wherein the axial position of the tool, i.e. the tool width position, is preferably used to displace the contact line of the dresser, and two, three or four of the remaining four degrees of freedom are set independently of one another to produce the specified modification along the contact line.

14. Gear manufacturing machine for carrying out the method in accordance with one of the preceding claims, wherein the gear manufacturing machine comprises an input function via which a desired modification of a workpiece is specifiable, wherein the gear manufacturing machine further has a determination function which determines a modification of the tool suitable for the production of this desired modification and a suitable variation of the position of the dresser with respect to the tool during dressing in dependence on the angle of rotation of the tool and/or on the tool width position, and comprises a dressing function which, during the dressing on the tool, produces a modification of the tool suitable for the production of this desired modification of the workpiece,
wherein the determination function is configured such that the modification of the tool can at least approximately be described in the generating pattern at least locally in a first direction of the tool by a linear function, wherein the coefficients of this linear function are formed in a second direction of the tool which extends perpendicular to the first direction by coefficient functions F_{FtC,1} for the constant portion and F_{FtL,1} for the linear portion, wherein the determination function determines the coefficient function F_{FtC,1} for the constant portion such that a desired profile modification is exactly produced in the generating machining at a specified shift position and/or with a specified contact path, and wherein the determination function determines the coefficient function F_{FtL,1} for the linear portion such that the deviation from the desired profile modification is minimal which arises on the workpiece on a generating machining with at least one shifted initial shift position and/or contact path and/or at least one band or a range of initial shift positions and/or contact paths,
and/or wherein the input function allows to specify a desired profile modification of the workpiece, wherein the desired profile modification is freely specifiable within certain boundaries, and/or wherein at least one of the following properties of the profile modification can be specified:
- crowning,
- profile angle deviation,
- tip relief,
- root relief,
wherein the following data can preferably be specified:
- size of the crowning,
- size of the profile angle deviation,
- amount and position of the tip relief,
- amount and position of the root relief,
wherein, further preferably, at least one input mask having input boxes is provided for at least one of the properties and/or for their data,
and/or wherein the desired profile modification is freely specifiable as a continuous modification and/or at a plurality of rolling angles.

15. A computer program for installation on a gear manufacturing machine, and/or having an output function for data for use on a gear manufacturing machine, having an input function for inputting data on a desired modification of the workpiece and having a function for determining a topological modification of the tool suitable for the production of this desired modification, and a suitable variation of the position of the dresser with respect to the tool during dressing in dependence on the angle of rotation of the tool and/or on the tool width position such that the desired modification of the workpiece can be produced by a generating machining with the topologically modified tool with a contact path unchanged over the machining stroke,
wherein the determination function is configured such that the modification of the tool can at least approximately be described in the generating pattern at least locally in a first direction of the tool by a linear function, wherein the coefficients of this linear function are formed in a second direction of the tool which extends perpendicular to the first direction by coefficient functions F_{FtC,1} for the constant portion and F_{FtL,1} for the linear portion, wherein the determination function determines the coefficient function F_{FtC,1} for the constant portion such that a desired profile modification is exactly produced in the generating machining at a specified shift position and/or with a specified contact path, and wherein the determination function determines the coefficient function F_{FtL,1} for the linear portion such that the deviation from the desired profile modification is minimal which arises on the workpiece on a generating machining with at least one shifted initial shift position and/or contact path and/or at least one band or a range of initial shift positions and/or contact paths,
and/or wherein the input function allows to specify a desired profile modification of the workpiece, wherein the desired profile modification is freely specifiable within certain boundaries, and/or wherein at least one of the following properties of the profile modification is specifiable:
- crowning,
- profile angle deviation,
- tip relief,
- root relief,
wherein the following data can preferably be specified:
- size of the crowning,
- size of the profile angle deviation,
- amount and position of the tip relief,
- amount and position of the root relief,
wherein, further preferably, at least one input mask having input boxes is provided for at least one of the properties and/or for their data,
and/or wherein the desired profile modification is freely specifiable as a continuous modification and/or at a plurality of rolling angles.

## Revendications

1. Procédé de fabrication d'une pièce avec une géométrie de denture modifiée par un procédé de taillage par génération, dans lequel la pièce est usinée par taillage par génération avec une géométrie de denture modifiée au moyen d'un outil en au moins une course d'usinage, dans lequel l'outil présente une modification topologique,
**caractérisé en ce**
**qu'**une modification de profil souhaitée de la pièce est spécifiée et est produite par l'usinage par taillage par génération sur la pièce, dans lequel le chemin de contact avec la pièce n'est pas décalé sur l'outil pendant la course d'usinage, dans lequel le procédé de taillage par génération est mis en œuvre avec un chemin de contact défini sur l'outil, dans lequel la modification topologique et le chemin de contact sont choisis de telle sorte que la modification topologique sur l'outil présente le long du chemin de contact une forme telle qu'elle produit sur la pièce la modification de profil souhaitée, dans lequel la modification topologique de l'outil est produite **en ce que** la position du dresseur par rapport à l'outil lors du dressage varie en fonction de l'angle de rotation d'outil et/ou de la position dans la largeur d'outil, dans lequel la modification de profil souhaitée peut être spécifiée librement dans le cadre de conditions marginales déterminées, et/ou dans lequel une et de manière préférée plusieurs et de manière davantage préférée toutes les propriétés qui suivent de la modification de profil peuvent être spécifiées :
- le bombement,
- l'écart d'angle de profil,
- la dépouille de tête,
- la dépouille de pied.

2. Procédé de fabrication d'une pièce avec une géométrie de denture modifiée par un procédé de taillage par génération, dans lequel la pièce est usinée par taillage par génération avec une géométrie de denture modifiée au moyen d'un outil en au moins une course d'usinage, dans lequel l'outil présente une modification topologique,
**caractérisé en ce**
**que** le chemin de contact avec la pièce n'est pas décalé sur l'outil pendant la course d'usinage, dans lequel le procédé de taillage par génération est mis en œuvre avec un chemin de contact défini sur l'outil, dans lequel la modification topologique et le chemin de contact sont choisis de telle sorte que la modification topologique sur l'outil présente le long du chemin de contact une forme telle qu'elle produit sur la pièce une modification de profil souhaitée, dans lequel une pièce conique est usinée et l'usinage est effectué par un procédé de taillage diagonal par génération, dans lequel le comportement diagonal est choisi de telle sorte que le chemin de contact ne se décale pas sur l'outil pendant la course d'usinage,
dans lequel de manière préférée un outil avec une forme de base cylindrique est employé et l'usinage est effectué sur un flanc ou dans lequel de manière préférée un outil avec une forme de base conique est utilisé et l'usinage est effectué sur deux flancs, dans lequel de manière davantage préférée l'angle de cône de l'outil et le comportement diagonal sont choisis de telle sorte que lors de l'usinage sur deux flancs, le chemin de contact ne décale pas sur un flanc droit et gauche.

3. Procédé de fabrication d'une pièce avec une géométrie de denture modifiée par un procédé de taillage par génération, dans lequel la pièce est usinée par taillage par génération avec une géométrie de denture modifiée au moyen d'un outil en au moins une course d'usinage, dans lequel l'outil présente une modification topologique,
**caractérisé en ce**
**que** le chemin de contact avec la pièce n'est pas décalé sur l'outil pendant la course d'usinage, dans lequel le procédé de taillage par génération est mis en œuvre avec un chemin de contact défini sur l'outil, dans lequel la modification topologique et le chemin de contact sont choisis de telle sorte que la modification topologique sur l'outil présente le long du chemin de contact une forme telle qu'elle produit sur la pièce la modification de profil souhaitée, dans lequel la modification topologique de la géométrie de surface de l'outil dans la configuration de taillage par génération peut être décrite dans un premier sens de l'outil au moins approximativement en tant qu'une fonction linéaire, dont les coefficients sont donnés dans le sens de la largeur d'outil par des fonctions de coefficients F_{FtC,1} pour la composante constante et F_{FtL,1} pour la composante linéaire,
dans lequel de manière préférée le premier sens correspond au sens de la ligne de prise du dresseur lors du dressage.

4. Procédé selon la revendication 2, dans lequel une modification de profil souhaitée de la pièce est spécifiée et est produite par l'usinage par taillage par génération sur la pièce, dans lequel de manière préférée la modification de profil souhaitée et/ou les propriétés de la modification de profil souhaitée peuvent être spécifiées librement dans le cadre de conditions marginales déterminées, et/ou dans lequel une et de manière préférée plusieurs et de manière davantage préférée toutes les propriétés qui suivent de la modification de profil peuvent être spécifiées :
- le bombement,
- l'écart d'angle de profil,
- la dépouille de tête,
- la dépouille de pied,
dans lequel de manière préférée des données qui suivent peuvent être spécifiées :
- la taille du bombement,
- la taille de l'écart d'angle de profil,
- la valeur et la position de la dépouille de tête,
- la valeur et la position de la dépouille de pied,
au moins un masque d'entrée avec des champs d'entrée pour au moins une des propriétés et/ou leurs données étant à cet effet prévu de manière davantage préférée, et/ou dans lequel la modification de profil souhaitée peut être spécifiée librement en tant que modification permanente et/ou au niveau d'une multitude d'angles de taillage par génération.

5. Procédé selon l'une des revendications 2 ou 4, dans lequel la modification topologique de l'outil est produite en ce que la position du dresseur par rapport à l'outil lors du dressage varie en fonction de l'angle de rotation d'outil et/ou de la position dans la largeur d'outil.

6. Procédé selon l'une quelconque des revendications précédentes, dans lequel sont choisis la modification topologique en fonction du chemin de contact ou le chemin de contact en fonction de la modification topologique de telle sorte que la modification topologique sur l'outil présente le long du chemin de contact une forme telle qu'elle produit sur la pièce une modification de profil souhaitée, et/ou dans lequel l'usinage avec un chemin de contact défini comprend l'usinage avec une position de commutation initiale définie de l'outil, dans lequel de manière préférée lors de l'usinage d'une pièce cylindrique, la position de commutation initiale est maintenue et/ou lors de l'usinage d'une pièce conique, l'outil est commuté en partant de la position de commutation initiale avec un comportement diagonal tel que le chemin de contact ne se décale pas.

7. Procédé selon l'une quelconque des revendications précédentes, avec les étapes :
- de spécification d'une modification de profil souhaitée sur la pièce,
- de détermination de la modification de l'outil nécessaire pour produire la modification de profil souhaitée sur la pièce le long d'un chemin de contact défini,
- de détermination d'une modification topologique de l'outil, laquelle correspond le long du chemin de contact à la modification ainsi déterminée, et/ou de détermination de la variation de la position du dresseur, adaptée pour fournir une modification topologique, laquelle correspond le long du chemin de contact à la modification ainsi déterminée, par rapport à l'outil lors du dressage de l'outil, dans lequel la modification topologique est produite de manière préférée en ce que la position du dresseur par rapport à l'outil varie lors du dressage en fonction de l'angle de rotation d'outil et/ou de la position dans la largeur d'outil, dans lequel la variation est effectuée ou déterminé de telle sorte qu'il résulte la modification déterminée au niveau du point d'intersection respectivement donné pour un angle de rotation d'outil déterminé et/ou une position dans la largeur d'outil déterminée entre la ligne de prise du dresseur avec l'outil et le chemin de contact de l'outil avec la pièce,
dans lequel le chemin de contact défini est spécifié de manière préférée par une position de commutation initiale définie,
et/ou dans lequel pour déterminer la modification, adaptée pour produire la modification souhaitée sur la pièce, de l'outil le long d'un chemin de contact, d'abord une détermination des points de contact formant les chemins de contact respectifs est effectuée entre la pièce et l'outil lors de l'usinage de taillage par génération, et/ou
dans lequel pour déterminer la variation, adaptée pour fournir une modification topologique, de la position du dresseur par rapport à l'outil, la ligne de prise du dresseur avec l'outil est déterminée en fonction de l'angle de rotation d'outil et/ou de la position dans la largeur d'outil, dans lequel de manière préférée le sens de la ligne de prise est réputé comme étant constant, en particulier pour des dentures à développante, ou l'incidence d'une modification sur le sens de la ligne de prise est prise en compte, en particulier pour des dentures sans développante.

8. Procédé de fabrication d'une pièce avec une géométrie de denture modifiée par un procédé de taillage par génération, dans lequel la pièce est usinée par taillage par génération avec une géométrie de denture modifiée au moyen d'un outil en au moins une course d'usinage, dans lequel l'outil présente une modification topologique,
**caractérisé en ce**
**que** le chemin de contact avec la pièce n'est pas décalé sur l'outil pendant la course d'usinage, dans lequel le procédé de taillage par génération est mis en œuvre avec un chemin de contact défini sur l'outil, dans lequel la modification topologique et le chemin de contact sont choisis de telle sorte que la modification topologique sur l'outil présente le long du chemin de contact une forme telle qu'elle produit sur la pièce une modification de profil souhaitée,
dans lequel un dresseur modifié servant à dresser l'outil est utilisé, et dans lequel la modification, produite par la modification du dresseur, de l'outil est superposée à une modification topologique, laquelle est produite en ce que la position du dresseur par rapport à l'outil varie lors du dressage en fonction de l'angle de rotation d'outil et/ou de la position dans la largeur d'outil, dans lequel la variation topologique est choisie de manière préférée de telle sorte que la superposition des modifications sur l'outil le long d'un chemin de contact sélectionné à la pièce correspond à une modification, nécessaire pour produire une modification de profil souhaitée sur la pièce, le long du chemin de contact,
et/ou
dans lequel un dresseur servant à dresser l'outil est utilisé, lequel a été conçu pour un outil avec une autre macrogéométrie, en particulier pour un outil avec un autre diamètre et/ou un autre nombre de pas, dans lequel la modification, produite par le dresseur ne convenant pas, de la géométrie de surface de l'outil est compensée au niveau d'un chemin de contact sélectionné avec la pièce en ce que la position du dresseur par rapport à l'outil lors du dressage varie de manière adaptée en fonction de l'angle de rotation d'outil et/ou de la position dans la largeur d'outil, dans lequel le procédé d'usinage par taillage par génération est mis en œuvre avec le chemin de contact sélectionné.

9. Procédé selon l'une quelconque des revendications précédentes servant à fabriquer une pièce avec une géométrie de denture souhaitée au moyen d'un outil dressé de manière adaptée,
avec les étapes :
- de spécification d'une modification de profil souhaitée de la pièce,
- de sélection d'une combinaison composée d'un dresseur et d'un outil issue d'une multitude de combinaisons, laquelle produit sans une modification du processus de dressage les écarts les plus petits par rapport à la modification de profil souhaitée,
- de dressage modifié de l'outil avec le dresseur en contact linéaire pour produire une modification topologique de l'outil pour compenser les écarts, et
- d'usinage de la pièce avec l'outil dressé avec un chemin de contact non modifié sur la course d'usinage pour produire la modification de profil souhaitée,
dans lequel de manière préférée les dresseurs et/ou les outils sont une gamme au moins en partie spécifiée ou déjà existante.

10. Procédé selon l'une quelconque des revendications précédentes servant à fabriquer une ou plusieurs pièces avec une géométrie de denture souhaitée au moyen d'un outil dressé de manière adaptée, dans lequel après la mise en œuvre d'une ou de plusieurs étapes d'usinage, l'outil est respectivement dressé avant que des étapes d'usinage supplémentaires ne soient mises en œuvre au niveau de la même pièce ou de pièces supplémentaires,
**caractérisé en ce**
**que** lors d'une opération de dressage, une autre modification topologique de l'outil est produite par rapport à une autre opération de dressage.

11. Procédé de fabrication d'une pièce avec une géométrie de denture modifiée par un procédé de taillage par génération, dans lequel la pièce est usinée par taillage par génération avec une géométrie de denture modifiée au moyen d'un outil en au moins une course d'usinage, dans lequel l'outil présente une modification topologique,
**caractérisé en ce**
**que** le chemin de contact avec la pièce n'est pas décalé sur l'outil pendant la course d'usinage, dans lequel le procédé de taillage par génération est mis en œuvre avec un chemin de contact défini sur l'outil, dans lequel la modification topologique et le chemin de contact sont choisis de telle sorte que la modification topologique sur l'outil présente le long du chemin de contact une forme telle qu'elle produit sur la pièce une modification de profil souhaitée,
dans lequel pendant un usinage d'une ou plusieurs pièces, au moins une course avec une première position de commutation initiale de l'outil et/ou un premier chemin de contact est mise en œuvre, et au moins une deuxième course avec une deuxième position de commutation initiale décalée de l'outil et/ou un deuxième chemin de contact décalé est mise en œuvre,
dans lequel la première position de commutation initiale et/ou le premier chemin de contact sont moins décalés par rapport à une position de commutation initiale idéale et/ou un chemin de contact idéal que la deuxième position de commutation initiale et/ou que le deuxième chemin de contact, dans lequel de manière préférée la première position de commutation initiale correspond à la position de commutation idéale et/ou le premier chemin de contact correspond au chemin de contact idéal,
et/ou dans lequel de manière préférée une étape d'usinage sommaire est mise en œuvre avec la deuxième position de commutation initiale et/ou la deuxième ligne de contact et une étape d'usinage précis est mise en œuvre avec la première position de commutation initiale et/ou la première ligne de contact, et/ou dans lequel la modification de l'outil peut être décrite au moins approximativement sur la configuration de taillage par génération au moins localement dans un premier sens de l'outil par une fonction linéaire, dans lequel les coefficients de ladite fonction linéaire dans un deuxième sens de l'outil, lequel s'étend de manière perpendiculaire par rapport au premier sens, sont formés par des fonctions de coefficients F_{FtC,1} pour la composante constante et F_{FtL,1} pour la composante linéaire, dans lequel la fonction de coefficients F_{FtC,1} pour la composante constante est déterminée de telle sorte qu'une modification de profil souhaitée est produite exactement lors de l'usinage par taillage par génération au niveau d'une position de commutation spécifiée et/ou avec un chemin de contact spécifié, et dans lequel la fonction de coefficients F_{FtL,1} pour la composante linéaire est ou sont déterminée(s) de telle sorte que l'écart par rapport à la modification de profil souhaitée, apparaissant sur la pièce lors d'un usinage par taillage par génération avec au moins une position de commutation initiale décalée et/ou un chemin de contact et/ou au moins une bande ou une zone de positions de commutation initiales et/ou de chemins de contact est minimal,
dans lequel la détermination est effectuée de manière préférée par un calcul de compensation et/ou dans lequel de manière préférée les écarts sont pondérés différemment en fonction du trajet de taillage par génération pour tenir compte de différentes tolérances le long du profil, et/ou dans lequel de manière préférée l'espacement des positions de commutation initiales décalées et/ou des chemin de contact ou la largeur de la bande sont déterminés de manière itérative de telle sorte que l'écart apparaissant sur la pièce se situe pour tous les chemins de contact encore dans le cadre d'une tolérance spécifiée.

12. Procédé selon l'une quelconque des revendications précédentes, dans lequel l'outil présente au moins une première zone avec une première modification topologique et une deuxième zone avec une deuxième modification topologique, dans lequel la première modification topologique le long d'un chemin de contact avec la pièce dans une première position de commutation initiale est identique à la deuxième modification topologique le long d'un chemin de contact avec la pièce dans une deuxième position de commutation initiale,
dans lequel de manière préférée pendant un usinage d'une ou de plusieurs pièces, au moins une course est mise en oeuvre avec la première position de commutation initiale de l'outil, et au moins une deuxième course est mise en œuvre avec la deuxième position de commutation initiale de l'outil,
et/ou dans lequel de manière préférée la première zone pour la première position de commutation initiale et la deuxième zone pour la deuxième position de commutation initiale comprennent respectivement le chemin de contact complet avec la pièce,
et/ou dans lequel la première modification topologique est identique à la deuxième modification topologique,
et/ou dans lequel une modification de profil souhaitée de la pièce est spécifiée et une modification, adaptée pour la production de ladite modification souhaitée, de l'outil et/ou une variation adaptée de la position du dresseur par rapport à l'outil lors du dressage sont déterminées en fonction de l'angle de rotation d'outil et/ou de la position dans la largeur d'outil,
dans lequel de manière préférée la modification de l'outil est déterminée le long d'une ligne de contact entre l'outil et la pièce à partir de la modification de profil souhaitée de la pièce au moyen de l'inversion d'une fonction d'attribution, laquelle décrit la reproduction de la surface de l'outil sur la surface de la pièce lors de la rectification en développante avec un chemin de contact déterminé et en particulier une position de commutation initiale déterminée de l'outil, dans lequel la détermination est effectuée de manière préférée en utilisant une fonction, laquelle décrit de manière analytique la reproduction de la surface de l'outil sur la surface de la pièce lors de la rectification en développante.

13. Procédé selon l'une quelconque des revendications précédentes, dans lequel l'outil est dressé de manière modifiée au moyen d'un galet de profilage et/ou de moulage,
dans lequel le dressage est effectué de manière préférée avec l'outil en contact linéaire,
et/ou
dans lequel de manière préférée le galet de profilage et/ou de moulage est en contact avec la dent de l'outil lors du dressage depuis la zone de pied vers la zone de tête de sorte que la modification est effectuée lors d'une course sur toute la hauteur de dent,
ou en variante
le galet de profilage et/ou de moulage est en contact avec la dent de l'outil lors du dressage seulement dans des zones partielles entre le pied et la tête de sorte que la modification ciblée est effectuée sur toute la hauteur de dent lors de plusieurs courses et dans un positionnement relatif respectivement différent du dresseur,
et/ou dans lequel la production de la modification topologique de l'outil est effectuée en ce qu'une ou plusieurs des corrections suivantes des déplacements axiaux par rapport à la cinématique de dressage classique sont effectuées :
a) la variation de l'écartement axial du dresseur par rapport à l'outil en fonction de l'angle de rotation d'outil et/ou de la position dans la largeur d'outil (rapprochement) ;
b) la variation de l'avancement axial de l'outil ou du dresseur en fonction de l'angle de rotation d'outil et/ou de la position dans la largeur d'outil (commutation) ;
c) la variation de l'angle de croisement axial de l'outil et du dresseur en fonction de l'angle de rotation d'outil et/ou de la position dans la largeur d'outil (pivotement) ;
d) la variation de la vitesse de rotation d'outil en fonction de l'angle de rotation d'outil et/ou de la position dans la largeur d'outil,
et/ou dans lequel le dressage modifié de l'outil est effectué en ce que le dresseur est plus ou moins rapproché en fonction de la position angulaire de l'outil et/ou de la position dans la largeur d'outil ou en ce que l'outil est plus ou moins rapproché en direction du dresseur, ou inversement, en fonction de sa position angulaire et/ou de la position dans la largeur d'outil, ou inversement,
et/ou dans lequel en cas du positionnement relatif entre le dresseur et l'outil, au moins trois et de manière préférée quatre ou cinq degrés de liberté sont utilisés pour produire la modification souhaitée, dans lequel les degrés de liberté peuvent être réglés de manière préférée indépendamment les uns des autres pour produire la modification souhaitée, et/ou dans lequel il s'agit de manière préférée d'au moins trois, quatre ou de l'ensemble des cinq degrés de liberté suivants : angle de rotation de l'outil, position axiale de l'outil, position y du dresseur, écartement axial et/ou angle de croisement axial, dans lequel de manière préférée la position axiale de l'outil, en d'autres termes, la position dans la largeur d'outil est utilisée pour décaler la ligne de contact du dresseur et des quatre degrés de liberté restants, deux, trois ou quatre degrés de liberté sont réglés indépendamment les uns des autres afin de de produire la modification ciblée le long de la ligne de contact.

14. Machine à tailler servant à mettre en œuvre le procédé selon l'une quelconque des revendications précédentes, dans laquelle la machine à tailler comprend une fonction d'entrée, par l'intermédiaire de laquelle une modification souhaitée d'une pièce peut être spécifiée, dans laquelle la machine à tailler présente en outre une fonction de détermination, laquelle détermine une modification, adaptée pour la production de ladite modification souhaitée, de l'outil et une variation adaptée de la position du dresseur par rapport à l'outil lors du dressage en fonction de l'angle de rotation d'outil et/ou de la position dans la largeur d'outil, et une fonction de dressage, laquelle produit pendant le dressage sur l'outil une modification, adaptée pour la production de ladite modification souhaitée de la pièce, de l'outil, dans laquelle la fonction de détermination est configurée de telle sorte que la modification de l'outil peut être décrite au moins approximativement sur la configuration de taillage par génération au moins localement dans un premier sens de l'outil par une fonction linéaire, dans lequel les coefficients de ladite fonction linéaire dans un deuxième sens de l'outil, lequel s'étend de manière perpendiculaire par rapport au premier sens, sont formés par des fonctions de coefficients F_{FtC,1} pour la composante constante et F_{FtL,1} pour la composante linéaire, dans laquelle la fonction de détermination détermine la fonction de coefficients F_{FtC,1} pour la composante constante de telle sorte qu'une modification de profil souhaitée est produite exactement lors de l'usinage par taillage par génération au niveau d'une position de commutation spécifiée et/ou avec un chemin de contact spécifié, et dans laquelle la fonction de détermination détermine la fonction de coefficients F_{FtL,1} pour la composante linéaire de telle sorte que l'écart par rapport à la modification de profil souhaitée, apparaissant sur la pièce lors d'un usinage par taillage par génération avec au moins une position de commutation initiale décalée et/ou un chemin de contact et/ou au moins une bande ou une zone de positions de commutation initiales et/ou de chemins de contact, est minimal,
et/ou dans laquelle la fonction d'entrée permet la spécification d'une modification de profil souhaitée de la pièce, dans laquelle la modification de profil souhaitée peut être spécifiée librement dans le cadre de conditions marginales déterminées, et/ou dans laquelle au moins une des propriétés suivantes de la modification de profil peut être spécifiée :
- le bombement,
- l'écart d'angle de profil,
- la dépouille de tête,
- la dépouille de pied,
dans laquelle de manière préférée des données suivantes peuvent être spécifiées :
- la taille du bombement,
- la taille de l'écart d'angle de profil,
- la valeur et la position de la dépouille de tête,
- la valeur et la position de la dépouille de pied,
au moins un masque d'entrée avec des champs d'entrée pour au moins une des propriétés et/ou leurs données étant à cet effet prévu de manière davantage préférée,
et/ou dans lequel la modification de profil souhaitée peut être spécifiée librement en tant que modification permanente et/ou au niveau d'une multitude d'angles de taillage par génération.

15. Programme informatique destiné à être installé sur une machine à tailler et/ou avec une fonction d'édition pour des données destinées à être utilisées sur une machine à tailler, avec une fonction d'entrée servant à entrer des données portant sur une modification souhaitée de la pièce et avec une fonction servant à déterminer une modification topologique, adaptée pour la production de ladite modification souhaitée, de l'outil et une variation adaptée de la position du dresseur par rapport à l'outil lors du dressage en fonction de l'angle de rotation d'outil et/ou de la position dans la largeur d'outil de sorte que la modification souhaitée de la pièce peut être fabriquée par un usinage par taillage par génération avec l'outil modifié de manière topologique avec un chemin de contact non modifié sur la course d'usinage,
dans lequel la fonction de détermination est configurée de telle sorte que la modification de l'outil peut être décrite au moins approximativement sur la configuration de taillage par génération au moins localement dans un premier sens de l'outil par une fonction linéaire, dans lequel les coefficients de ladite fonction linéaire dans un deuxième sens de l'outil, lequel s'étend de manière perpendiculaire par rapport au premier sens, sont formés par des fonctions de coefficients F_{FtC,1} pour la composante constante et F_{FtL,1} pour la composante linéaire, dans lequel la fonction de détermination détermine la fonction de coefficients F_{FtC,1} pour la composante constante de telle sorte qu'une modification de profil souhaitée est produite exactement lors de l'usinage par taillage par génération au niveau d'une position de commutation spécifiée et/ou avec un chemin de contact spécifié, et dans lequel la fonction de détermination détermine la fonction de coefficients F_{FtL,1} pour la composante linéaire de telle sorte que l'écart par rapport à la modification de profil souhaitée, apparaissant sur la pièce lors d'un usinage par taillage par génération avec au moins une position de commutation initiale décalée et/ou un chemin de contact et/ou au moins une bande ou une zone de positions de commutation initiales et/ou de chemins de contact, est minimal,
et/ou dans lequel la fonction d'entrée permet la spécification d'une modification de profil souhaitée de la pièce, dans lequel la modification de profil souhaitée peut être spécifiée librement dans le cadre de conditions marginales déterminées et/ou dans lequel au moins une des propriétés suivantes de la modification de profil peut être spécifiée :
- le bombement,
- l'écart d'angle de profil,
- la dépouille de tête,
- la dépouille de pied,
dans lequel de manière préférée des données qui suivent peuvent être spécifiées :
- la taille du bombement,
- la taille de l'écart d'angle de profil,
- la valeur et la position de la dépouille de tête,
- la valeur et la position de la dépouille de pied,
au moins un masque d'entrée avec des champs d'entrée pour au moins une des propriétés et/ou leurs données étant à cet effet prévu de manière davantage préférée,
et/ou dans lequel la modification de profil souhaitée peut être spécifiée librement en tant que modification permanente et/ou au niveau d'une multitude d'angles de taillage par génération.
